# EUROPEAN PATENT APPLICATION

(11) **EP 1 160 250 A1**
(43) Date of publication of application: **05.12.2001**
(21) Application number: 01112827.9
(22) Date of filing: 30.05.2001
(51) Int. Cl.: C07F 7/08, C09K 19/40

(54) **Silicon derivative, liquid crystal composition and liquid crystal display**

(30) Priority: 30.05.2000 JP 2000160240
(71) Applicant: CHISSO CORPORATION, Osaka-shi Osaka (JP); Chisso Petrochemical Corporation, Chiyoda-ku, Tokyo 100-0005 (JP)
(72) Inventor: Tamura, Norio, Chisso Petrochemical Corporation, Ichihara-shi, Chiba 290-8551 (JP); Kondo, Tomoyuki, Chisso Petrochemical Corporation, Ichihara-shi, Chiba 290-8551 (JP); Matsui, Shuichi, Chisso Petrochemical Corporation, Ichihara-shi, Chiba 290-8551 (JP); Takeuchi, Hiroyuki, Chisso Petrochemical Corp., Ichihara-shi, Chiba 290-8551 (JP); Kubo, Yasuhiro, Chisso Petrochemical Corporation, Ichihara-shi, Chiba 290-8551 (JP); Nakagawa, Etsuo, Chisso Petrochemical Corporation, Ichihara-shi, Chiba 290-8551 (JP)
(74) Representative: HOFFMANN - EITLE

(57) **Abstract**

Provided are a silicon derivative which is excellent in compatibility with other liquid crystal materials and has low viscosity and which is improved in a threshold voltage, a liquid crystal composition and a liquid crystal display comprising the above liquid crystal composition. The silicon derivative is represented by Formula (1): 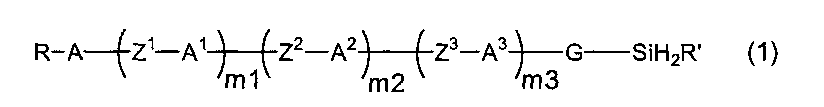 wherein A, A¹, A² and A³ each independently represent trans-1,4-cyclohexylene, 1,4-cyclohexenylene or 1,4-phenylene in which one or more non-adjacent -CH₂- in these rings may be replaced by -O- and one or more -CH= may be replaced by -N= and in which one or more H on the rings may be substituted with halogen; Z¹, Z² and Z³ each independently represent a single bond, -(CH₂)₂-, -CH₂O-, -OCH₂-, -CH₂S-, -SCH₂- or-(CH₂)₄-; m1, m2 and m3 each independently represent 0 or 1; R represents H or an alkyl group having 1 to 10 carbon atoms, and one or more -CH₂- in the above alkyl group may be replaced by -SiH₂-, -O-, -S-, -CH=CH- or -C≡C-, but -O- is not adjacent each other; R' represents an alkyl group having 1 to 10 carbon atoms, and one or more -CH₂- in the above alkyl group may be replaced by -O-, -S- or -CH=CH-, but -O- is not adjacent each other; G represents a single bond or an alkylene group having 1 to 10 carbon atoms in which one or more -CH₂- may be replaced by -O-, -S- or -CH=CH-, but -O- is not adjacent each other; and either one of A, A¹, A² and A³ is 2-fluoro-1,4-phenylene or 2,3-difluoro-1,4-phenylene.

## Description

### TECHNICAL FIELD

The present invention relates to a silicon derivative, a liquid crystal composition and a liquid crystal display. More specifically, it relates to a novel compound having a dihydrosilanediyl group (-SiH₂-), a liquid crystal composition comprising the same and a liquid crystal display constituted by using the above liquid crystal composition.

### BACKGRAOUND ART

Display elements using liquid crystalline compounds are widely used for displays of watches, portable electric calculators, word processors and the like. These display elements make use of birefringence and dielectric anisotropy of a liquid crystalline compound. In the present application, the term "liquid crystalline compound" is used as a general term for a compound showing a liquid crystal phase and a compound which does not show a liquid crystal phase but is useful as a structural component for a liquid crystal composition.

A liquid crystal phase includes a nematic liquid crystal phase, a smectic liquid crystal phase and a cholesteric liquid crystal phase, and those using a nematic liquid crystal phase are most widely used. A display mode includes a dynamic scattering (DS) mode, a deformed aligning phase (DAP) mode, a guest/host (GH) mode, a twisted nematic (TN) mode, a supertwisted nematic (STN) mode, a thin film transistor (TFT) mode and an in-plane switching (IPS) mode.

The liquid crystalline compounds used in these display modes show a liquid crystal phase in a wide temperature range in which a room temperature is centered and are sufficiently stable under conditions on which display elements are used. Further, they have to have characteristics which are satisfactory for driving the display elements, but a liquid crystalline compound satisfying this condition by itself has not yet been found at present. Accordingly, the existing state is that several kinds to several ten kinds of liquid crystalline compounds are mixed to thereby prepare liquid crystal compositions having required characteristics. These liquid crystal compositions are required not only to be stable against moisture, light, heat and air which are usually present under conditions on which a display element is used and stable as well against an electric field and electromagnetic irradiation but also to be chemically stable against compounds to be mixed. Further, in the liquid crystal compositions, various physical property values such as birefringence (Δn) and dielectric anisotropy (Δε) are required to have suitable values according to a display mode and a form of a display element. In addition, it is important that the respective components contained in the liquid crystal compositions have good solubility with each other.

In recent years, development of various techniques in a liquid crystal display has been tried for the purpose of enlargement in a picture plane. Especially, liquid crystal compositions that contribute largely to a reduction in power consumption and quick response have been desired to be developed. Further reduction in a threshold voltage is essential to a reduction in power consumption (E. Jakeman et al., Phys. Lett., 39A. 69 (1972)). Also, the low viscosity is important as well for quick response. Various compounds have so far been developed in order to achieve these objects, and among them, compounds having a silyl group in a molecule represented by the following formulas (a), (b) and (c) are known respectively according to Japanese Patent Application Laid-Open No. 9653/1994, Japanese Patent Application Laid-Open No. 2878/1995 and Japanese Patent Application laid-Open No. 2879/1995:

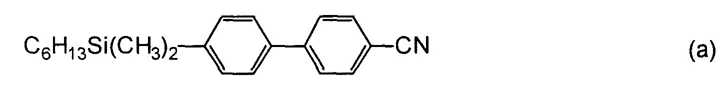

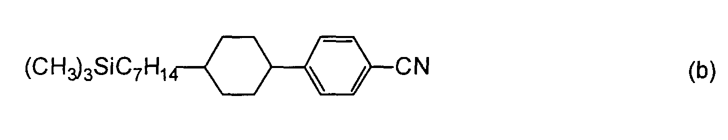

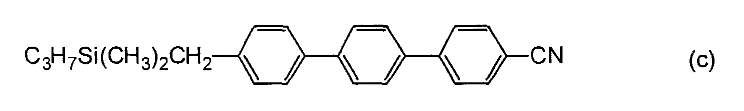

However, these compounds are restricted to compounds having a trialkylsilyl group in which a silicon atom thereof is substituted with three alkyl groups. As apparent from the results of the physical properties which were measured by the present inventors, a compound having a propyldimethylsilyl group as an example of a trialkylsilyl group represented by the following formula (d) has the problem that it has not only markedly high viscosity but also unsatisfactory compatibility with other components of a liquid crystal composition. 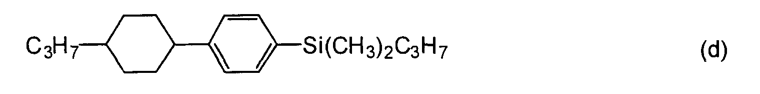 Physical property measurement: a nematic phase-isotropic phase transition temperature (NI) and viscosity (η) at 20°C of a liquid crystal composition ZLI-1132 manufactured by Merck Co., Ltd. were determined to find that they were 72.6°C and 26.7 mPa·s respectively. Then, 15 % by weight of the compound represented by the formula (d) was added to 85 % by weight of this liquid crystal composition, and NI and η of the resulting composition were determined to find that they were 15°C or lower and 39.7 mPa·s respectively. It has been found from this result that a liquid crystal composition prepared by using the compound represented by the formula (d) is not only notably increased in viscosity but also reduced in NI by 50°C or lower. Further, the compound (d) is liable to cause phase separation from the other liquid crystal compositions and is inferior in compatibility, so that it is not practical.

Shown as compounds which solve the defects of such multialkyl-substituted silyl compound are a compound having a dihydrosilylene group represented by a compound of a formula (e) in WO96/02103 and a compound represented by a formula (f) in Japanese Patent Application Laid-Open No. 286393/1986

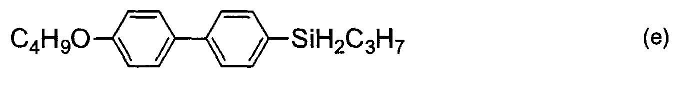

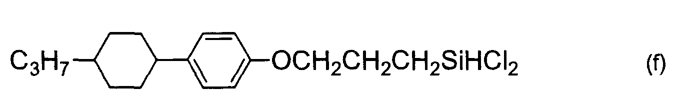

On the other hand, it is apparent from the data thereof that any of the compounds shown in the gazettes described above has a dihydrosilylene group on a terminal moleculae of a chain and that they have a dipole moment in a molecular major axis direction.

In recent years, expected are materials for an IPS mode and a VA mode which can improve visible angle characteristic at a low cost. Materials having negative dielectric anisotropy are particularly suited to liquid crystal compositions prepared for these modes, and further suited are those which have a high voltage-holding ratio and a low threshold voltage and are low in temperature dependency thereof and which have a wide liquid crystal phase temperature range and are excellent in compatibility with other liquid crystal materials and low in viscosity. Many liquid crystal materials having negative dielectric anisotropy have so far been developed, but those having a dihydrosilylene group in a molecular terminal part are not known at all.

### DISCLOSURE OF THE INVENTION

An object of the present invention is to provide a liquid crystal compound which has a wide liquid crystal temperature range so that it can be applied to liquid crystal displays of various modes and which provides various Δn according to a combination of a ring structure and a substituent and is stable against moisture, air, heat and light. More specifically, another object is to provide a novel dihydrosilicon derivative which solves the preceding defects of conventional techniques and is excellent in compatibility with other liquid crystal materials and which has low viscosity, high reliability and a low threshold voltage, a liquid crystal composition comprising the same and a liquid crystal display using the above liquid crystal composition.

In order to achieve the objects described above, the following inventions are claimed for the grant of a patent.
1) A silicon derivative represented by Formula (1): 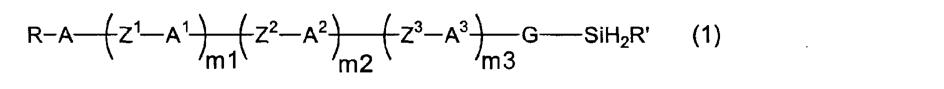 wherein A, A¹, A² and A³ each independently represent trans-1,4-cyclohexylene, 1,4-cyclohexenylene or 1,4-phenylene, in which one or more non-adjacent -CH₂- in these rings may be replaced by -O- and one or more -CH= may be replaced by -N= and in which one or more H in the respective rings may be substituted with halogen; Z¹, Z² and Z³ each independently represent a single bond, -(CH₂)₂-, -CH₂O-, -OCH₂-, -CH₂S-,-SCH₂- or -(CH₂)₄-; m1, m2 and m3 each independently represent 0 or 1; R represents H or an alkyl group having 1 to 10 carbon atoms, and one or more -CH₂- in the above alkyl group may be replaced by -SiH₂-, -O-, -S-, -CH=CH- or -C≡C-, but - O- is not adjacent each other; R' represents an alkyl group having 1 to 10 carbon atoms, and one or more -CH₂- in the above alkyl group may be replaced by -O-, -S- or -CH=CH-, but -O- is not adjacent each other; G represents a single bond or an alkylene group having 1 to 10 carbon atoms in which one or more -CH₂- may be replaced by -O-, -S- or -CH=CH-, but -O- is not adjacent each other; and either one of A, A¹, A² and A³ is 2-fluoro-1,4-phenylene or 2,3-difluoro-1,4-phenylene.
2) A silicon derivative as described in the item 1), wherein m1 is 1, and both of m2 and m3 are 0.
3) A silicon derivative as described in the item 1), wherein both of m1 and m2 are 1, and m3 is 0.
4) A silicon derivative as described the item 1), wherein all of m1, m2 and m3 are 1.
5) A silicon derivative as described in the item 1), wherein R and R' each represent independently an alkyl group, an alkoxy group, an alkoxyalkyl group or an alkylthio group having 1 to 10 carbon atoms.
6) A silicon derivative as described in the item 1), wherein R and R' each independently represent an alkyl group, an alkoxy group or an alkylthio group having 1 to 10 carbon atoms; m1 is 1 and both of m2 and m3 are 0.
7) A silicon derivative as described in the item 1), wherein R and R' each independently represent an alkyl group, an alkoxy group or an alkylthio group having 1 to 10 carbon atoms; both of m1 and m2 are 1, and m3 is 0.
8) A silicon derivative as described in the item 1), wherein R and R' each independently represent an alkyl group, an alkoxy group or an alkylthio group having 1 to 10 carbon atoms; and all of m1, m2 and m3 are 1.
9) A liquid crystal composition comprising at least one silicon derivative as described in any of the items 1) to 8).
10) A liquid crystal composition comprising at least one silicon derivative as described in any of the items 1) to 8) as a first component and at least one compound selected from the group of compounds represented by Formulas (2), (3) and (4) as a second component: 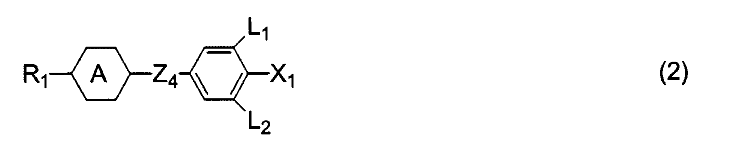 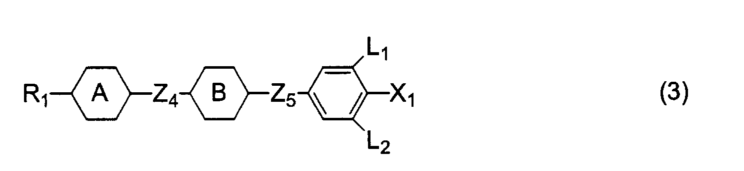 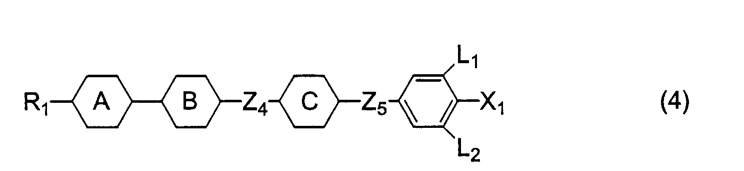 wherein R₁ represents an alkyl group having 1 to 10 carbon atoms, in which one or more -CH₂- in this group may be replaced by -O- or -CH=CH-, but -O- is not adjacent each other and in which one or more H in this group may be substituted with F; X₁ represents F, Cl, -OCF₃, -OCF₂H, -CF₃, -CF₂H, -CFH₂, -OCF₂CF₂H or -OCF₂CFHCF₃; L₁ and L₂ each independently represent H or F; Z₄ and Z₅ each independently represent -(CH₂)₂-, -(CH₂)₄-, -COO-, -CF₂O-, -OCF₂-, -CH=CH- or a single bond; a ring A and a ring B each represent independently trans-1,4-cyclohexylene, 1,3-dioxane-2,5-diyl or 1,4-phenylene in which one or more H may be substituted with F; and a ring C represents 1,4-cyclohexylene or 1,4-phenylene in which one or more H may be substituted with F.
11) A liquid crystal composition comprising one or more compound as described in any of the items 1) to 8) as the first component and at least one compound selected from the group of compounds represented by Formulas (5) and (6) as a second component: 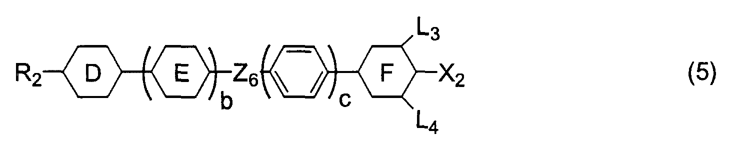 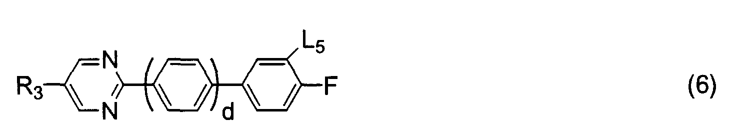 wherein R₂ and R₃ each represent independently an alkyl group having 1 to 10 carbon atoms, in which one or more -CH₂- in this group may be replaced by -O- or -CH=CH-, but -O- is not adjacent each other and in which one or more H in this group may be substituted with F; X₂ represents -CN or -C≡C-CN; a ring D represents trans-1,4-cyclohexylene, 1,4-phenylene, 1,3-dioxane-2,5-diyl or pyrimidine-2,5-diyl; a ring E represents trans-1,4-cyclohexylene, 1,4-phenylene in which one or more H may be substituted with F or pyrimidine-2,5-diyl; a ring F represents trans-1,4-cyclohexylene or 1,4-phenylene; Z₆ represents -(CH₂)₂-, -COO-, -CF₂O-, -OCF₂- or a single bond; L₃, L₄ and L₅ each represent independently H or F; and b, c and d each independently represent 0 or 1.
12) A liquid crystal composition comprising at least one compound as described in any of the items 1) to 8) as the first component and at least one compound selected from the group of compounds represented by Formulas (7), (8) and (9) as a second component: 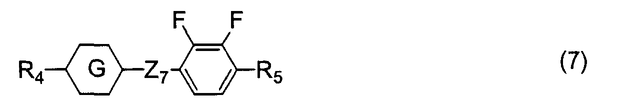 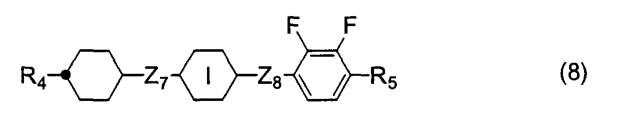 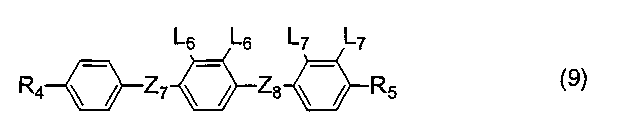 wherein R₄ and R₅ each independently represent an alkyl group having 1 to 10 carbon atoms, in which one or more -CH₂- in this group may be replaced by -O- or -CH=CH-, but -O- is not adjacent each other and in which one or more H in this group may be substituted with F; a ring G and a ring I each independently represent trans-1,4-cyclohexylene or 1,4-phenylene; L₆ and L₇ each independently represent H or F, but L₆ and L₇ are not H at the same time; and Z₇ and Z₈ each independently represent -(CH₂)₂-, -COO- or a single bond.
13) A liquid crystal composition comprising at least one compound as described in any of the items 1) to 8) as the first component, at least one compound selected from the group of the compounds represented by Formulas (2), (3) and (4) as the second component and at least one compound selected from the group of compounds represented by Formulas (10), (11) and (12) as a third component: 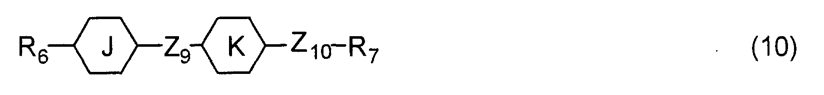 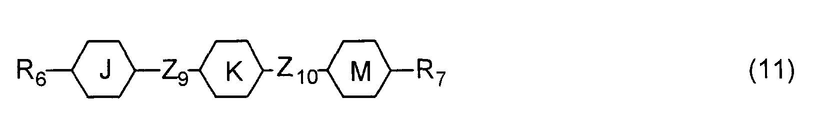 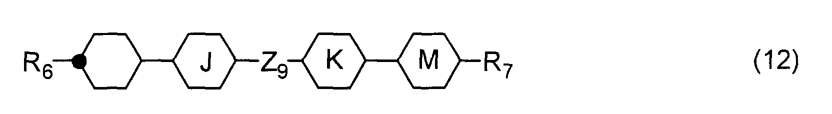 wherein R₆ and R₇ each independently represent an alkyl group having 1 to 10 carbon atoms, in which one or more -CH₂- in this group may be replaced by -O- or -CH=CH-, but -O- is not adjacent each other and in which one or more H in this group may be substituted with F; a ring J, a ring K and a ring M each independently represent trans-1,4-cyclohexylene, pyrimidine-2,5-diyl or 1,4-phenylene in which one or more H may be substituted with F; and Z₉ and Z₁₀ each independently represent -C≡C-, -COO-, -(CH₂)₂-, -CH=CH- or a single bond.
14) A liquid crystal composition comprising at least one compound as described in any of the items 1) to 8) as the first component, at least one compound selected from the group of the compounds represented by Formulas (5) and (6) as the second component and at least one compound selected from the group of the compounds represented by Formulas (10), (11) and (12) as the third component.
15) A liquid crystal composition comprising at least one compound as described in any of the items 1) to 8) as the first component, at least one compound selected from the group of the compounds represented by Formulas (7), (8) and (9) as the second component and at least one compound selected from the group of the compounds represented by Formulas (10), (11) and (12) as the third component.
16) A liquid crystal composition comprising at least one compound as described in any of the items 1) to 8) as the first component, at least one compound selected from the group of the compounds represented by Formulas (2), (3) and (4) as the second component, at least one compound selected from the group of the compounds represented by Formulas (5) and (6) as the third component and at least one compound selected from the group of the compounds represented by Formulas (10), (11) and (12) as a fourth component.
17) A liquid crystal composition comprising at least one liquid crystal composition as described in any of the items 9) to 16) and at least one optically active compound.
18) A liquid crystal display comprising the liquid crystal composition as described in any of the items 9) to 17).

The silicon derivative (1) of the present invention is excellent in compatibility with other liquid crystal materials and low in viscosity and has a low threshold voltage. Also, this is physically and chemically sufficiently stable under conditions on which a liquid crystal display is usually used. Further, suitable selection of rings, substituents and bonding groups constituting a molecule thereof provides the derivative having desired physical values. Accordingly, use of the compound (1) as a component for a liquid crystal composition makes it possible to provide a novel liquid crystal composition having preferred characteristics.

The silicon derivative of the present invention is represented by Formula (1) described above. In the formula, R and R' represent a hydrogen atom or a linear or branched alkyl group having 1 to 10 carbon atoms and include, to be specific, linear alkyl groups such as methyl, ethyl, propyl, butyl, pentyl, hexyl, heptyl or decyl, or branched alkyl groups such as isopropyl, sec-butyl, tert-butyl, isopentyl, isohexyl or 3-ethyloctyl. Further, a group obtained by replacing one or more -CH₂- in the above alkyl group with -O-includes an alkoxy group, an alkoxyalkyl group, an alkoxyalkoxy group or a branched alkoxy group. Specific examples thereof include methoxy, ethoxy, propoxy, butoxy, pentoxy, hexoxy, heptoxy, octyloxy, nonyloxy, methoxymethyl, methoxyethyl, methoxypropyl, methoxybutyl, methoxypentyl, methoxyoctyl, ethoxymethyl, ethoxyethyl, ethoxypropyl, ethoxyhexyl, propoxymethyl, propoxyethyl, propoxypropyl, propoxypentyl, butoxymethyl, butoxyethyl, butoxybutyl, pentyloxymethyl, pentyloxybutyl, hexyloxymethyl, hexyloxyethyl, hexyloxypropyl, heptyloxymethyl, octyloxymethyl, methoxymethoxy, methoxyethoxy, ethoxymethoxy, ethoxyethoxy, methoxypropoxy, methoxybutoxy, 2-methylpropoxy, 2-methylpentoxy or 1-methylheptoxymethyl. The branched alkyl groups or the alkoxy groups each described above may be those showing optical activity.

An alkenyl group or an alkadienyl group obtained by replacing one or more -CH₂- in the above alkyl groups with - CH=CH- include vinyl, propenyl, butenyl, pentenyl, hexenyl, decenyl, butadienyl, hexadienyl or octadienyl. An alkynyl group obtained by replacing one or more -CH₂- in the above alkyl group with -C≡C- includes ethynyl, propynyl, pentynyl or heptynyl. Further, a group obtained by replacing one or more -CH₂- in the alkyl group with -CH=CH- or -O- includes alkoxyalkenyl groups such as methoxypropenyl, ethoxypropenyl, pentyloxypropenyl, methoxybutenyl, ethoxybutenyl, pentyloxybutenyl, methoxypentenyl, propoxypentenyl, methoxyhexenyl, propoxyhexenyl, methoxyheptenyl or methoxyoctenyl; alkenyloxy groups such as propenyloxy, butenyloxy, pentenyloxy and octenyloxy; and alkenyloxymethyl groups such as propenyloxymethyl.

The compound (1) which is constituted by the respective groups selected from those represented by R, R', A, A¹ to A³ and Z¹ to Z³ each described above is a compound having preferred characteristics, and the compound which does not comprise two or more rings containing a hetero atom is more preferred. Among the group of these compounds, the compounds having particularly preferred characteristics are compounds shown in the following (1-1) to (1-122): 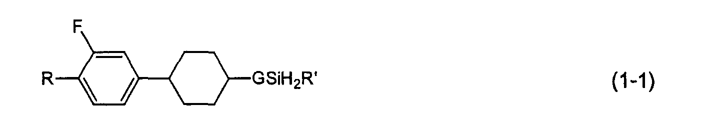 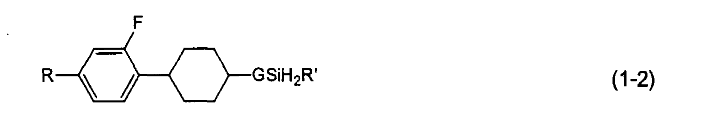 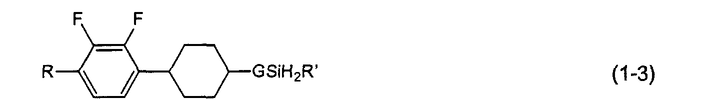 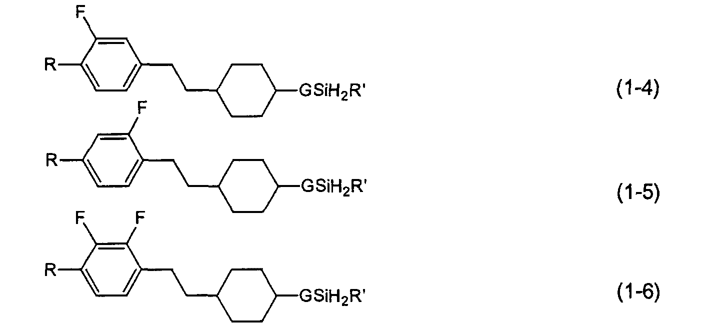 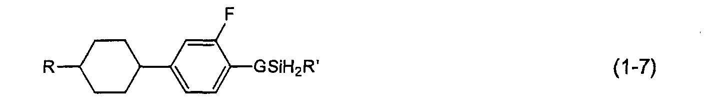 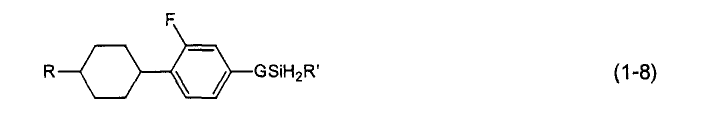 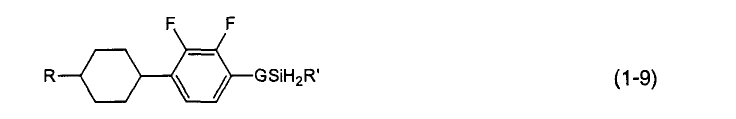 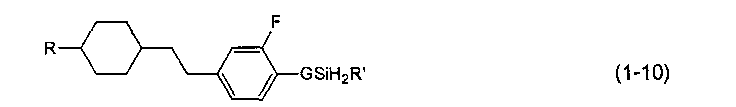 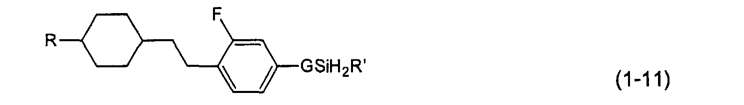 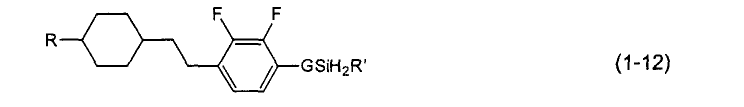 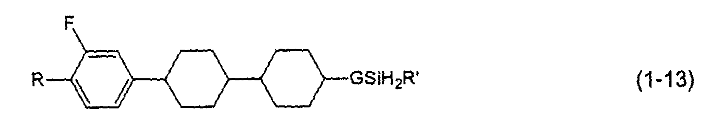 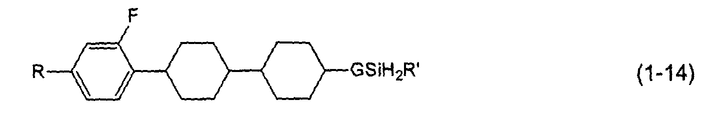 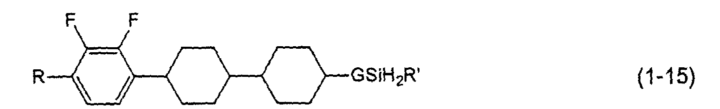 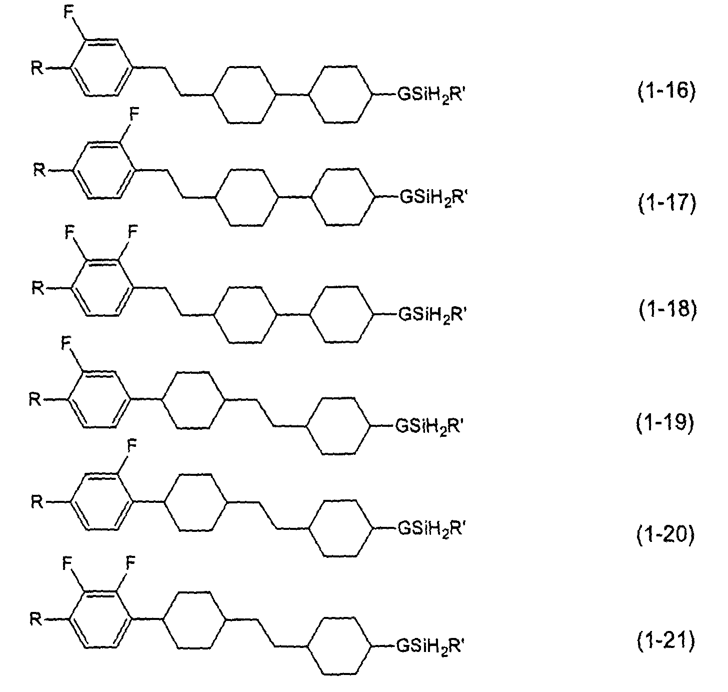 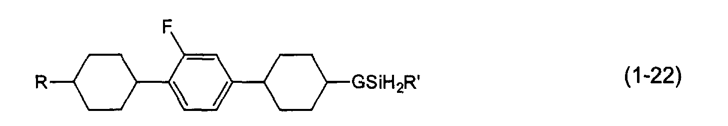 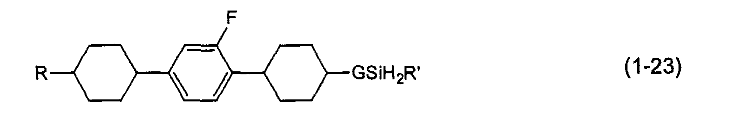 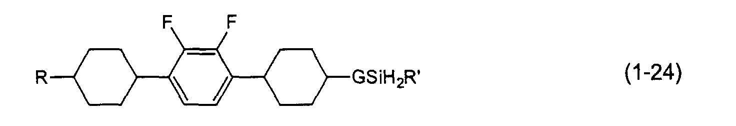 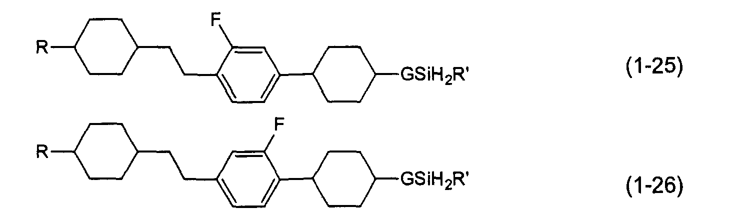 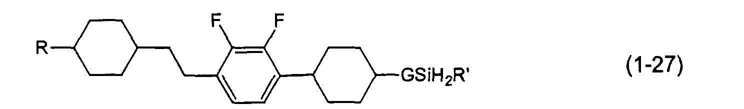 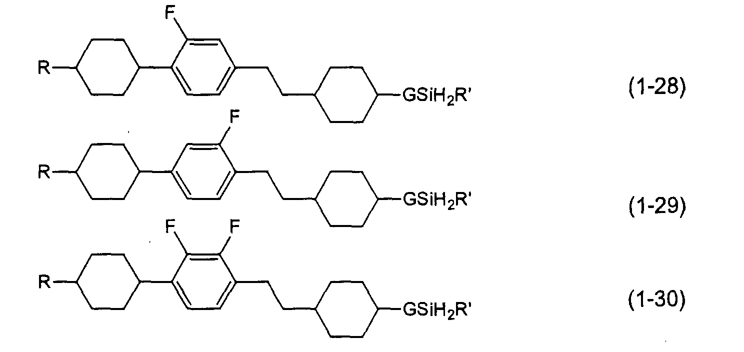 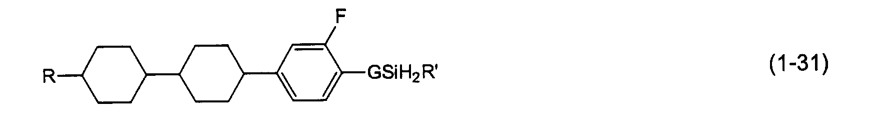 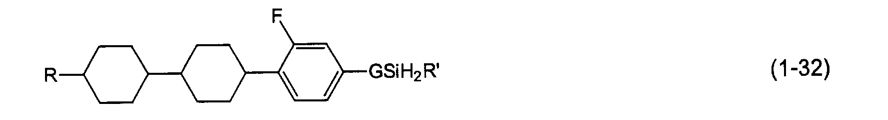 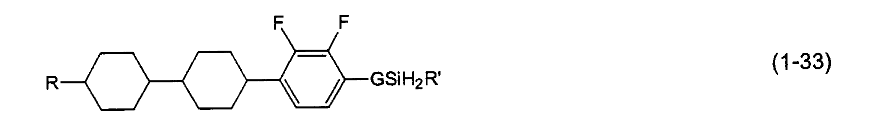 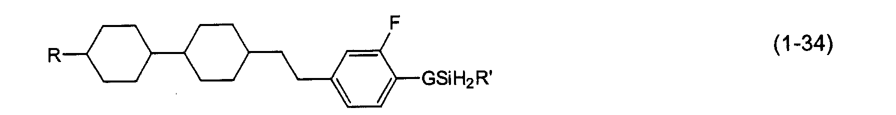 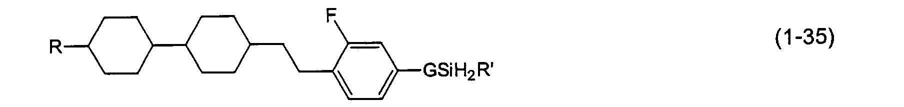 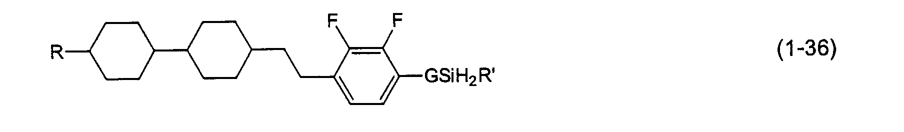 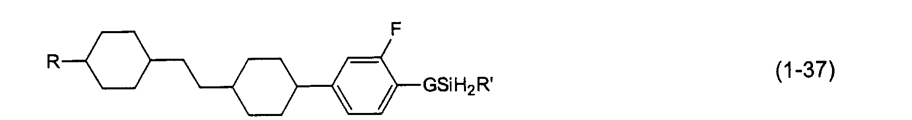 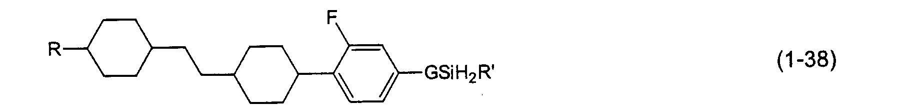 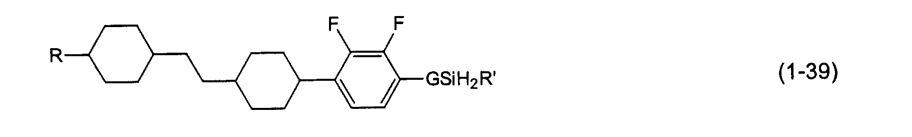 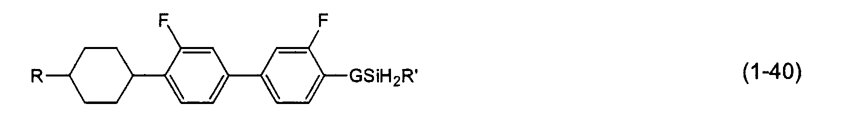 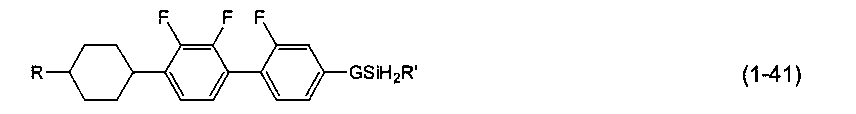 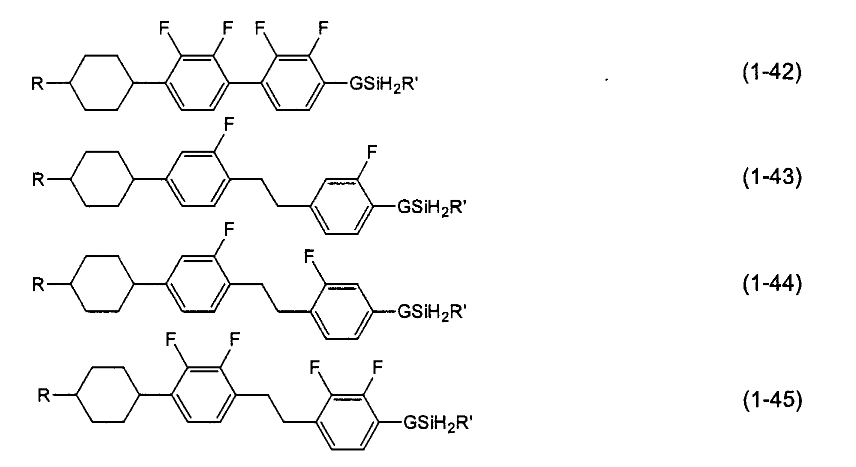 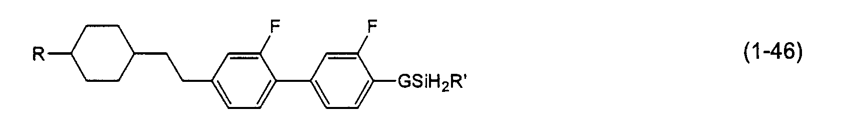 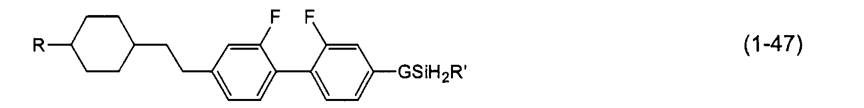 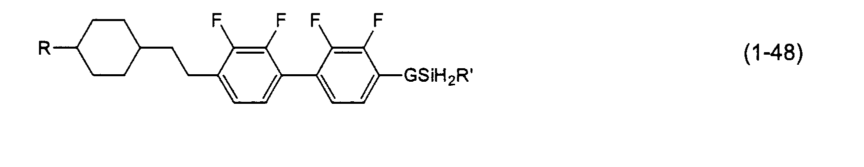 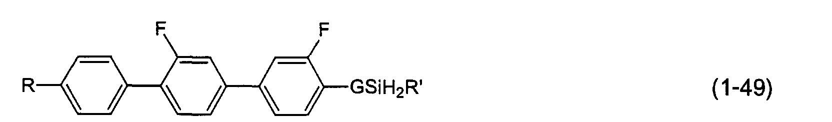 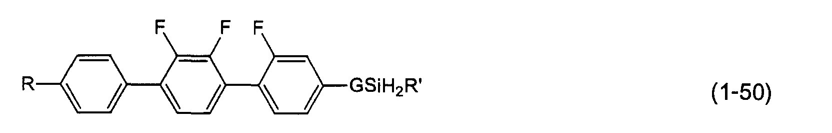 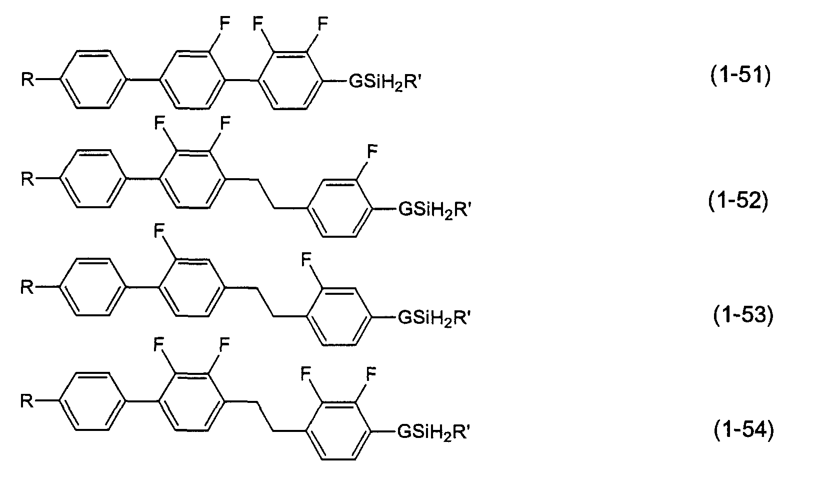 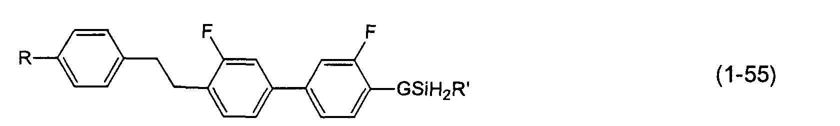 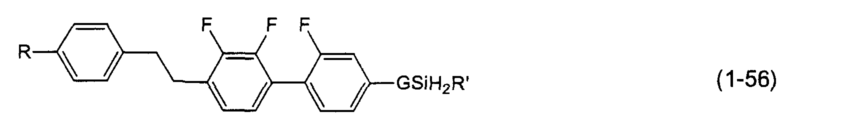 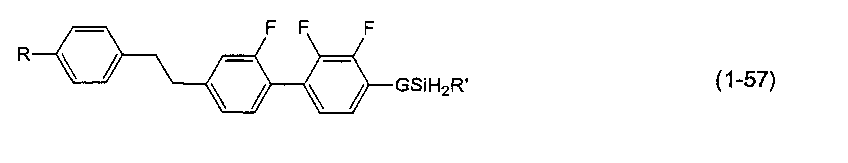 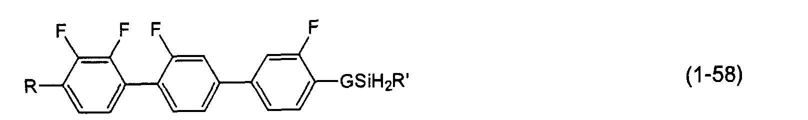 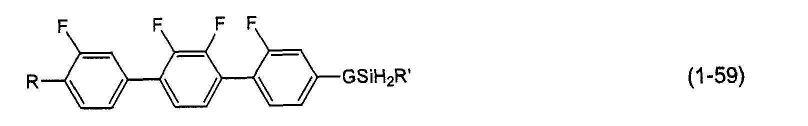 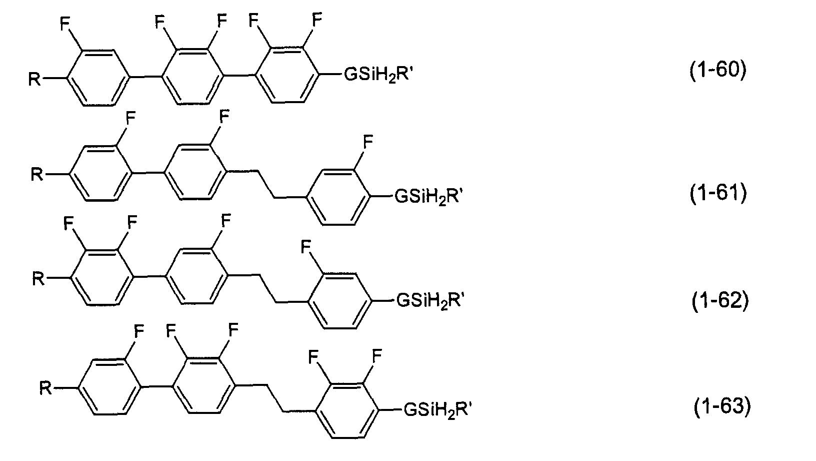 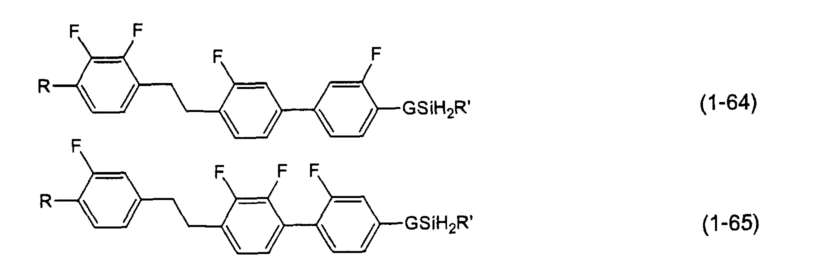 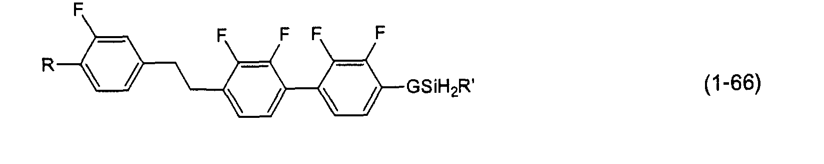 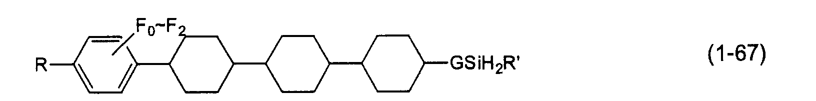 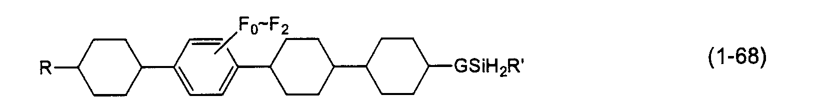 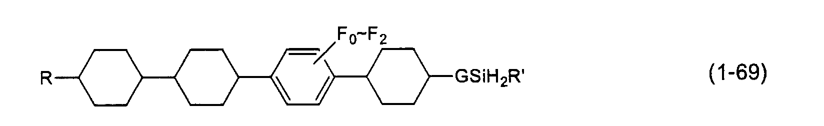 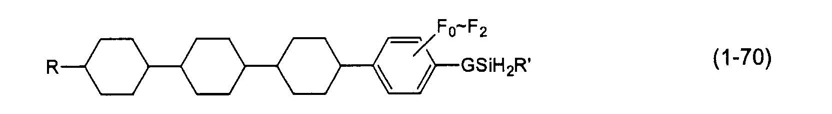 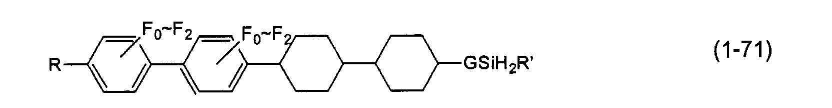 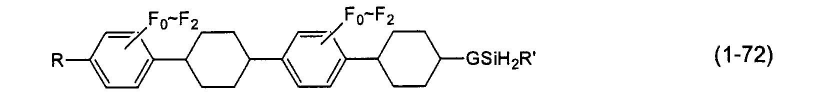 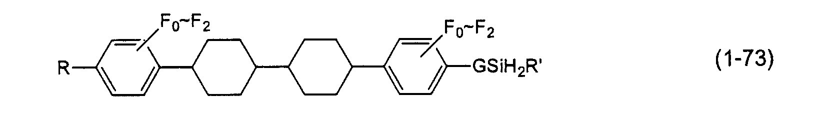 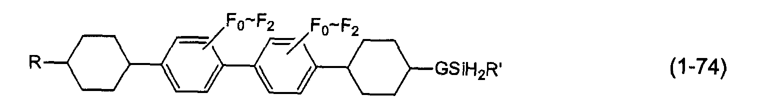 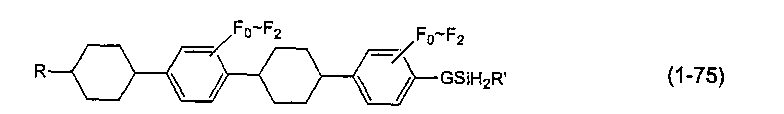 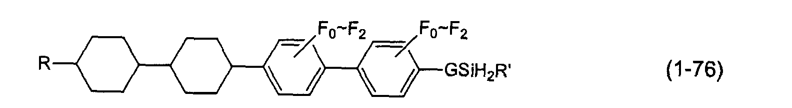 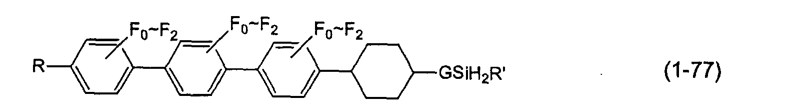 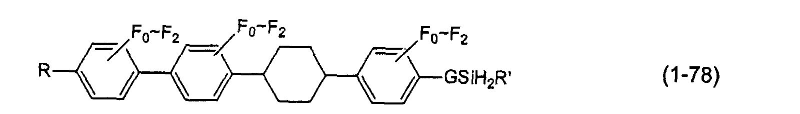 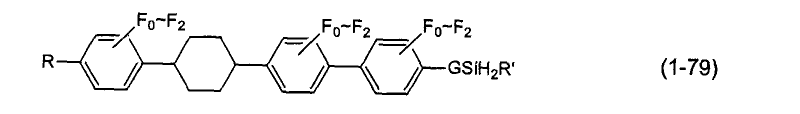 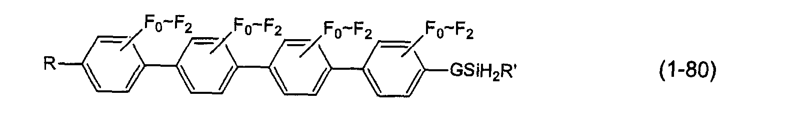 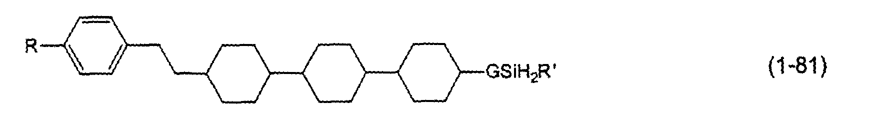 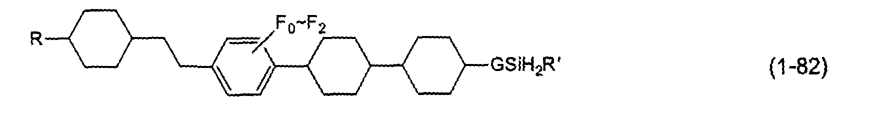 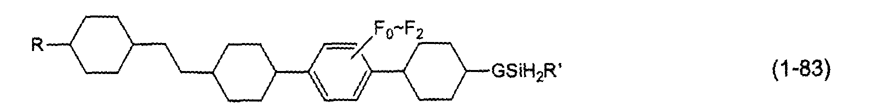 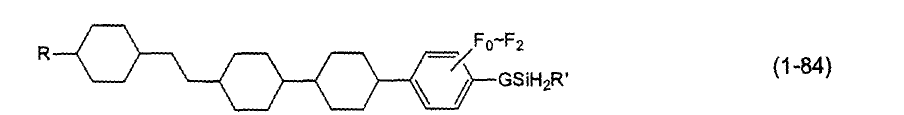 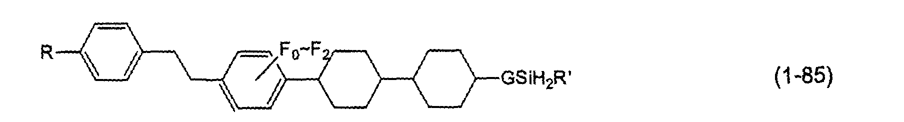 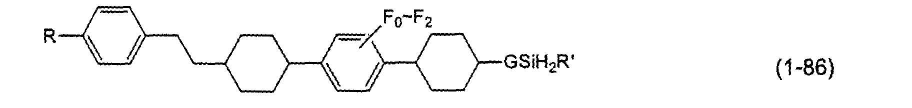 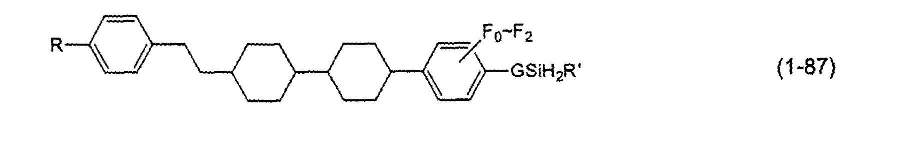 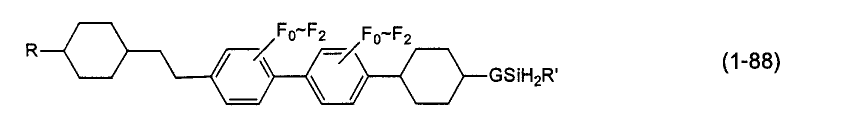 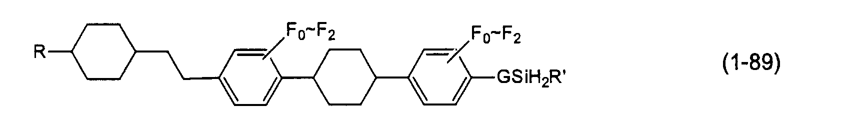 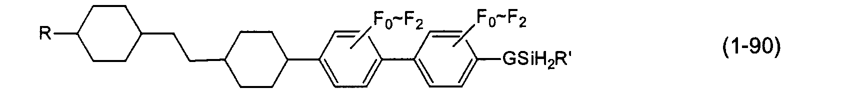 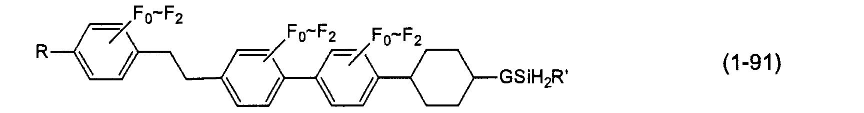 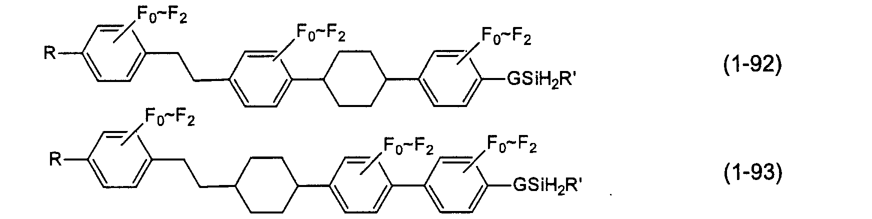 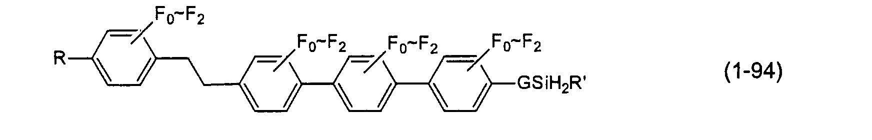 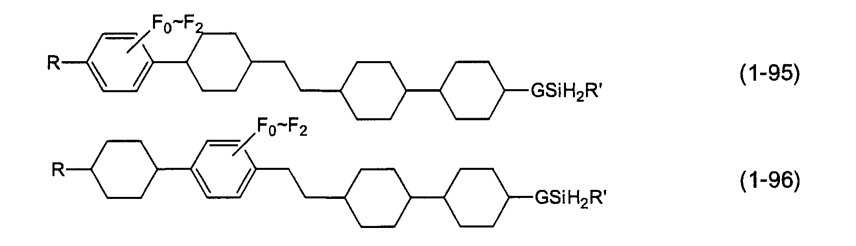 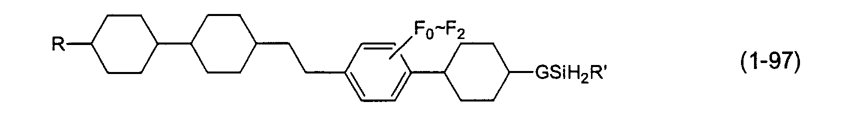 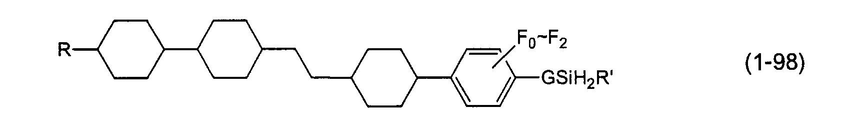 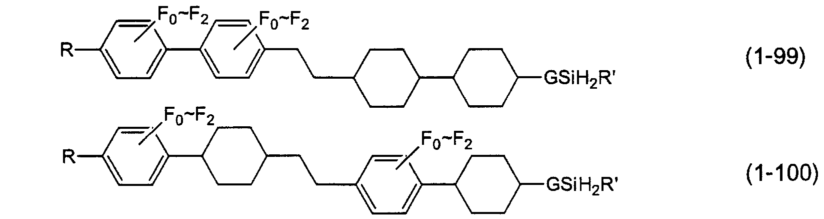 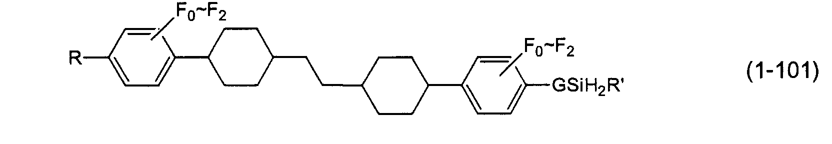 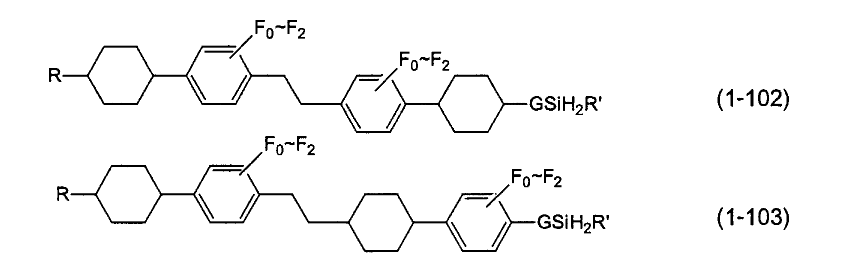 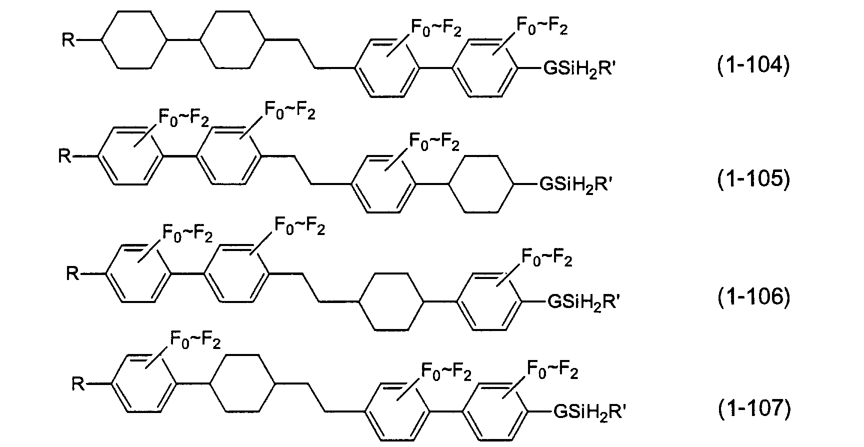 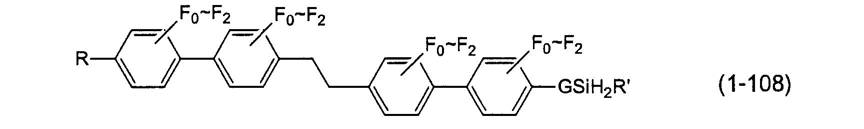 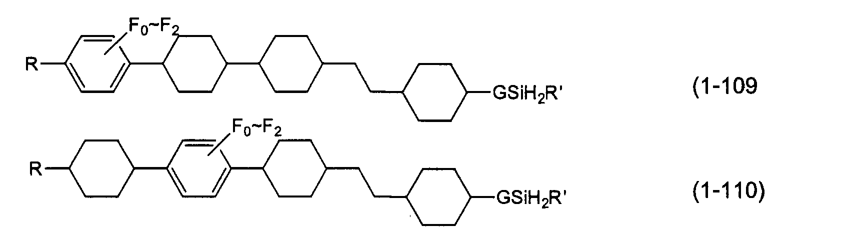 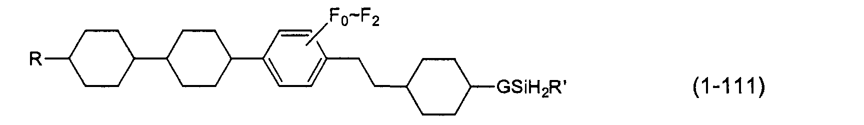 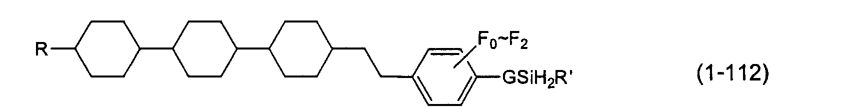 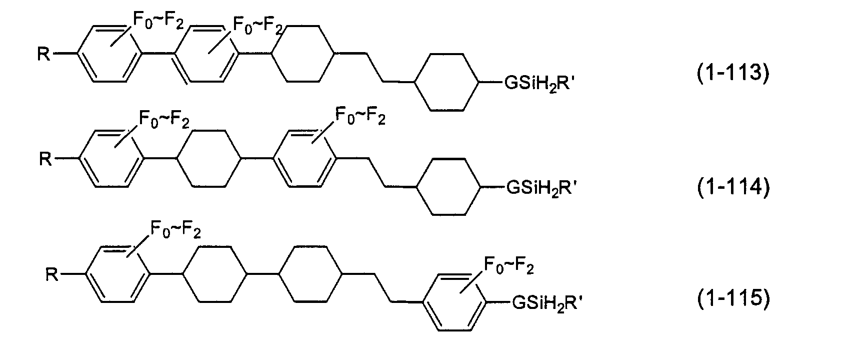 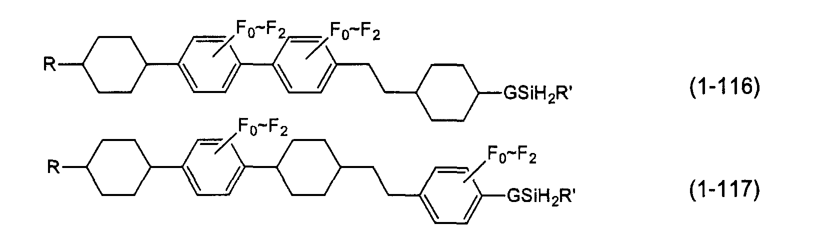 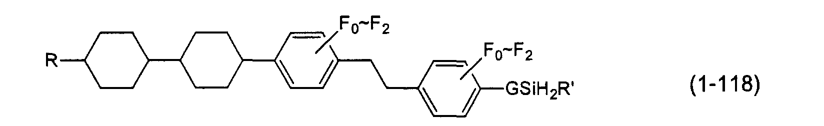 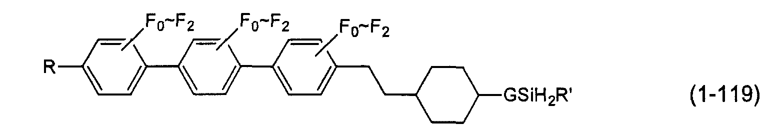 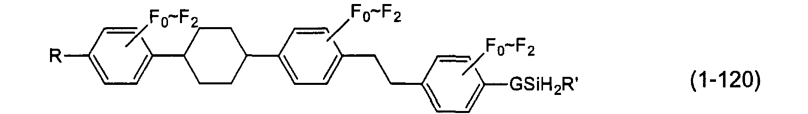 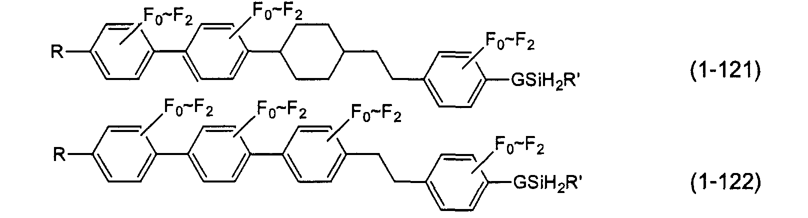 (in the respective formulas, R, G and R' are the same as above, and F₀ to F₂ represent 1,4-phenylene in which H is not substituted with F or substituted with one or two F).

The compound (1) is obtained by introducing the prescribed groups into R, R', Z¹, Z² and Z³ in the above formula, and the groups can be introduced by publicly known and conventional organic synthetic methods.

Introduction of a silanediyl group: this can be can be carried out by publicly known and conventional organic synthetic methods described in E. W. Colvin et al., Silicon in Organic Synthesis, Butterworths, London (1981); W. P. Werber, Silicon Reagents for Organic Synthesis, Springer-Verlag, Berlin (1983); and E. W. Colvin, Silicon Reagents in Organic Synthesis, Academic Press, London (1981). Several specific examples thereof shall be shown below. 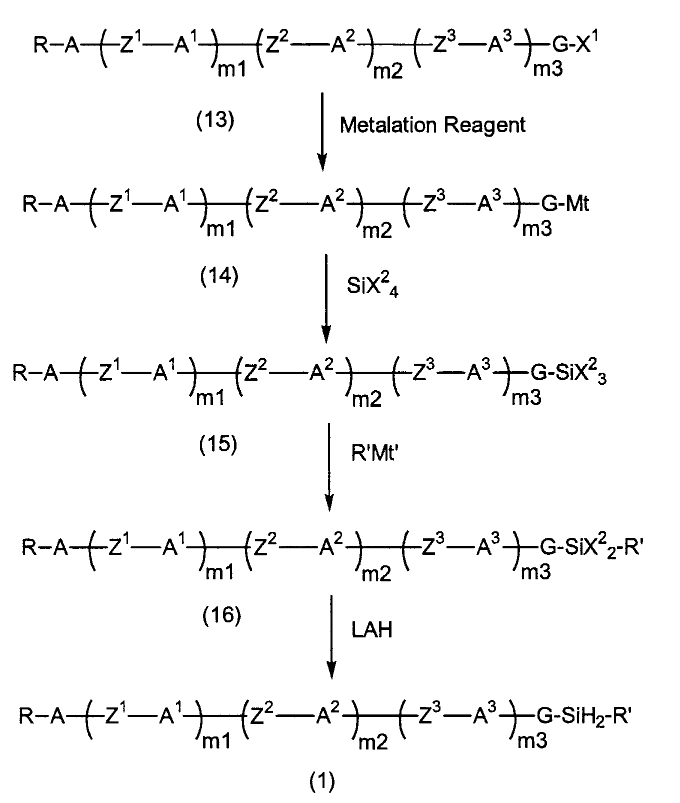 (in the formulas, R, R', m1, m2, m3, A, A¹ to A³ and Z¹ to Z³ are the same as above; Mt and Mt' each independently represent lithium, potassium, halogenated magnesium or halogenated zinc; and X¹ and X² each independently represent halogen or an alkoxy group).

To explain more specifically, the compound (1) is synthesized, for example, according to the following procedure.

The corresponding compound (13) is turned into an organic metal reagent represented by Formula (14) by halogen-metal exchange reaction by using of an elemental metal or transmetallation with various organic metal reagents, and this is reacted with tetrasubstituted silane. Further, it is reacted with organic metal shown by R'Mt' having a group corresponding to a substituent on a silicon atom to be converted to a silicon derivative represented by Formula (16). The silicon compound represented by Formula (16) can be derived into the compound (1) by subjecting it to reduction treatment by a conventional method.

The production process described above shall be explained in more details.

The organic metal compounds represented by Formula (14) or R'Mt include Grignard compounds in which Mt is MgBr or MgCl, alkyllithium compounds in which Mt is Li, alkyl tin compounds, alkylpotassium reagents or alkylcadmium reagents, and they are frequently used because of the reason that they can readily accelerate the reaction. In particular, when the alkyl Grignard reagents or the alkyllithium reagents are used, side reactions are reduced, and the yields of the intended products are elevated.

The organic metal compounds represented by Formula (14) or R'Mt are synthesized directly from corresponding halides according to methods described in Fourth Edition Shinjikken kagaku koza 24 (Maruzen) and H. E. Ramsden, A. E. Balint, W. R. Whitford, J. J. Walburn and R. Cserr, J. Org. Chem., 22, 1202 (1957). Also, they are prepared by subjecting suitable alkylmetal compounds to transmetallation with desired metal compounds according to a method described in Fourth Edition Shinjikken kagaku koza 24 (Maruzen) or C. Ashby and R.C. Arnotl, J. Organomet. Chem., 14, 1 (1968).

The silicon compound represented by Formula (15) can be synthesized by reacting the compound (14) with a compound such as tetraalkoxysilane and tetrahalosilane. Trimethoxysilyl, trichlorosilyl or diethoxymethoxysilyl derivatives are preferred as the silicon compound (15) in terms of an easy advancement in the reaction.

Further, a silicon derivative which is the intermediate represented by Formula (16) is reduced to result in the compound (1) by using a suitable reducing agent such as lithium aluminum hydride, diisobutylaluminum hydride, sodium boron hydride, sodium cyanoboron hydride or diborane-THF. In this case, when a substituent which is reduced by these liable to be reducing agents is contained in the same molecule, a suitable additive is used or only a -SiX₂- group is reduced by controlling the reaction conditions, whereby the compound (1) can be obtained at a good yield.

Further, separately from the method described above, used is a method in which terminal olefin represented by Formula (17) is subjected to dihydrosilylation with corresponding alkyldialkoxyhydrosilane or alkyldihalogenohydro-silane: 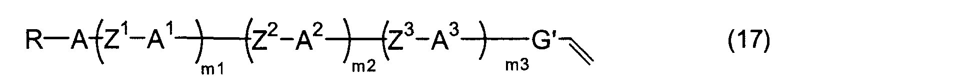 (in the formula, m1 , m2, m3, A, A¹ to A³ and Z¹ to Z³ are the same as those described above, and G' represents a carbon chain which is shorter by 2 carbons than G in Formula (1)).

The silicon compound (1) of the present invention thus obtained is very excellent, as shown in examples described later, as a structural component of a nematic liquid crystal composition. It is excellent in compatibility with other liquid crystal materials and has low viscosity and a wide liquid crystal temperature range as compared with those of publicly known compounds with the same structure having a trialkylsilyl group. In addition, obtained is the unexpectable effect that it has a low threshold voltage and shows relatively low viscosity as compared with those of compounds with the same structure containing no silanediyl group. To be further unexpected, it is physically and chemically sufficiently stable under conditions on which a liquid crystal display is usually used.

The compound (1) can suitably be used as a component also in liquid crystal compositions for a TN mode, an STN mode and a TFT mode.

The compound (1) having 2 or 3 rings shows low viscosity, and the compound having 3 or 4 rings shows a high isotropic phase transition temperature.

The compound (1) having 2 or more cyclohexane rings in a molecule shows a high isotropic phase transition temperature, low Δn and low viscosity. Also, the compound having a dioxane ring or a pyrimidine ring shows relatively high Δε.

The compound (1) having at least one benzene ring shows a relatively large value of Δn and high liquid crystal alignment parameter, and therefore it is excellent. In particular, the compound having two or more benzene rings in a molecule has particularly large value of Δn, a wide liquid crystal temperature range and high stability, so that it is useful.

The compound (1) having F in a molecular short axis direction shows large negative value of Δε, a high isotropic phase transition temperature and relatively low viscosity. Among the compounds (1) having F in a molecular short axis direction, the compounds in which H on a benzene ring is substituted with F are excellent in stability and show large negative value of Δε, and the compounds having two or more F in a molecular short axis direction show particularly large negative value of Δε. Further, the compounds (1) in which R and/or R' are alkyl, alkoxy, alkoxyalkyl and/or alkenyloxy groups have a wide liquid crystal temperature range and low viscosity. In particular, the compounds in which R and/or R' are an alkoxy group show large negative value of Δε and have particularly a wide liquid crystal temperature range, low viscosity and a high voltage-holding ratio.

The compound (1) having a double bond in Z¹, Z² and/or Z³ has a wide liquid crystal temperature range and shows a large elastic constant ratio, so that it is suited as a compound for a STN mode. The compound (1) having a triple bond shows large value of Δn. It can be found from these matters that suitable selection of the rings, the side chains and/or the bonding groups makes it possible to obtain a novel liquid crystalline compound having desired physical properties.

The liquid crystal composition provided by the present invention may be constituted only by the first component comprising at least one compound represented by Formula (1), and preferred is the compound comprising, in addition thereto, at least one compound (hereinafter referred to as a second A component) selected from the group of the compounds represented by Formulas (2), (3) and (4) as the second component and/or at least one compound (hereinafter referred to as a second B component) selected from the group of the compounds represented by Formulas (5) and (6). Further, the composition can contain as well at least one compound selected from the group of the compounds represented by Formulas (10), (11) and (12) as the third component for the purpose of controlling a threshold voltage, a liquid crystal temperature range, birefringence, dielectric anisotropy and viscosity. Further, since, the respective components used for the liquid crystal composition of the present invention have no large difference between the physical properties, and they may be analogues comprising isotope of the respective elements.

In the second A component described above, capable of being given respectively are the compounds of formulas (2-1) to (2-9) as suitable examples of the compound represented by Formula (2), the compounds of formulas (3-1) to (3-97) as suitable examples of the compound represented by Formula (3) and the compounds of formulas (4-1) to (4-33) as suitable examples of the compound represented by Formula (4). 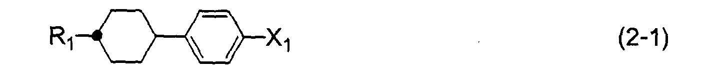 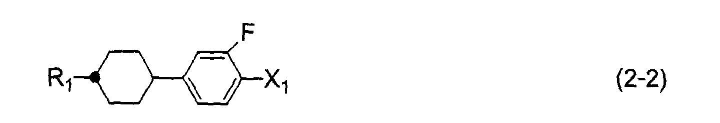 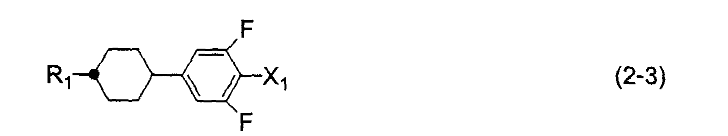 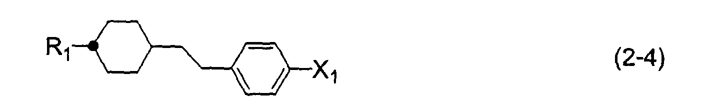 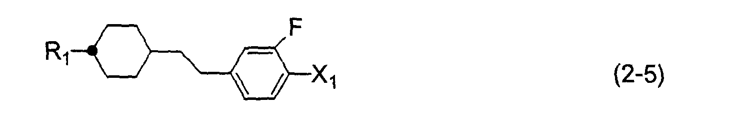 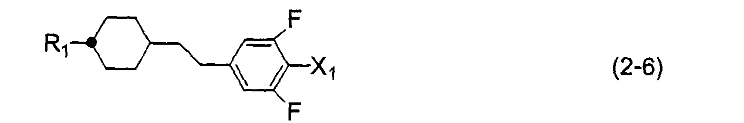 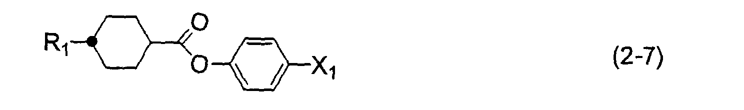 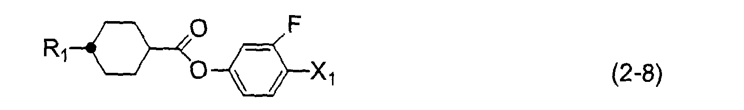 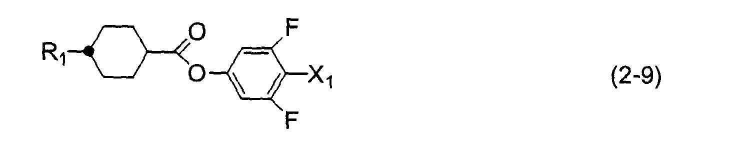 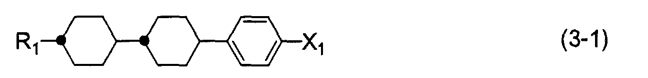 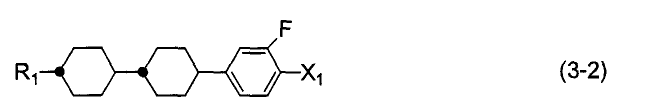 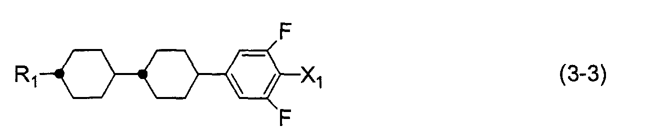 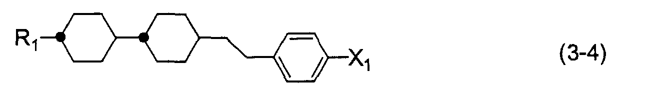 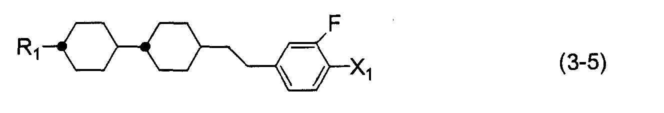 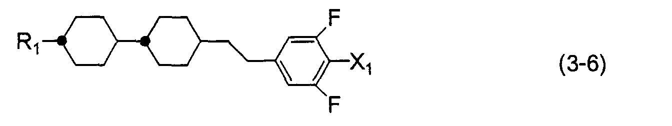 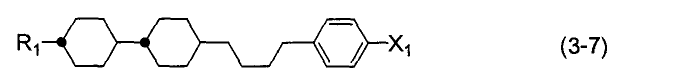 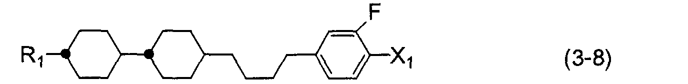 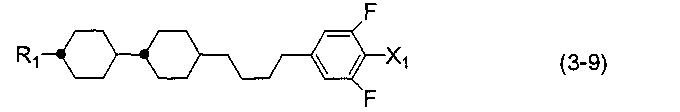 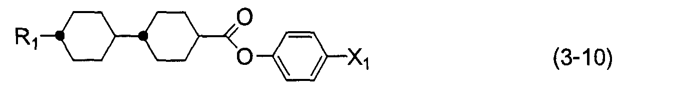 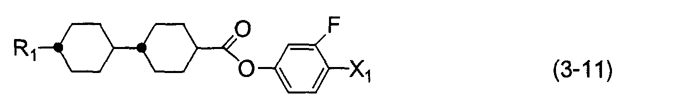 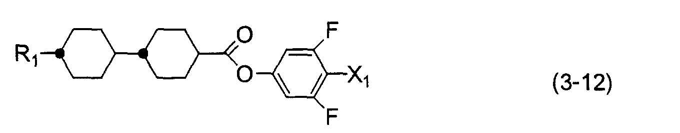 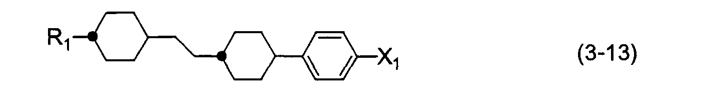 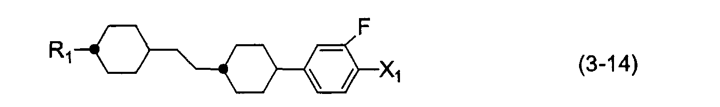 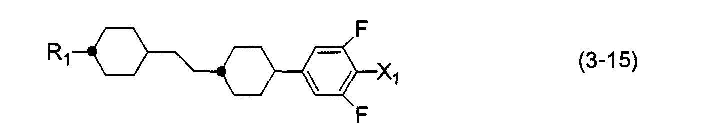 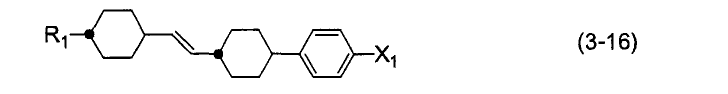 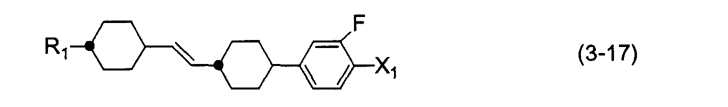 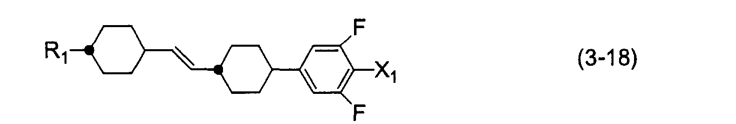 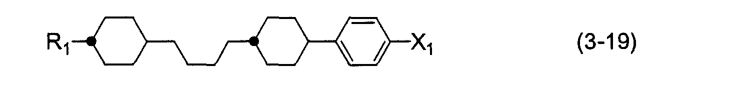 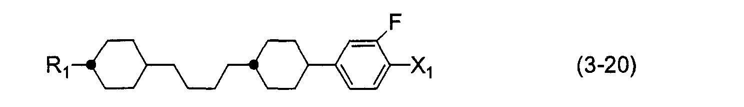 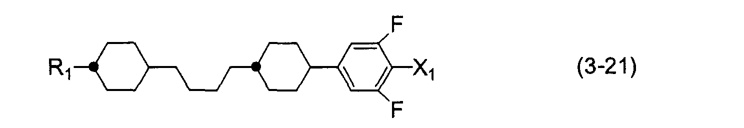 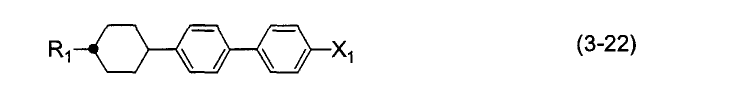 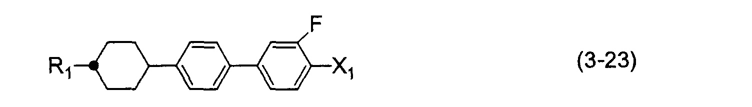 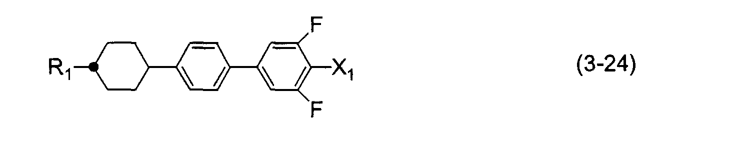 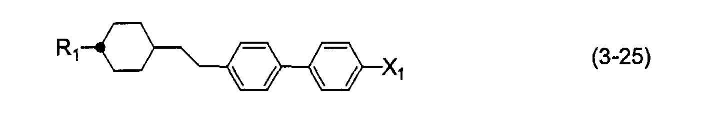 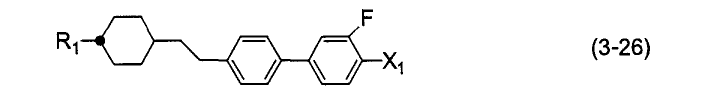 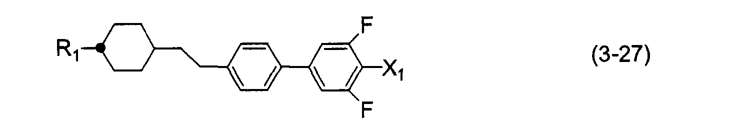 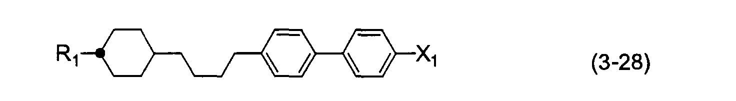 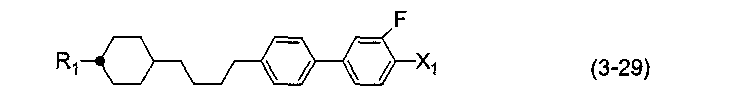 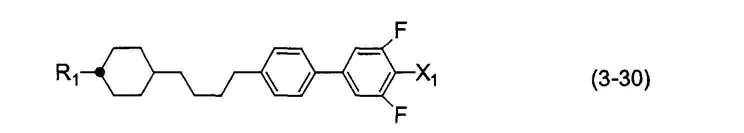 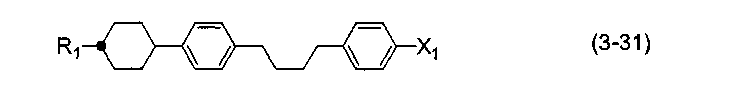 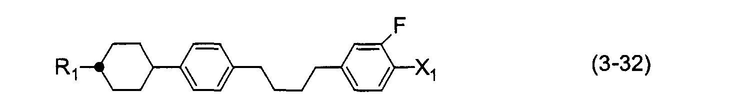 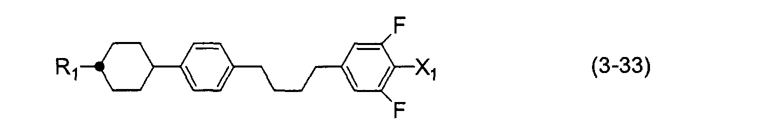 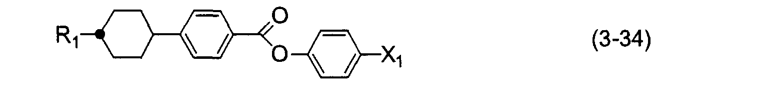 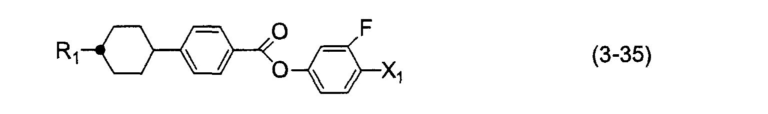 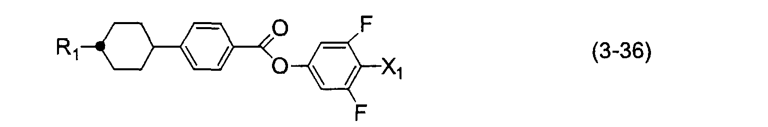 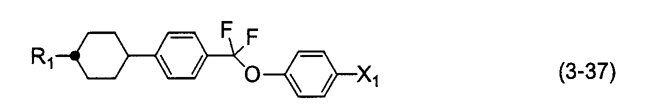 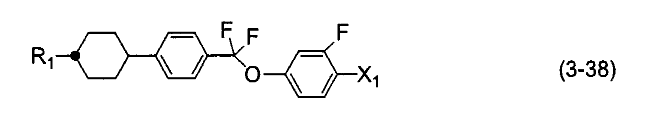 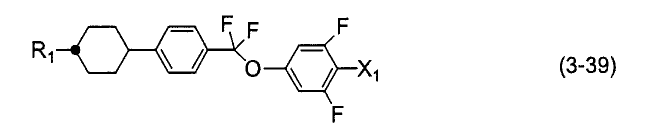 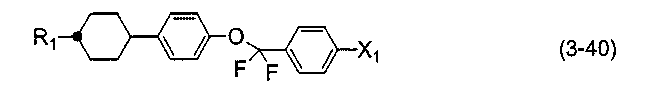 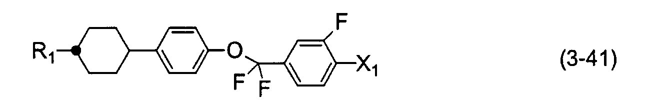 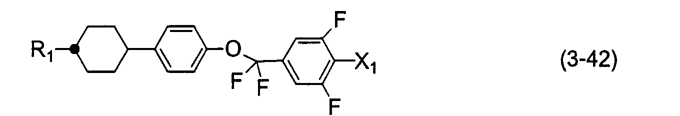 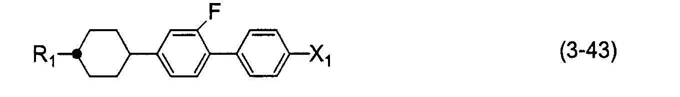 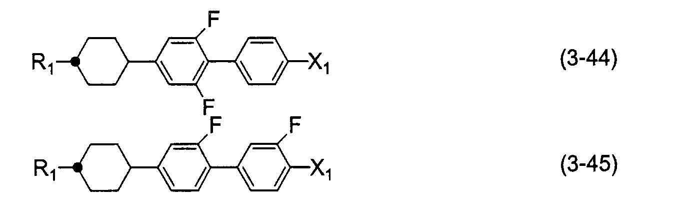 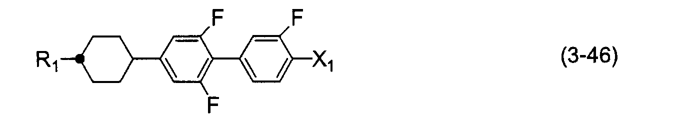 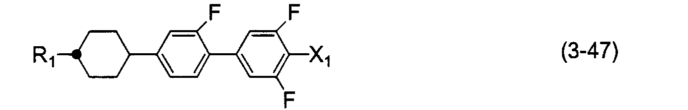 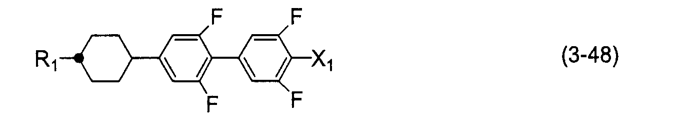 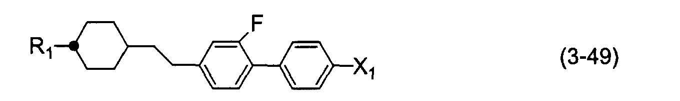 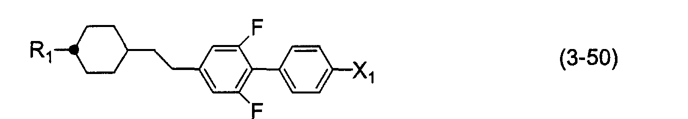 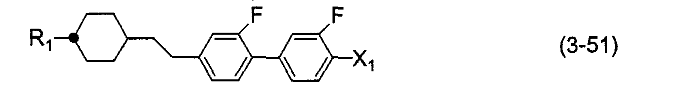 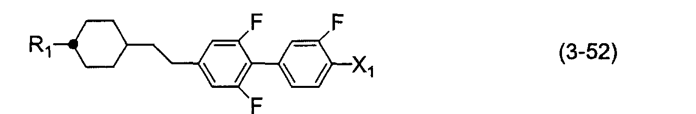 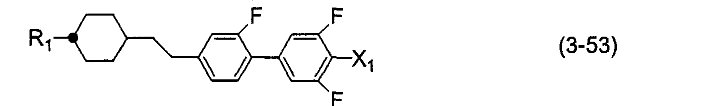 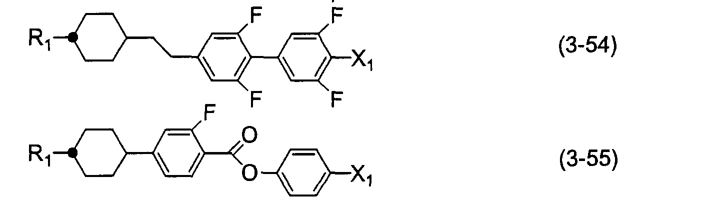 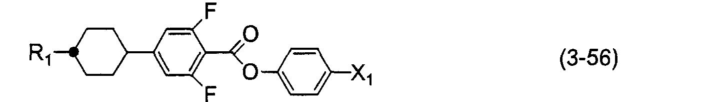 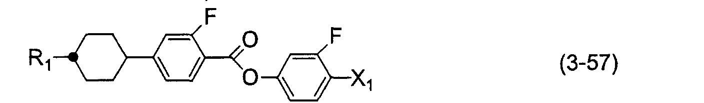 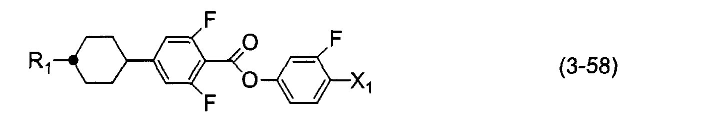 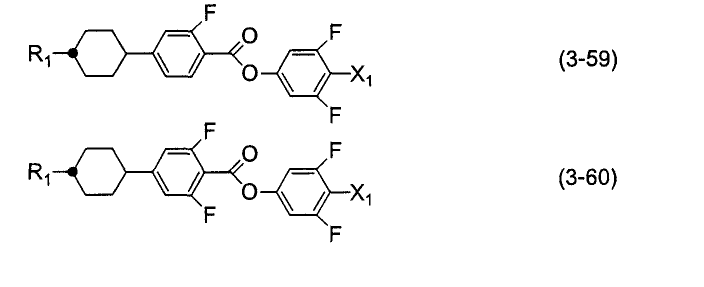 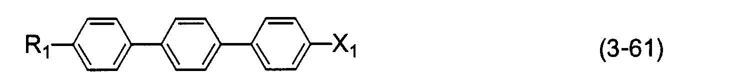 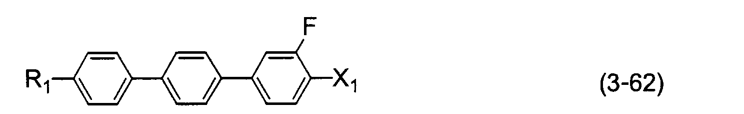 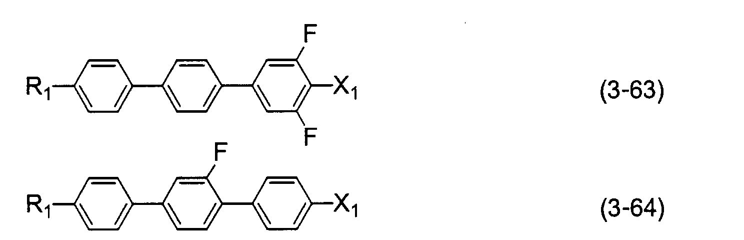 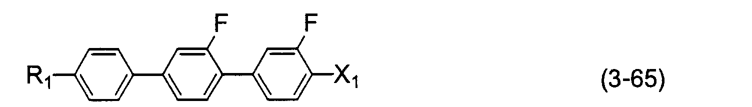 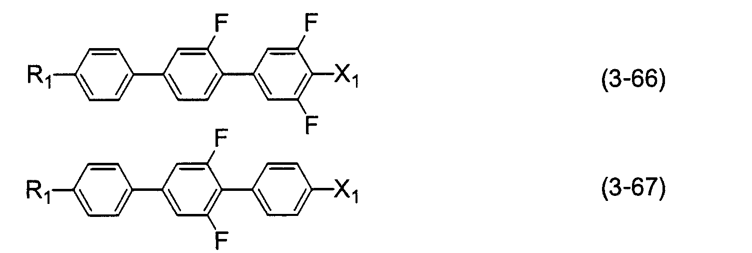 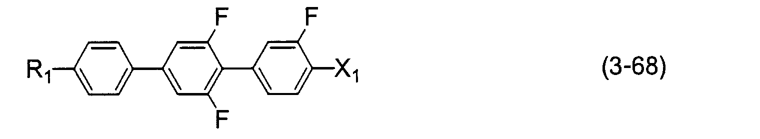 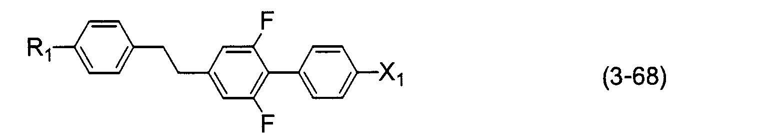 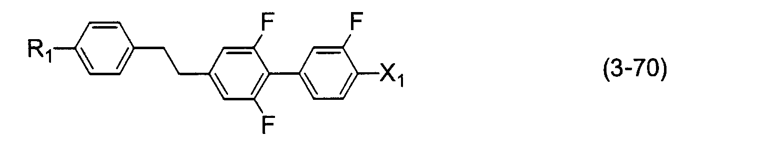 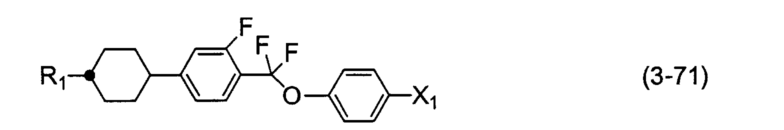 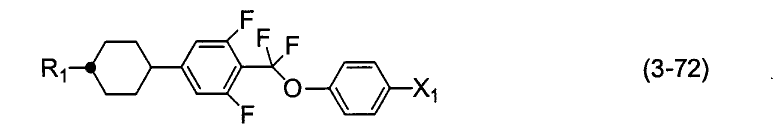 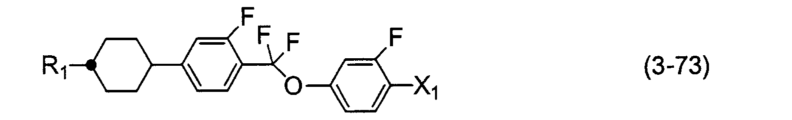 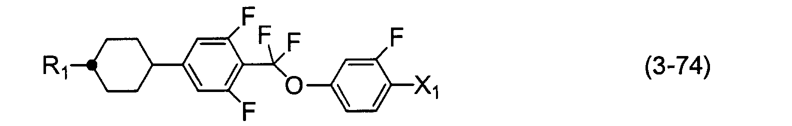 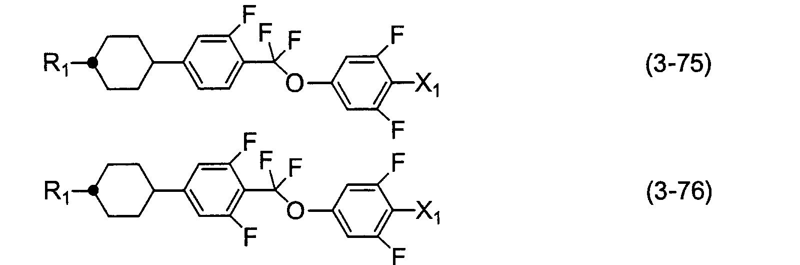 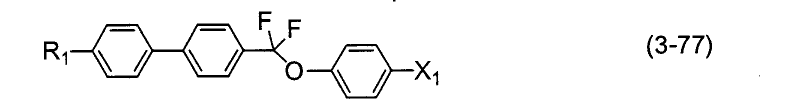 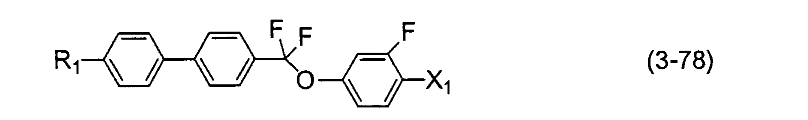 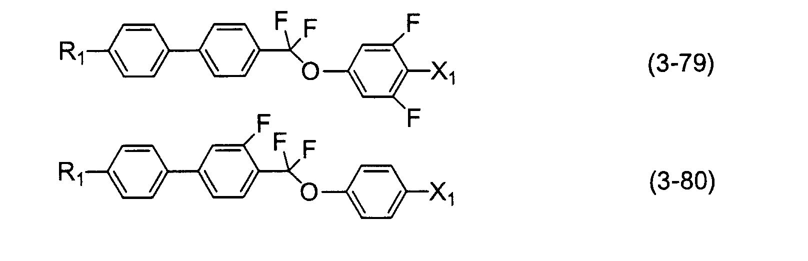 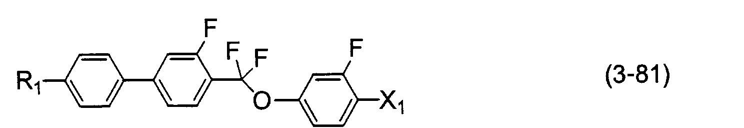 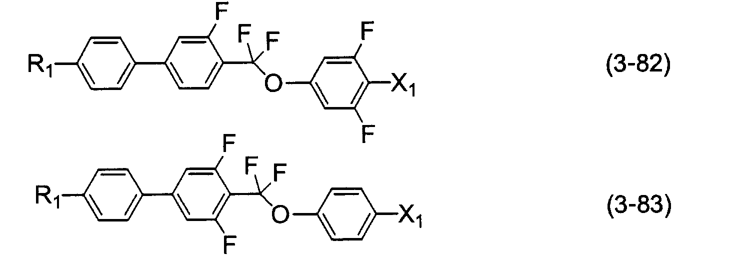 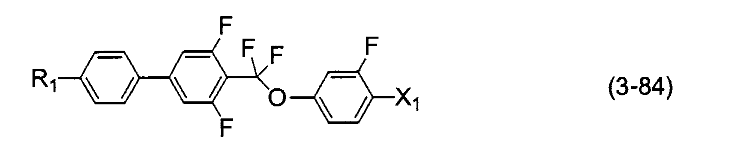 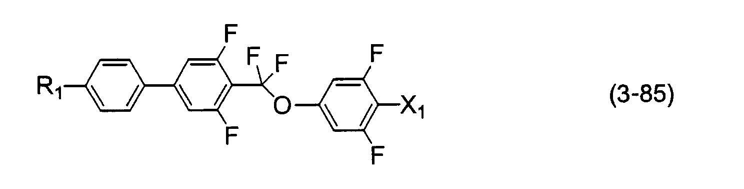 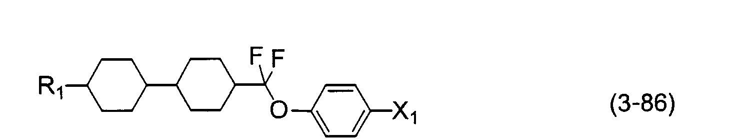 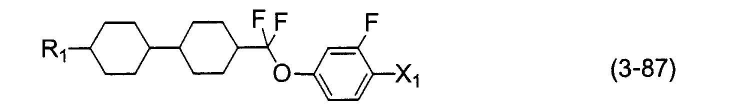 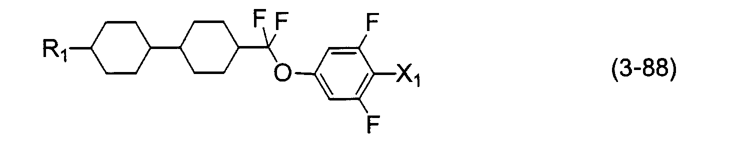 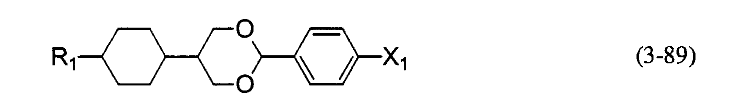 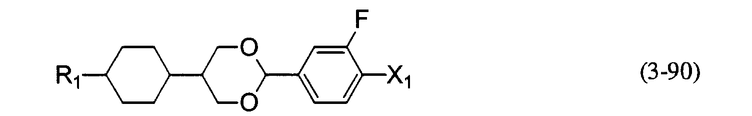 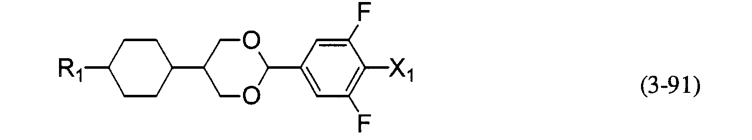 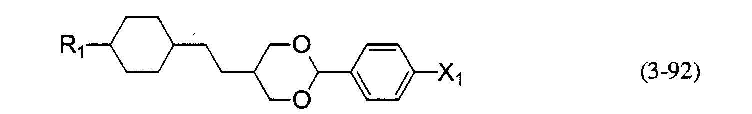 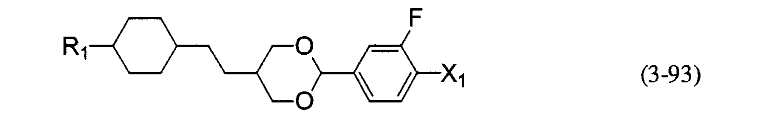 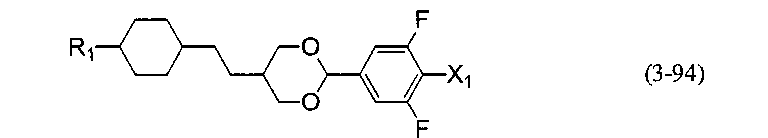 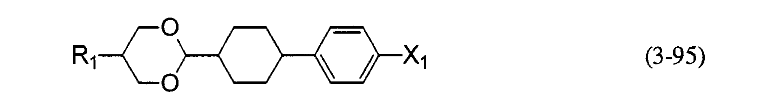 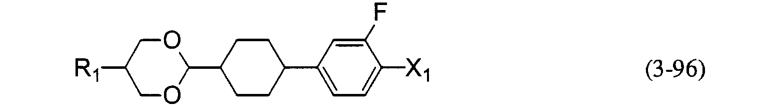 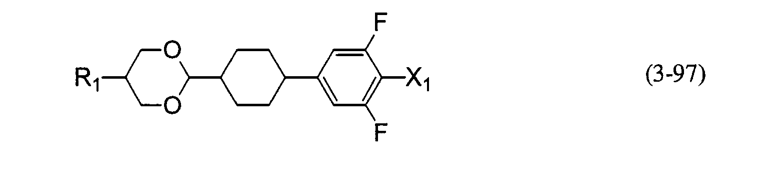 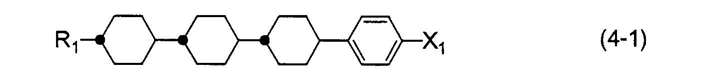 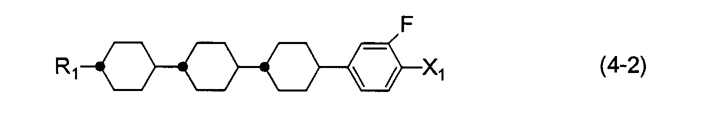 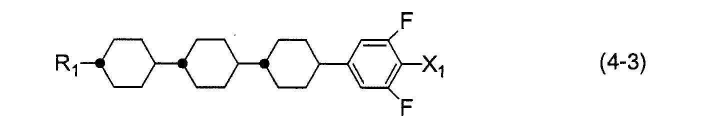 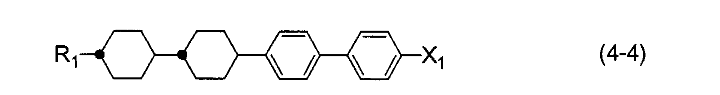 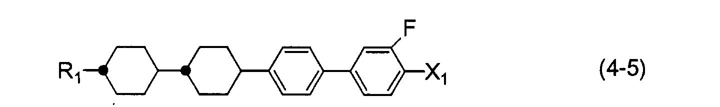 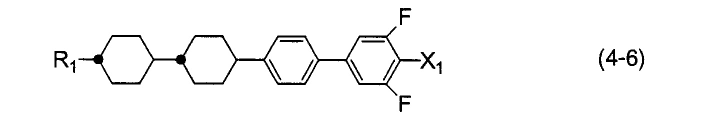 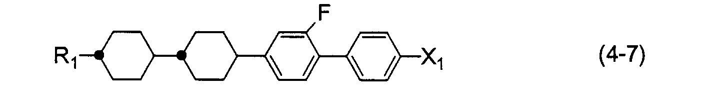 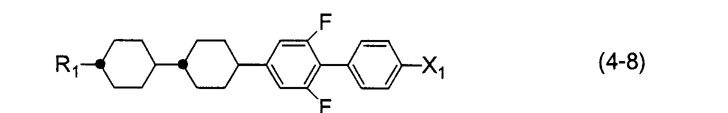 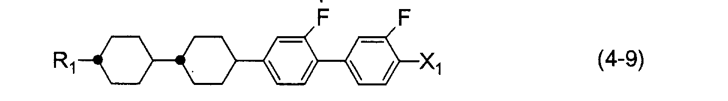 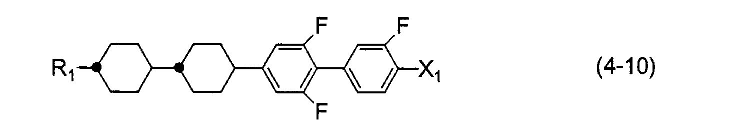 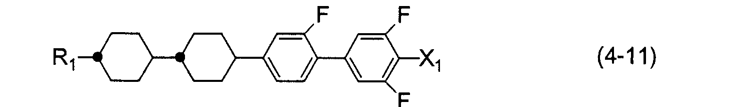 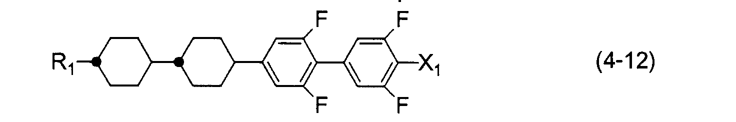 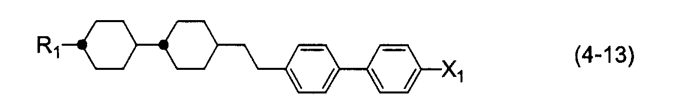 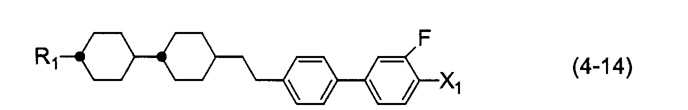 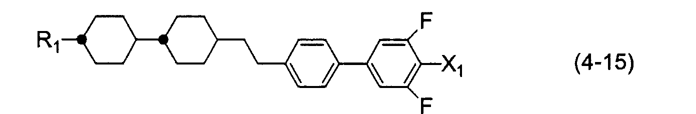 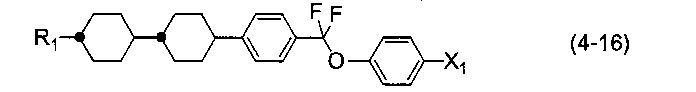 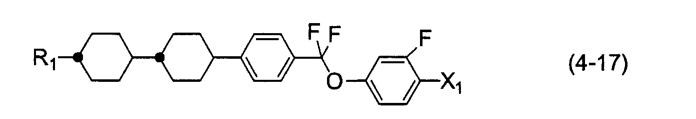 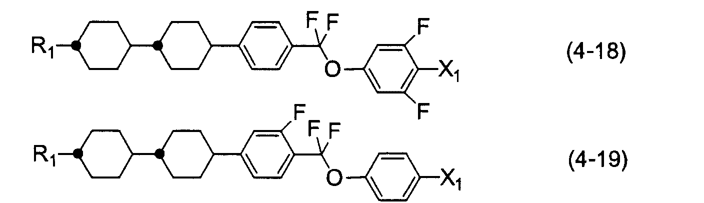 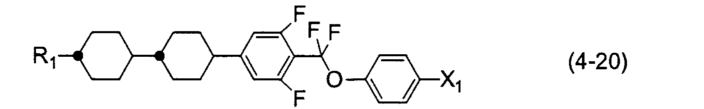 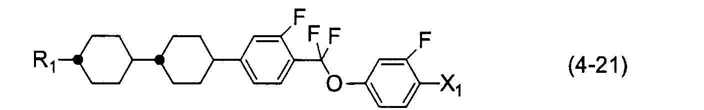 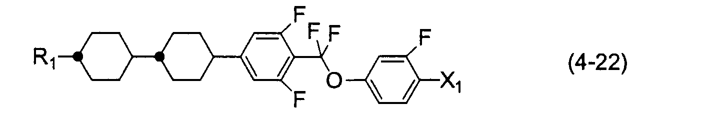 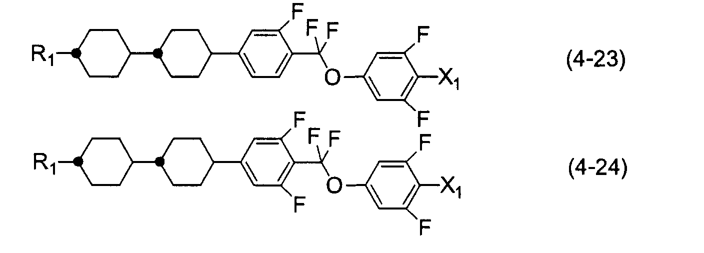 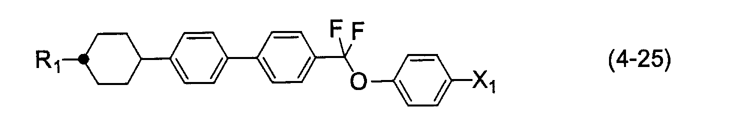 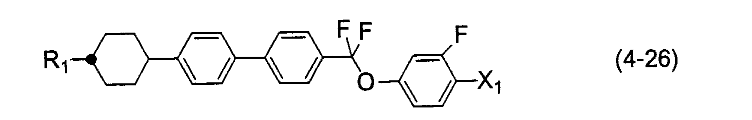 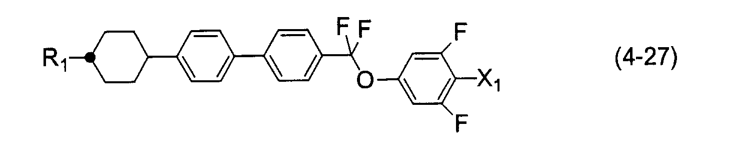 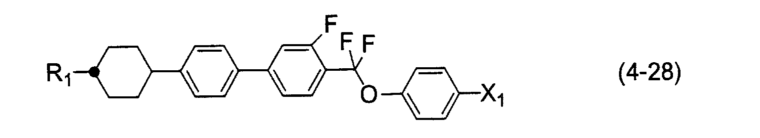 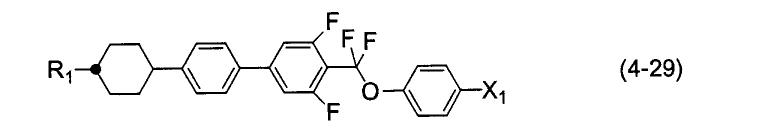 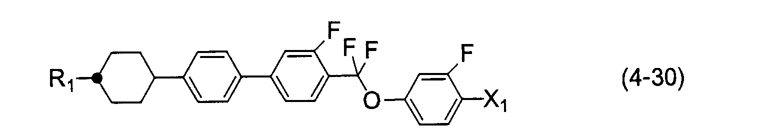 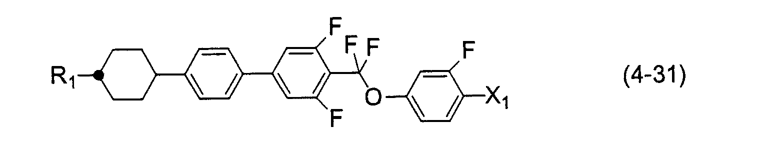 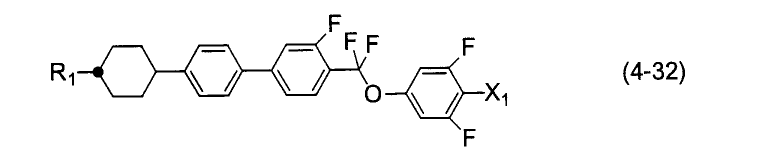 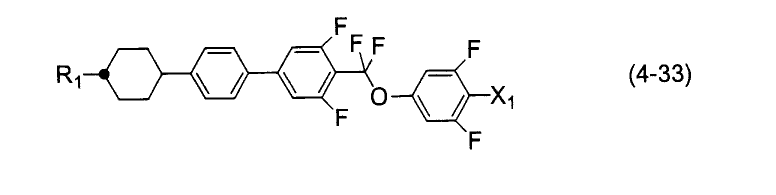 (in the formulas, R₁ and X₁ are the same as above).

The compounds represented by Formulas (2) to (4) show positive dielectric anisotropy and are very excellent in heat stability and chemical stability, so that they are used primarily for a liquid crystal composition for TFT. When preparing a liquid crystal composition for TFT, an amount of the above compounds to be used falls suitably in a range of 1 to 99 % by weight, preferably 10 to 97 % by weight and more preferably 40 to 95 % by weight based on the total weight of the liquid crystal composition. The compounds represented by Formulas (10) to (12) may further be added for the purpose of controlling the viscosity.

Next, in the second B component described above, the compounds of formulas (5-1) to (5-40) and (6-1) to (6-3) can be given as suitable examples of the compounds represented by Formulas (5) to (6). 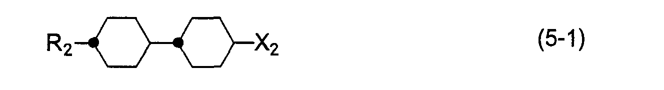 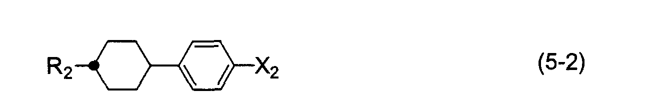 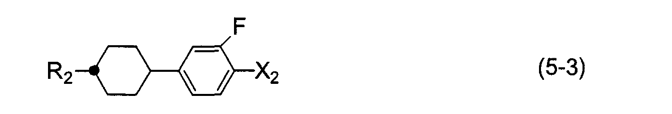 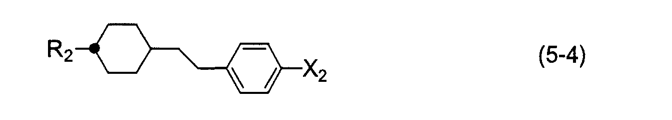 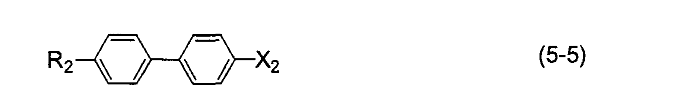 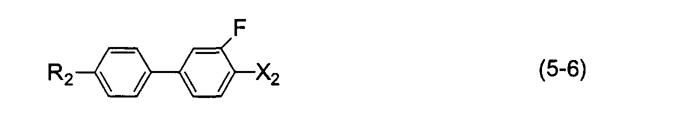 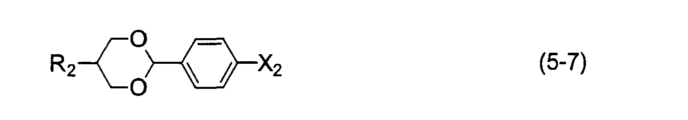 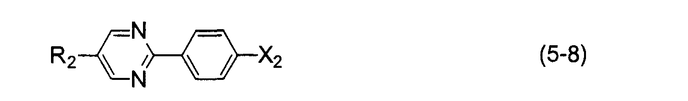 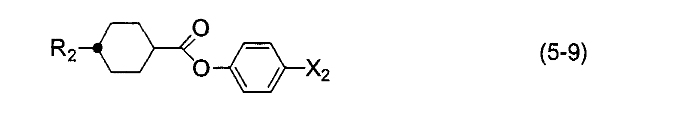 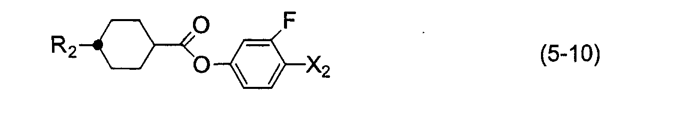 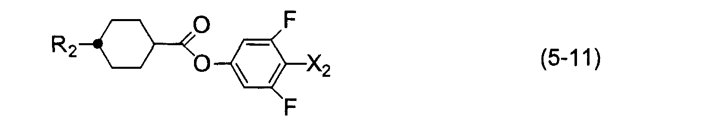 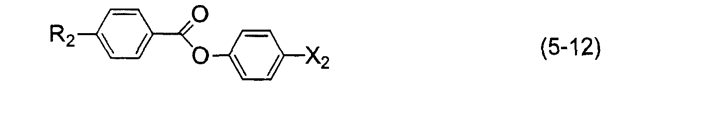 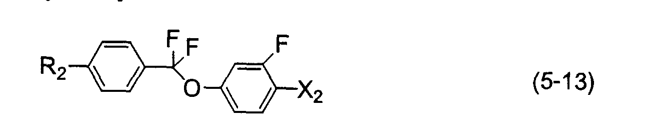 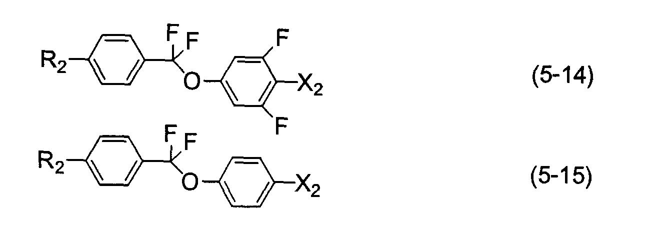 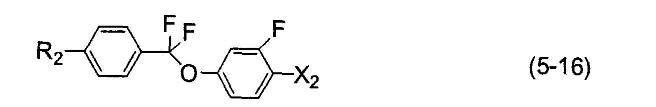 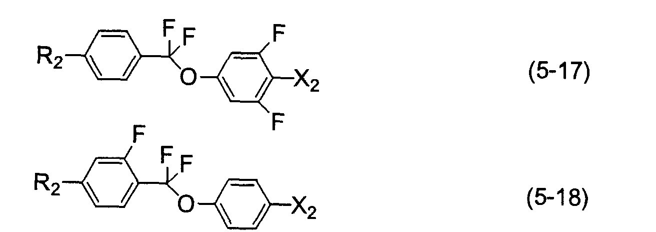 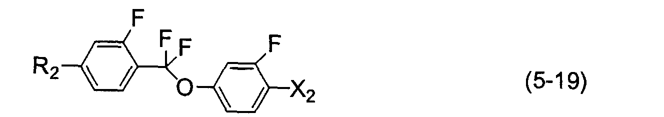 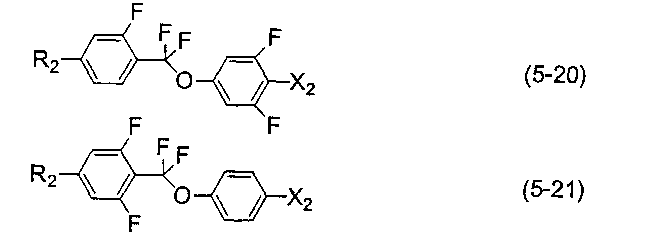 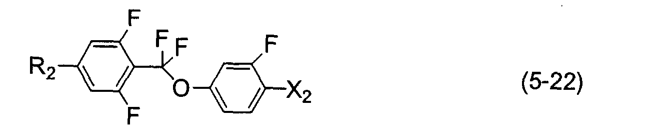 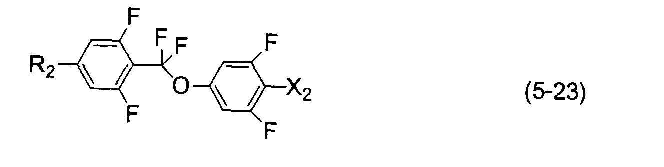 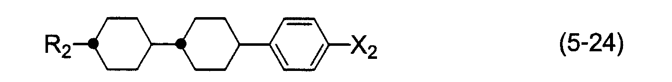 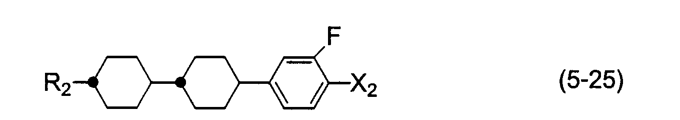 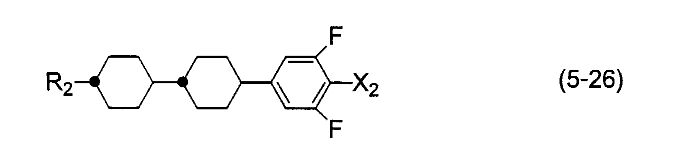 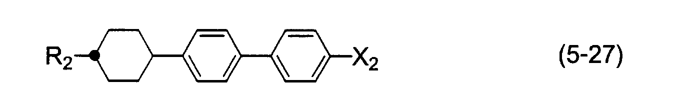 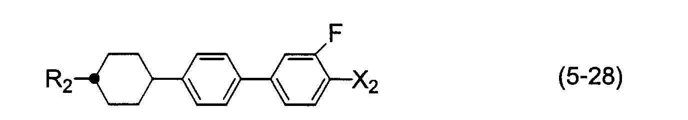 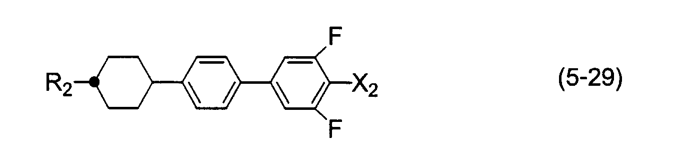 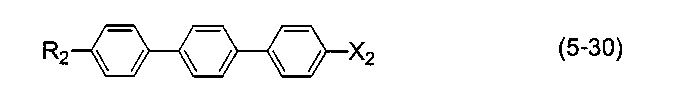 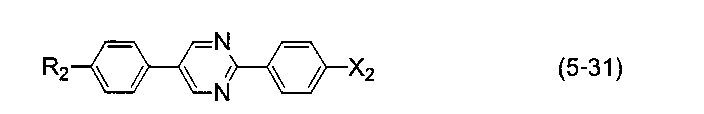 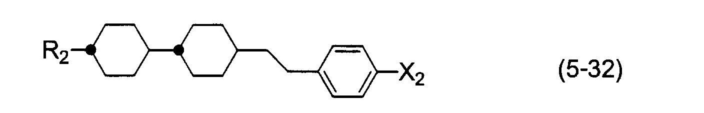 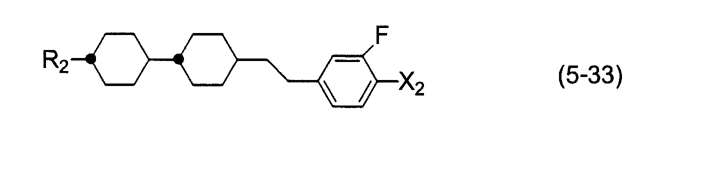 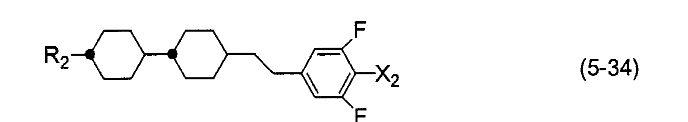 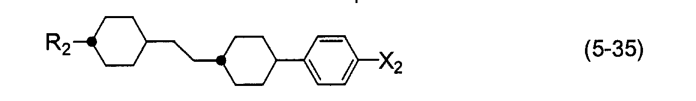 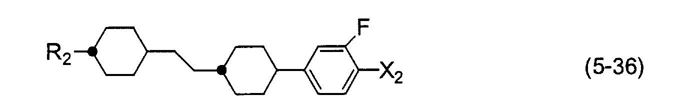 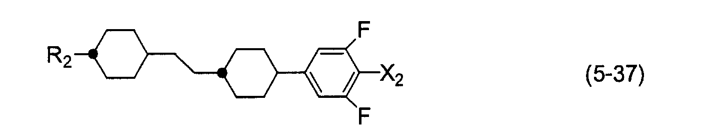 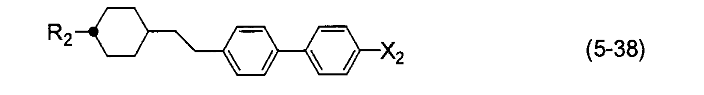 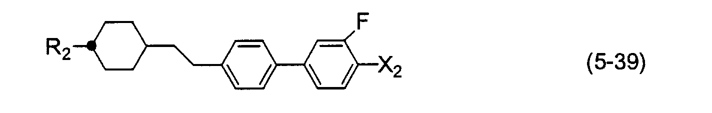 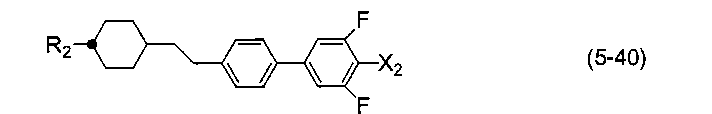 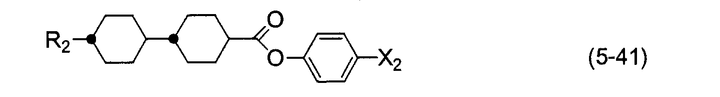 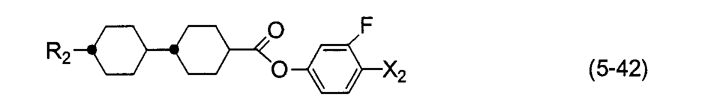 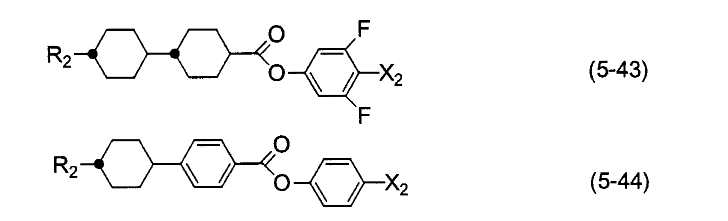 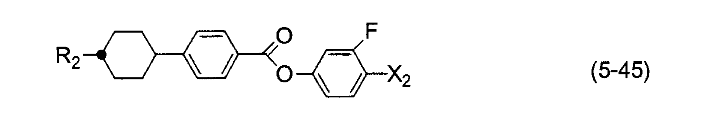 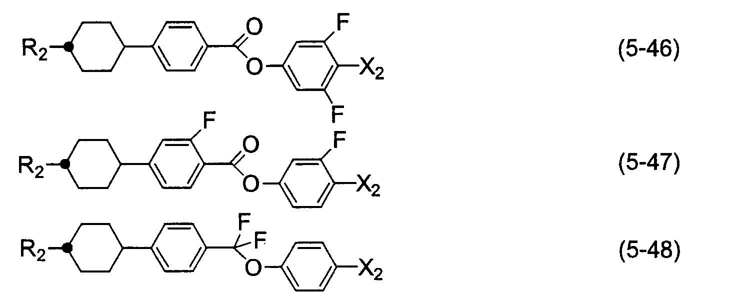 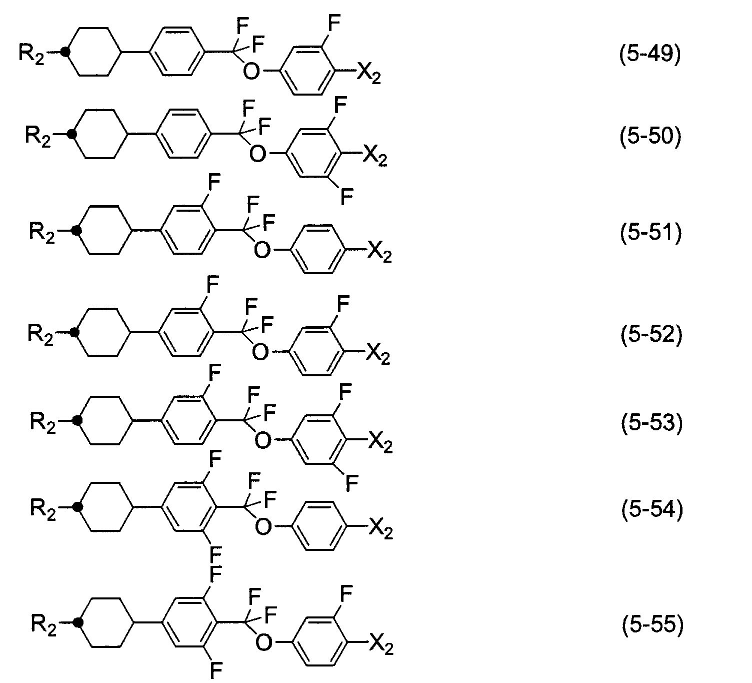 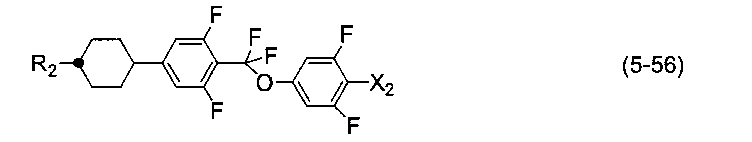 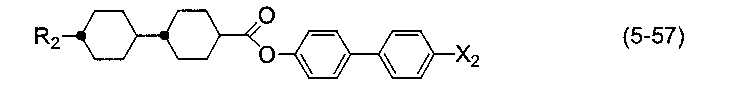 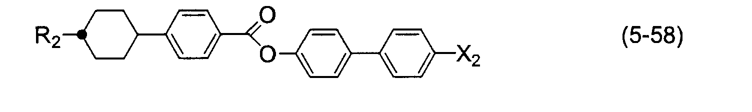 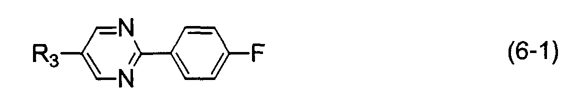 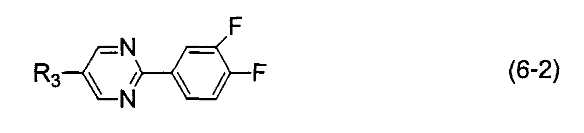 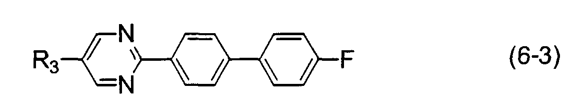 (in the formulas, R₂, R₃ and X₂ are the same as above).

The compounds represented by these Formulas (5) and (6) have positive dielectric anisotropy, and a value thereof is very large, so that they are used mainly for the liquid crystal compositions for STN and TN. These compounds are used as a component particularly for the purpose of reducing a threshold voltage of the compositions. Also, they are used for the purposes of controlling the viscosity and the birefringence and expanding the liquid crystal phase temperature range and also for the purpose of improving the steepness. When preparing the liquid crystal compositions for STN or TN, an amount of the compounds represented by the Formulas (5) and (6) to be used can be applied in a range of 0.1 to 99.9 % by weight, preferably 10 to 97 % by weight and more preferably 50 to 95 % by weight. The third component described later can be mixed for the purpose of controlling the threshold voltage, the liquid crystal phase temperature range, the birefringence, the dielectric anisotropy and the viscosity.

When a liquid crystal composition having negative dielectric anisotropy which is used for a vertical aligning mode (VA mode) is prepared as the liquid crystal composition of the present invention, preferred is the composition mixed with at least one compound (hereinafter referred to as a second C component) selected from the group consisting of the compounds represented by Formulas (7) to (9).

The compounds of formulas (7-1) to (7-3), (8-1) to (8-5) and (9-1) to (9-3) can be given respectively as suitable examples of the compounds represented by Formulas (7) to (9) in the second C component. 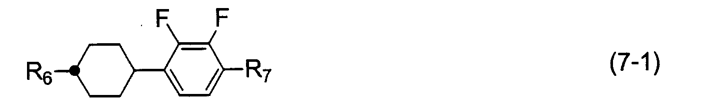 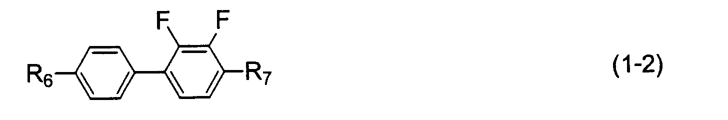 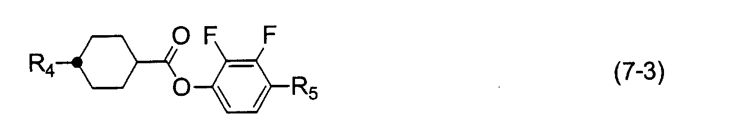 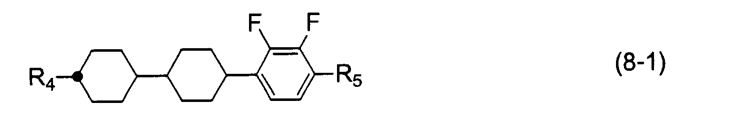 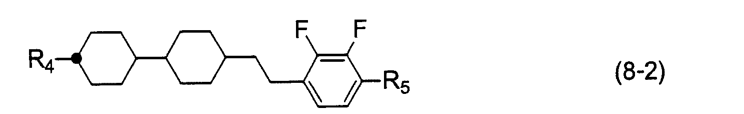 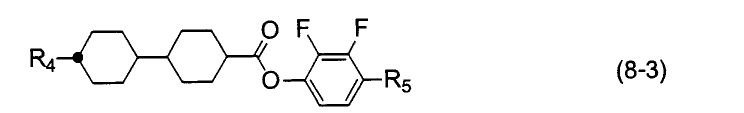 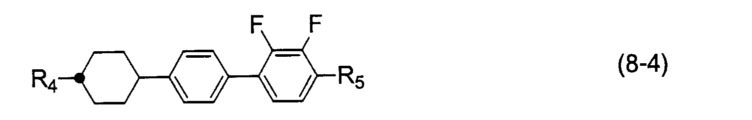 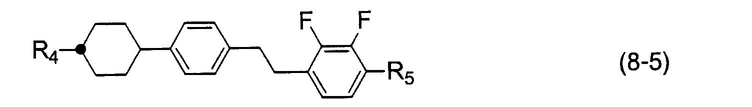 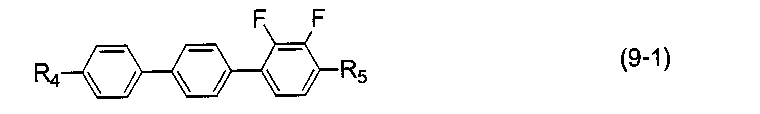 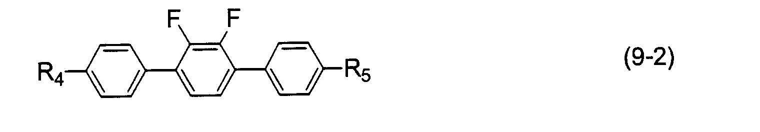 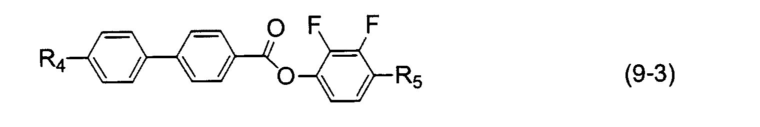 (in the formulas, R₄ and R₅ are the same as above).

The compounds represented by Formulas (7) to (9) are compounds having negative dielectric anisotropy. The compound represented by Formula (7) is a compound having two ring system and therefore is used mainly for the purpose of controlling the threshold voltage, the viscosity or the dielectric anisotropy. The compound represented by Formula (8) is used not only for the purpose of expanding the liquid crystal phase temperature range by virtue of the effect of elevating the clearing point but also for the purpose of reducing the threshold voltage and increasing the dielectric anisotropy.

The compounds represented by Formulas (7) to (9) are used mainly for the liquid crystal composition for a VA mode having negative dielectric anisotropy. If the use amount thereof is allowed to grow large, the composition is reduced in a threshold voltage but increased in viscosity, and therefore it is preferably used in a smaller amount as long as a required value of the threshold voltage is satisfied. However, an absolute value of the dielectric anisotropy is 5 or less, and therefore the amount thereof smaller than 40 % by weight makes it impossible in a certain case to carry out voltage driving. An amount of the compounds represented by Formulas (7) to (9) to be used is preferably 40 % by weight or more, more preferably 50 to 95 % by weight when preparing the composition for a VA mode. Further, the compounds represented by Formulas (7) to (9) are mixed in a certain case with the liquid crystal composition having positive dielectric anisotropy for the purpose of controlling the elastic constant and a voltage transmission curve of the composition. In this case, an amount of the compounds represented by Formulas (7) to (9) to be used is preferably 30 % by weight or less.

Further, the third component described later can be mixed for the purpose of controlling the threshold voltage, the liquid crystal phase temperature range, the birefringence, the dielectric anisotropy and the viscosity.

In the third component for the liquid crystal composition of the present invention, the compounds of formulas (10-1) to (10-11), (11-1) to (11-12) and (12-1) to (12-6) can be given respectively as suitable examples of the compounds represented by Formulas (10) to (12). 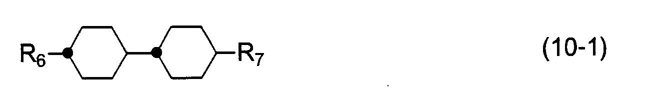 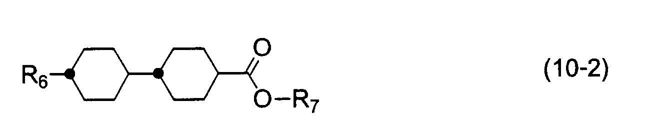 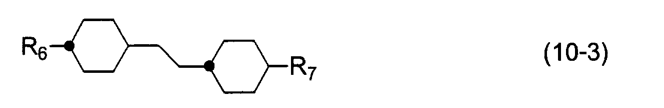 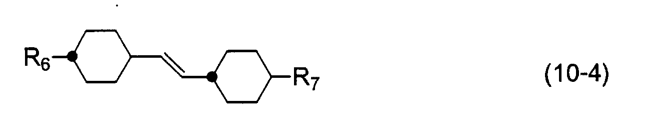 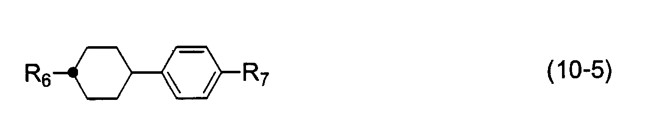 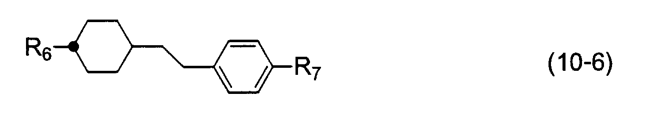 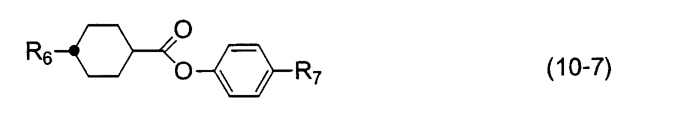 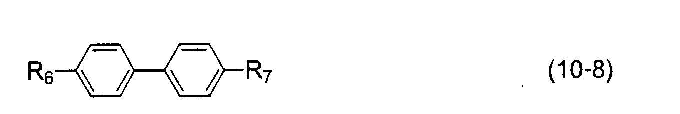 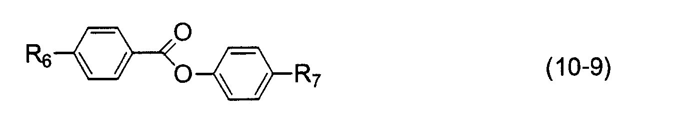 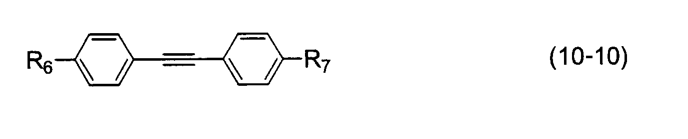 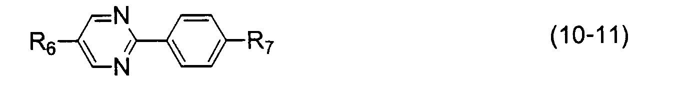 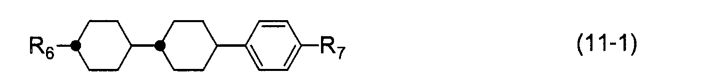 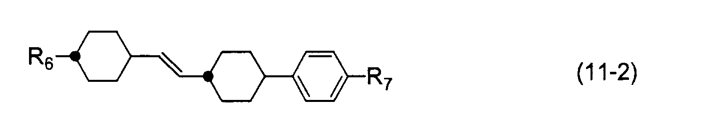 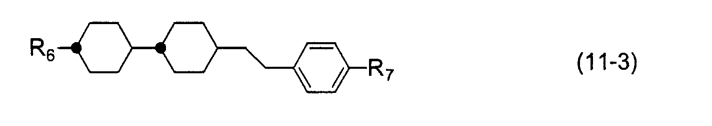 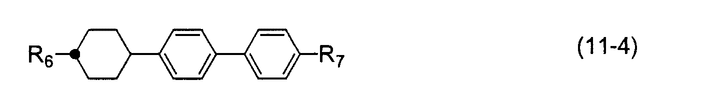 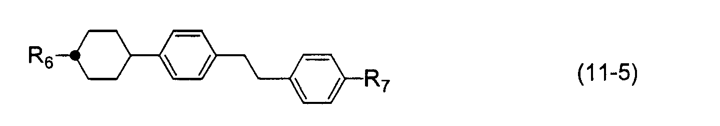 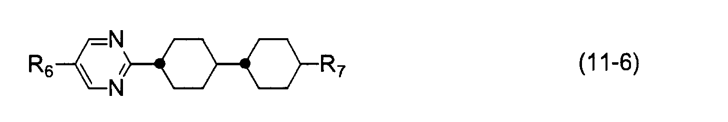 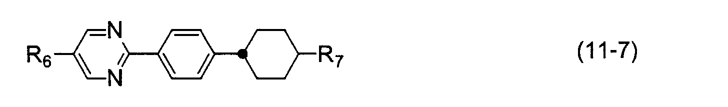 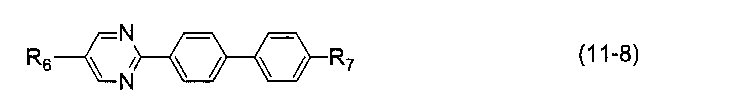 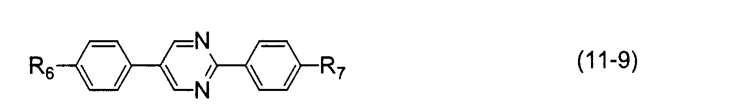 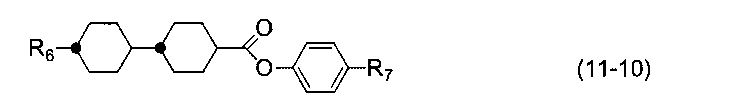 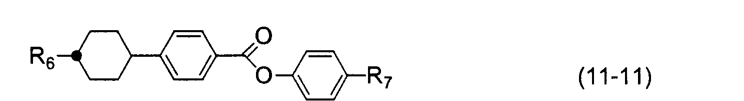 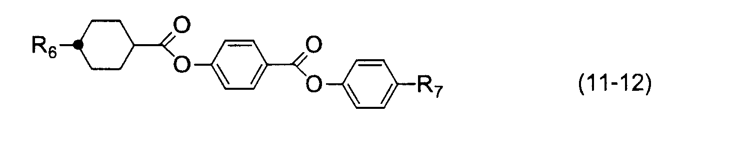 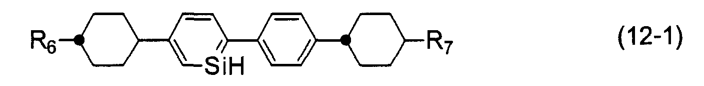 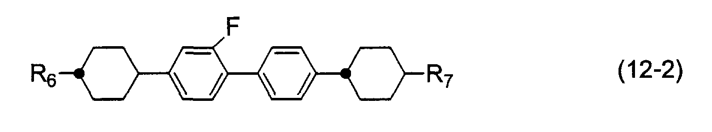 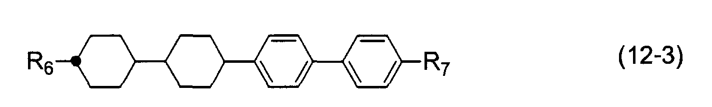 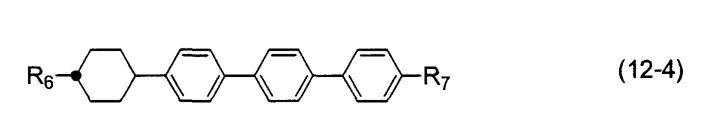 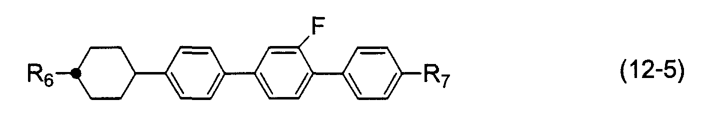 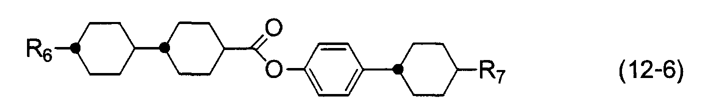 (in the formulas, R₆ and R₇ are the same as above).

The compounds represented by Formulas (10) to (12) are compounds which have a small absolute value of dielectric anisotropy and which are close to neutrality. The compound represented by Formula (10) is used mainly for the purpose of controlling the viscosity or the dielectric anisotropy. Further, the compounds represented by Formulas (11) and (12) are used for the purpose of broadening the liquid crystal phase temperature range by virtue of an effect for elevating the clearing point or the purpose of controlling the dielectric anisotropy.

If an amount of the compounds represented by the Formulas (10) to (12) to be used is increased, the liquid crystal composition is elevated in a threshold voltage and reduced in viscosity, and therefore it is used preferably in a large amount as long as a required value of a threshold voltage of the liquid crystal composition is satisfied. When preparing the liquid crystal composition for TFT, an amount of the compounds represented by Formulas (10) to (12) to be used is preferably 40 % by weight or less, more preferably 35 % by weight or less. Further, when preparing the liquid crystal composition for STN or TN, an amount of the compounds represented by Formulas (10) to (12) to be used is preferably 70 % by weight or less, more preferably 60 % by weight or less.

The liquid crystal composition provided according to the present invention preferably contains at least one of the liquid crystalline compounds represented by Formula (1) in a proportion of 0.1 to 99 % by weight in order to allow excellent characteristics to be revealed.

The above liquid crystal composition is usually prepared by a publicly known method, for example, a method in which various components are dissolved at high temperatures. Further, suitable additives are added if necessary, whereby the liquid crystal composition is improved according to intended uses and is optimized. Such additives are well known by a person averagely skilled in the art and described in detail in literatures. Usually, added is a chiral dopant having an effect of inducing a helical structure of liquid crystal to control a required twist angle and prevent reverse twist. The following optically active compounds can be given as examples of the chiral dopant used in this case.

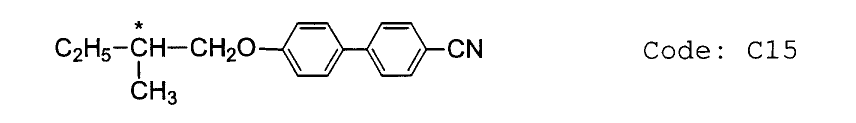

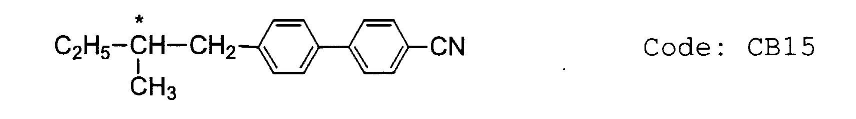

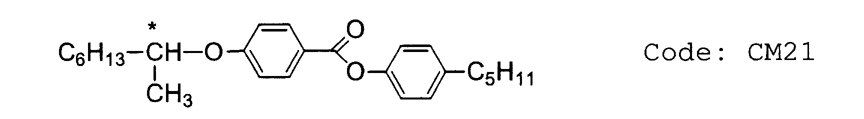

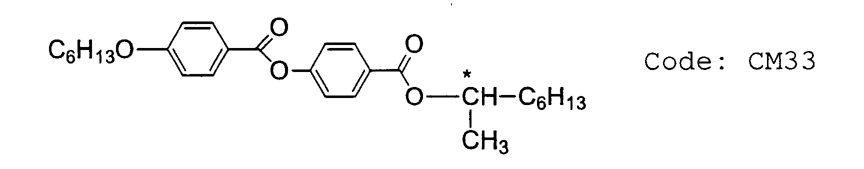

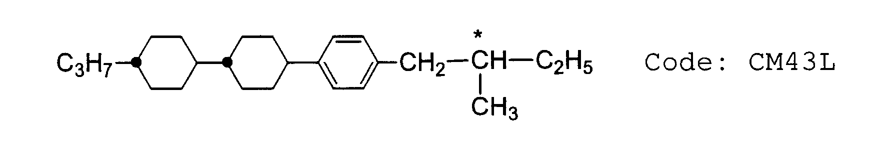

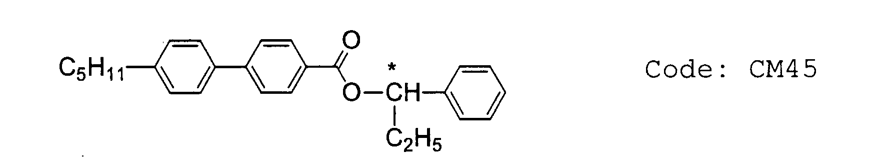

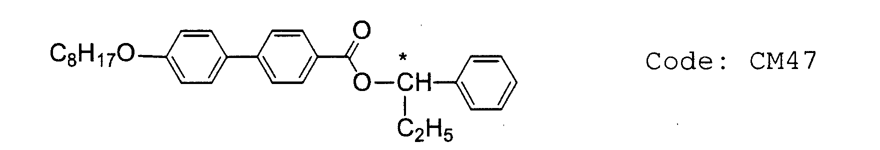

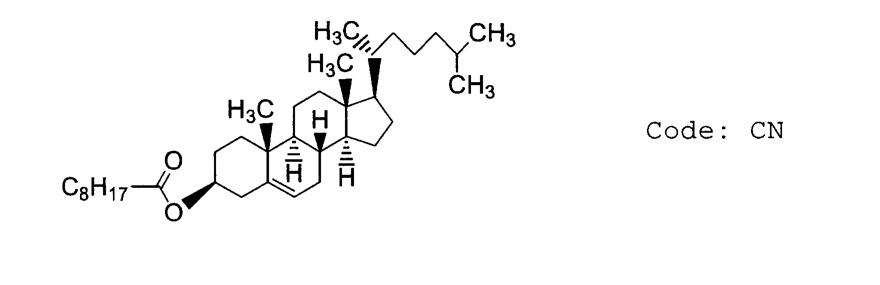

Usually, in the liquid crystal composition of the present invention, these optically active compounds are added to control a helical pitch. The helical pitch is preferably controlled in a range of 40 to 200 *µ*m in the case of the liquid crystal compositions for TFT and TN. In the case of the liquid crystal composition for STN, it is preferably controlled in a range of 6 to 20 *µ* m. Further, in the case of the liquid crystal composition for a bistable TN mode, it is preferably controlled in a range of 1.5 to 4 *µ*m. Two or more kinds of the optically active compounds may be added for the purpose of controlling a temperature dependency of the pitch.

The liquid crystal composition of the present invention can also be used as a liquid crystal composition for a GH mode by adding a dichromatic dye such as a merocyanine base, a styryl base, an azo base, an azomethine base, an azoxy base, a quinophthalone base, an anthraquinone base or a tetrazine base. Further, the liquid crystal composition of the present invention can also be used as a liquid crystal composition for a birefringence-controlling (ECB) mode and a DS mode as well as NCAP prepared by micro-capsulating nematic liquid crystal and a polymer dispersion mode liquid crystal display (PDLCD) prepared by forming a three-dimensional network polymer in the liquid crystal, for example, a polymer network liquid crystal display (PNLCD).

### EXAMPLES

The present invention shall be explained below in more details with reference to examples. In the respective examples, C shows crystal; S_{A} shows a smectic A phase; S_{B} shows a smectic B phase; S_{X} shows a smectic phase the structure of which is not yet analyzed; N shows a nematic phase; I shows an isotropic phase; and a unit of a phase transition temperature is °C in all examples.

### Example 1

Production of 4-(trans-4-methylsilylmethylclohexyl)-2,3-difluoroethoxybenzene {compound (No. E1) of Formula (1), wherein R is ethoxy; A is 2,3-difluorophenylene; Z¹ is a single bond; A¹ is trans-1,4-clohexylene; m1 = 1, m2 = m3 = 0; G is methylene; and R' is methyl}

Dissolved in toluene were 4-(2,3-difluoro-4-ethoxyphenyl)methylidenecyclohexane (23.4 mmol) and dichloromethylsilane (4.4 ml), and chloroplatinic acid hexahydrate (1 mg) was added thereto, followed by stirring the solution at a room temperature for 40 hours. Lithium aluminum hydride (1 g) was added to the reaction solution, and stirring was further continued for 2 hours. After stirring, water (50 ml) was added to the reaction solution, and a solution obtained by filtering undissolved matters from the resulting mixture by means of celite was extracted with heptane. The extract was washed with water and then dried under reduced pressure to obtain a pale yellow oil. This was refined by means of column chromatography into which silica gel was charged, and the resulting colorless oily matter was recrystallized from ethanol to obtain the captioned compound. This compound had a phase transition temperature of C 37.4 to 38.4 I.

### Example 2

Production of 2,3-difluoro-4-(4-(trans-4-(trans-4-propylcyclohexyl)cyclohexyl)methyloxyphenylethyldihydrosilane {compound (No. E2) of Formula (1), wherein R is propyl; A is trans-1,4-cyclohexylene; Z¹ is a single bond; A¹ is trans-1,4-clohexylene; Z² is methyleneoxy; A² is 2,3-difluoro-1,4-phenylene; m1 = m2 = 1, m3 = 0; G is a single bond; and R' is ethyl}

THF was added to magnesium, and dropwise added thereto was a THF solution of 2,3-difluoro-4-(trans-4-(trans-4-propylcyclohexyl)cyclohexyl)methyloxybromobenzene. The reaction solution was stirred at room temperature for 2 hours and then dropwise added to a THF solution of ethyltrimethoxysilane, followed by stirring it for further 4 hours. The reaction solution was cooled to room temperature, and then lithium aluminum hydride was added little by little. After finishing addition, the reaction solution was further stirred for 3 hours and then put into water. This was extracted with toluene, and the extract was dried and then concentrated under reduced pressure to obtain a yellow oily matter. The resulting oily matter was isolated and refined by means of silica gel chromatography to obtained the captioned compound. This compound had a phase transition temperature of C 70.1 to 70.7 S_{B} 79.0 to 79.5 N 96.3 to 96.6 I.

The following compounds (No. 1 to No. 200) were produced according to methods similar to those used in Examples 1 and 2.

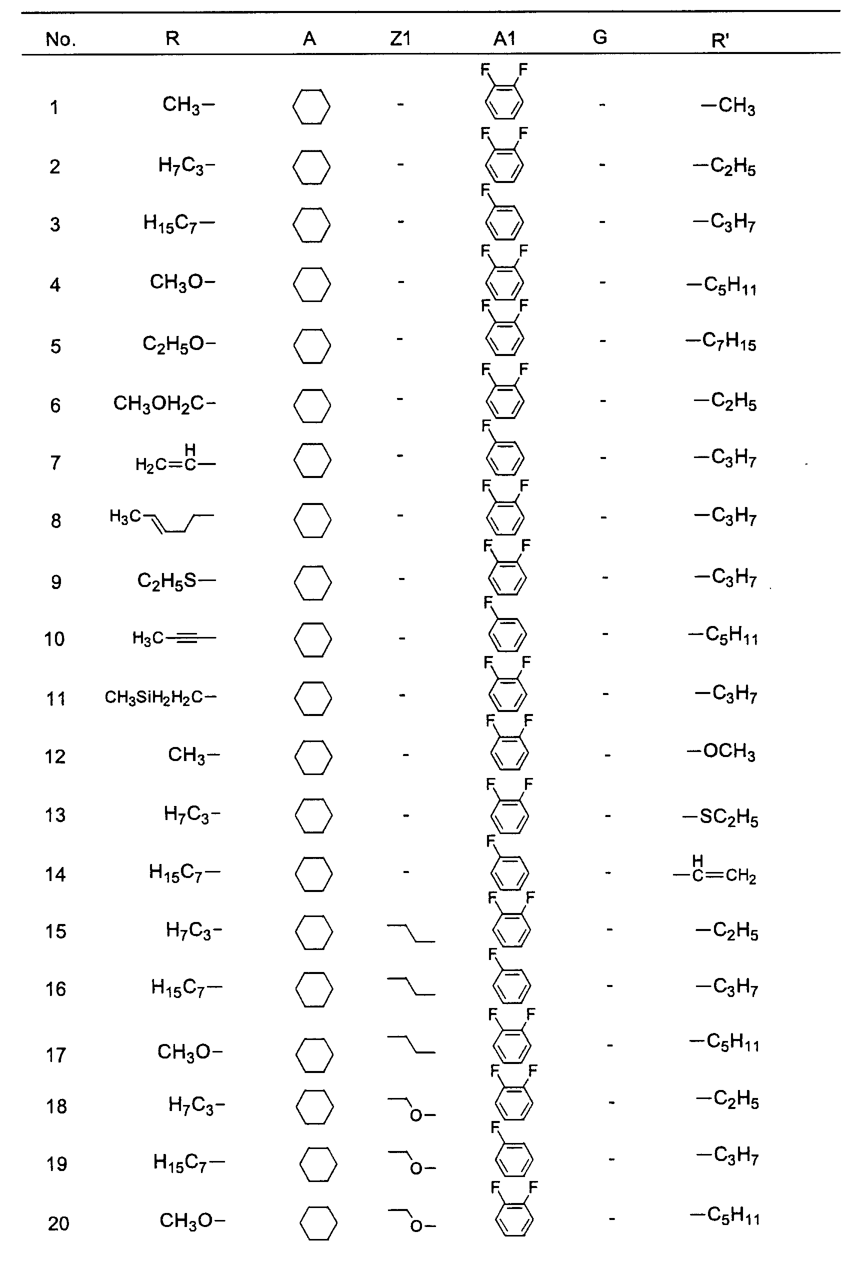

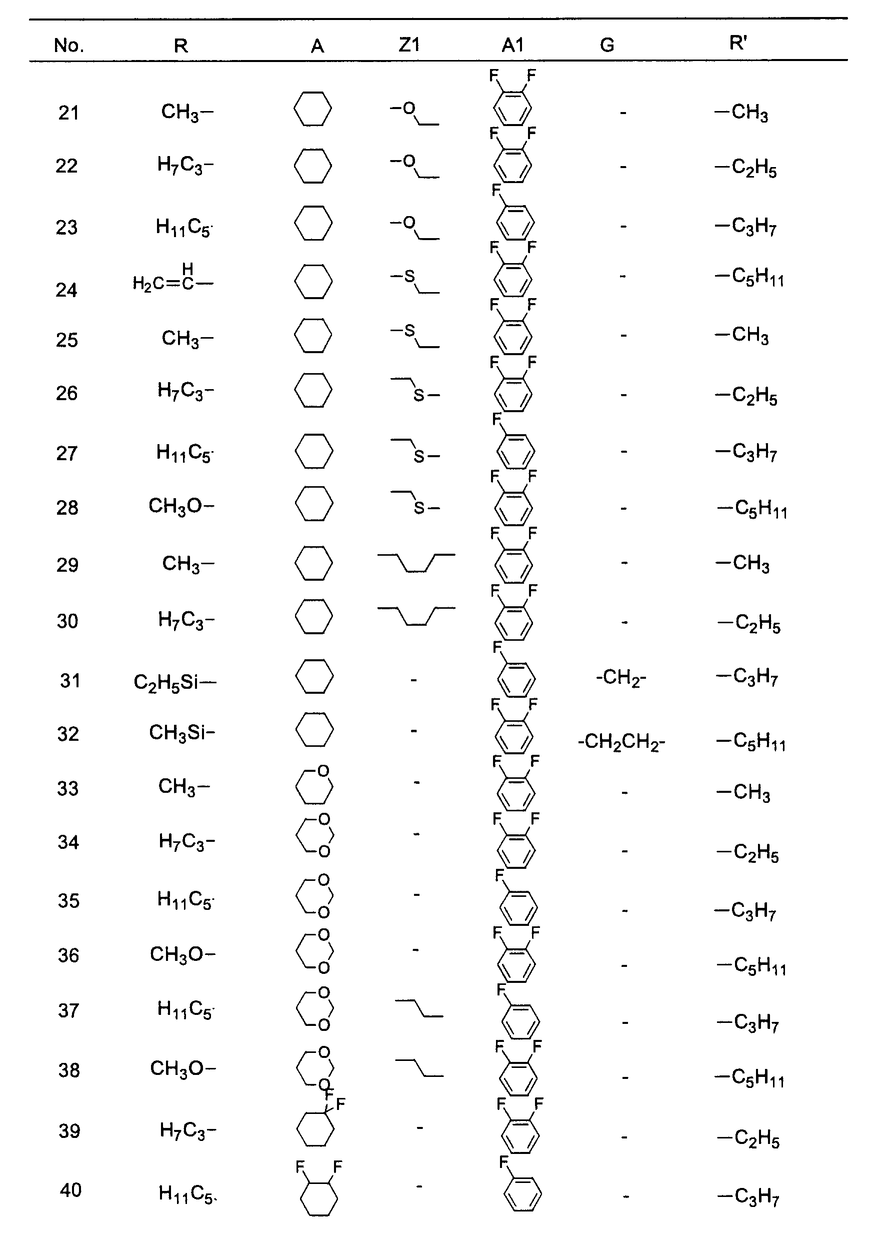

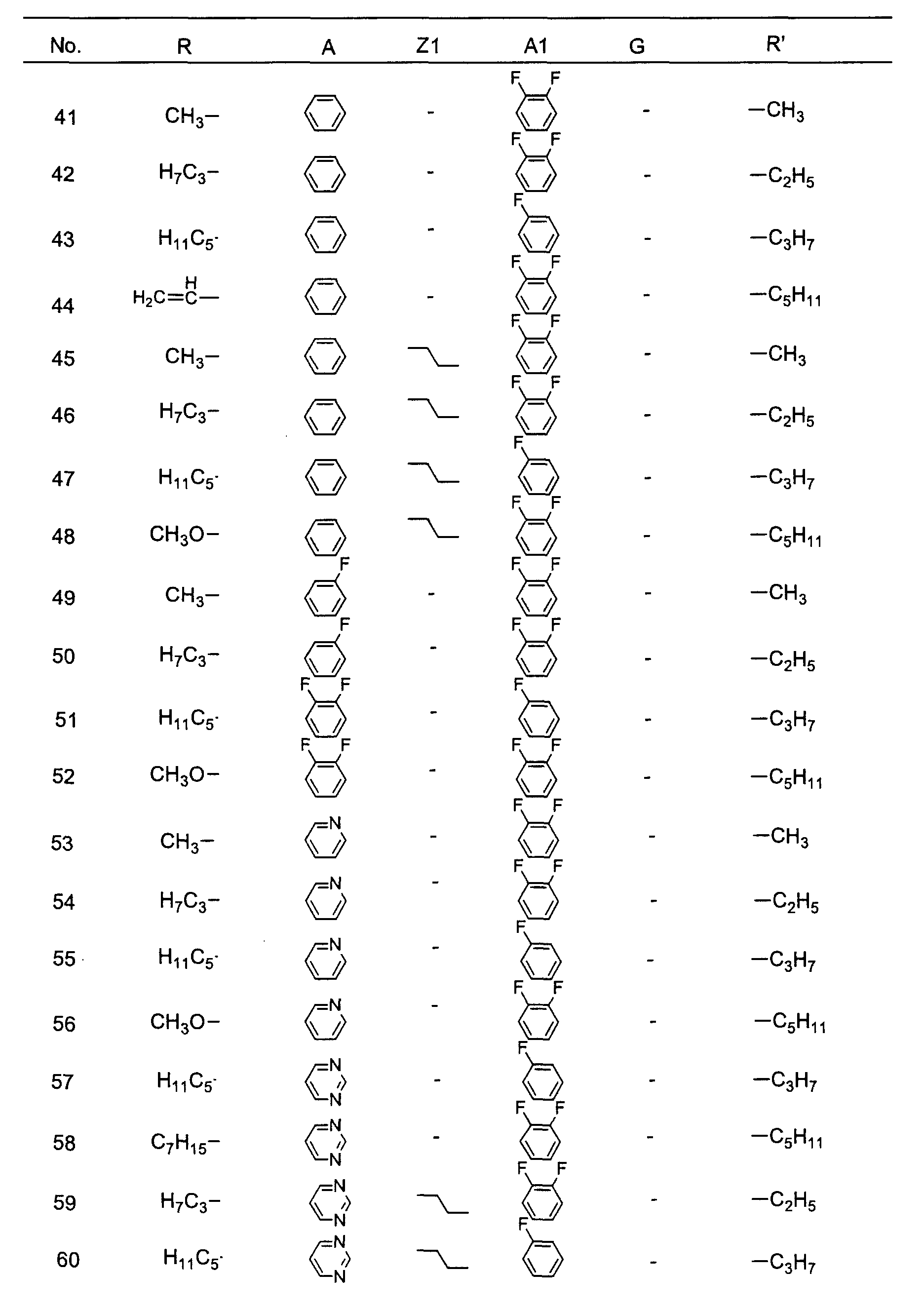

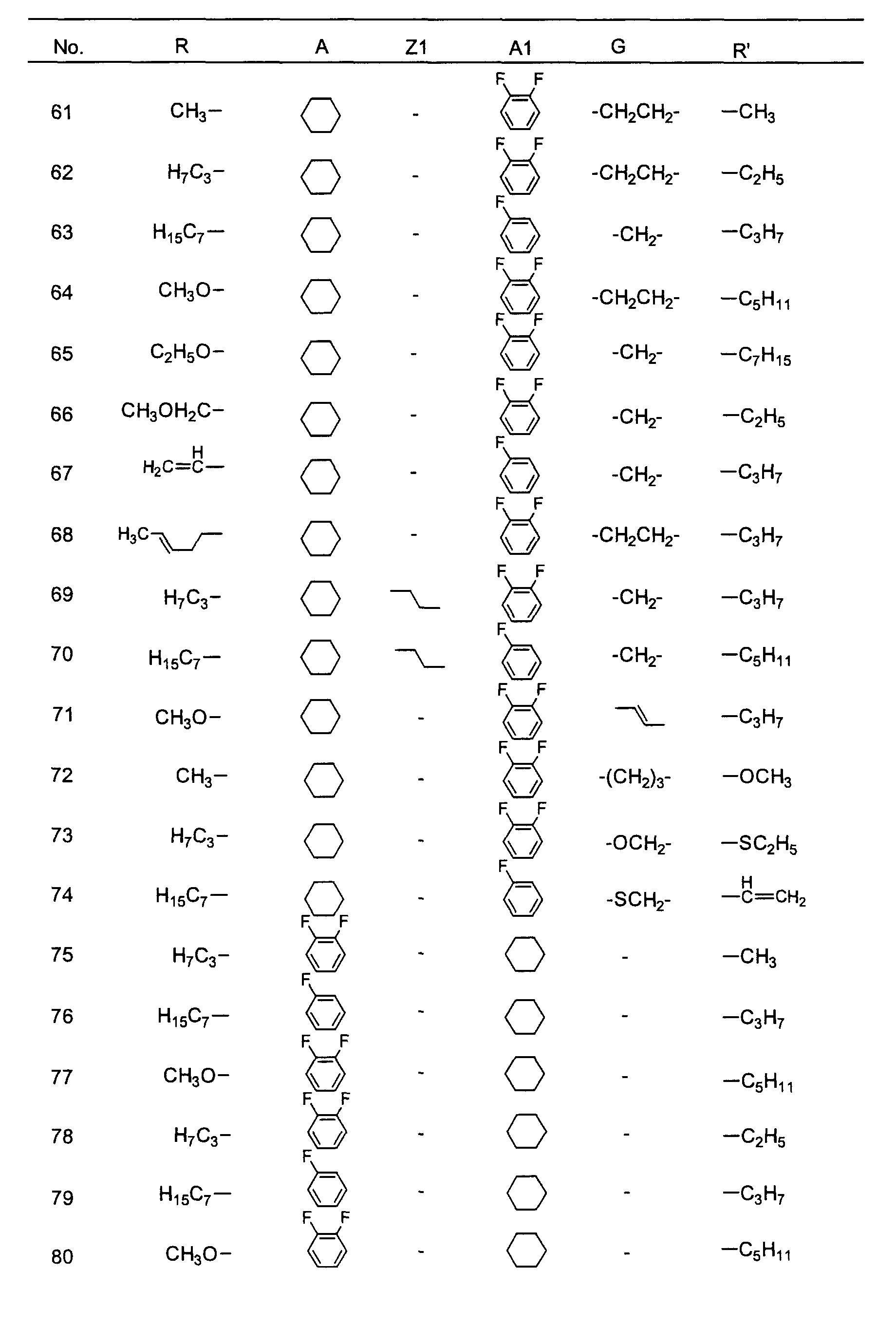

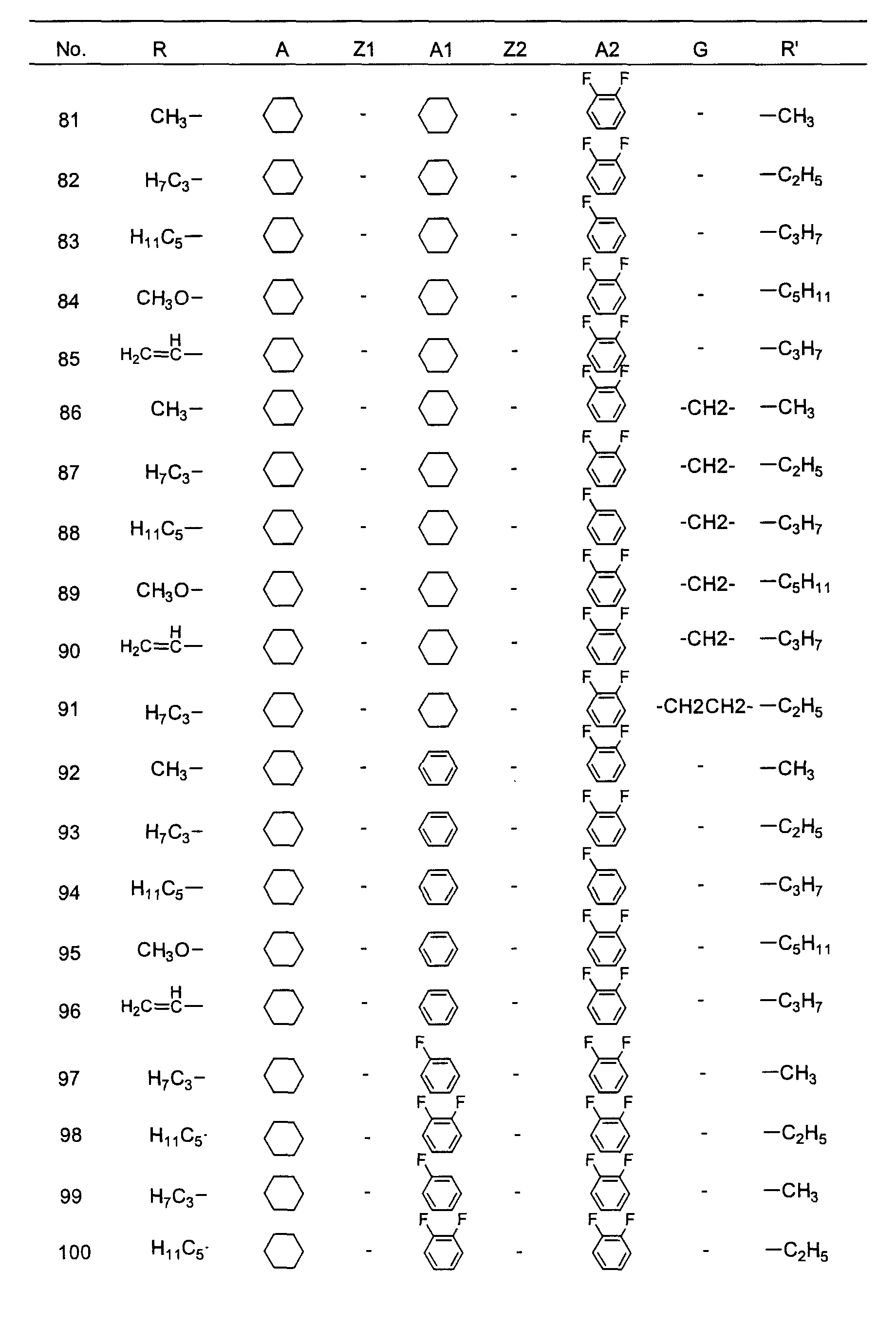

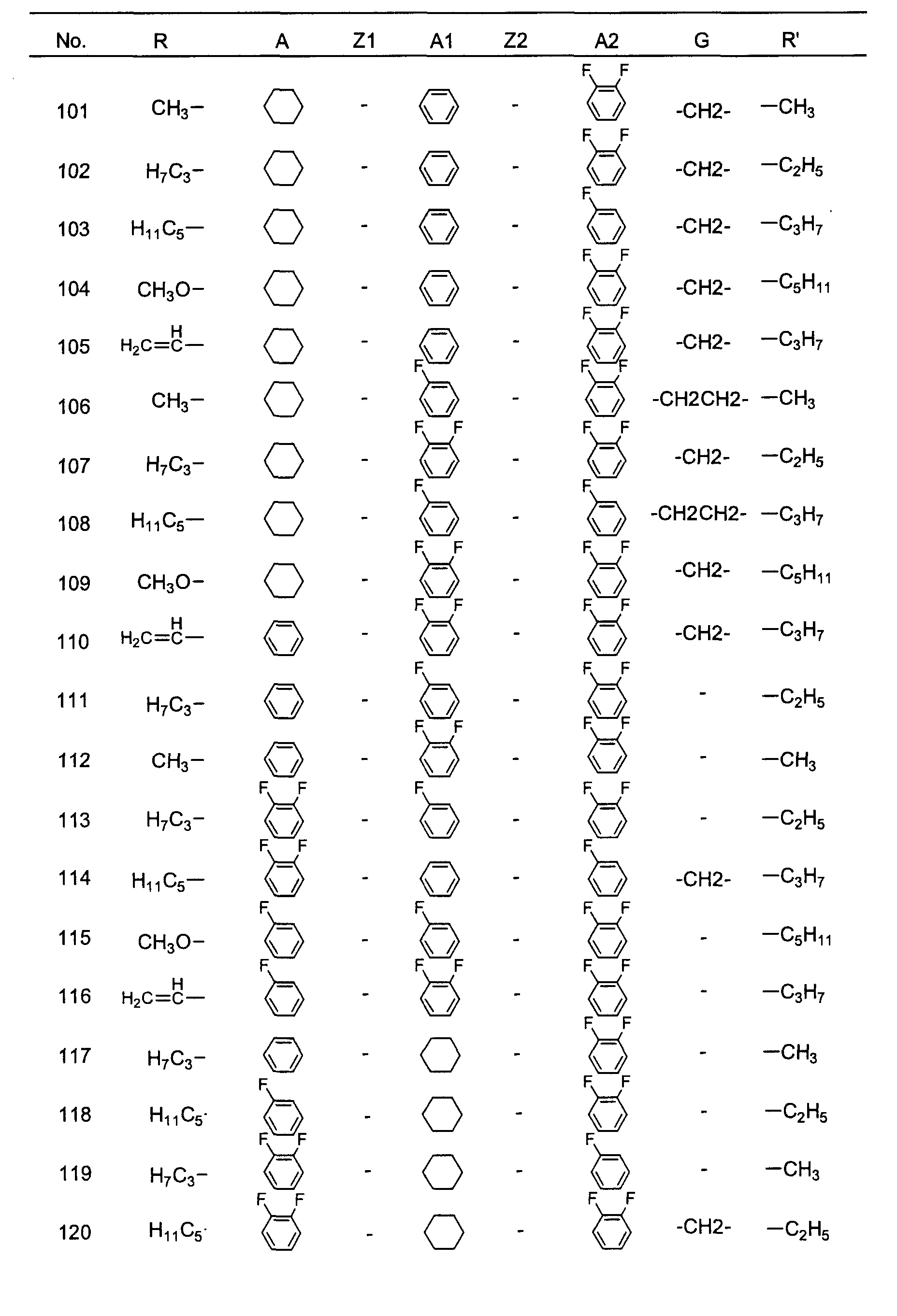

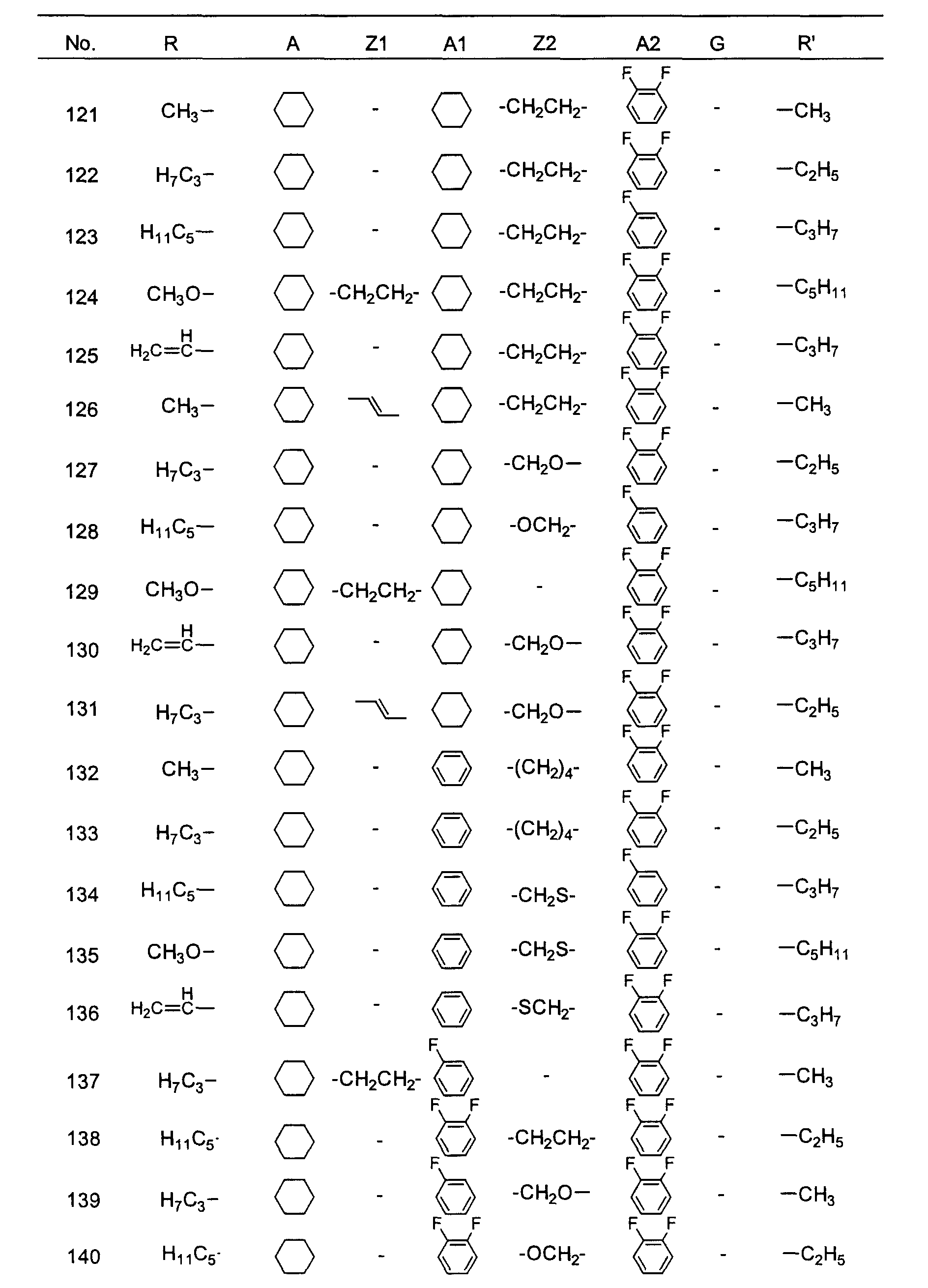

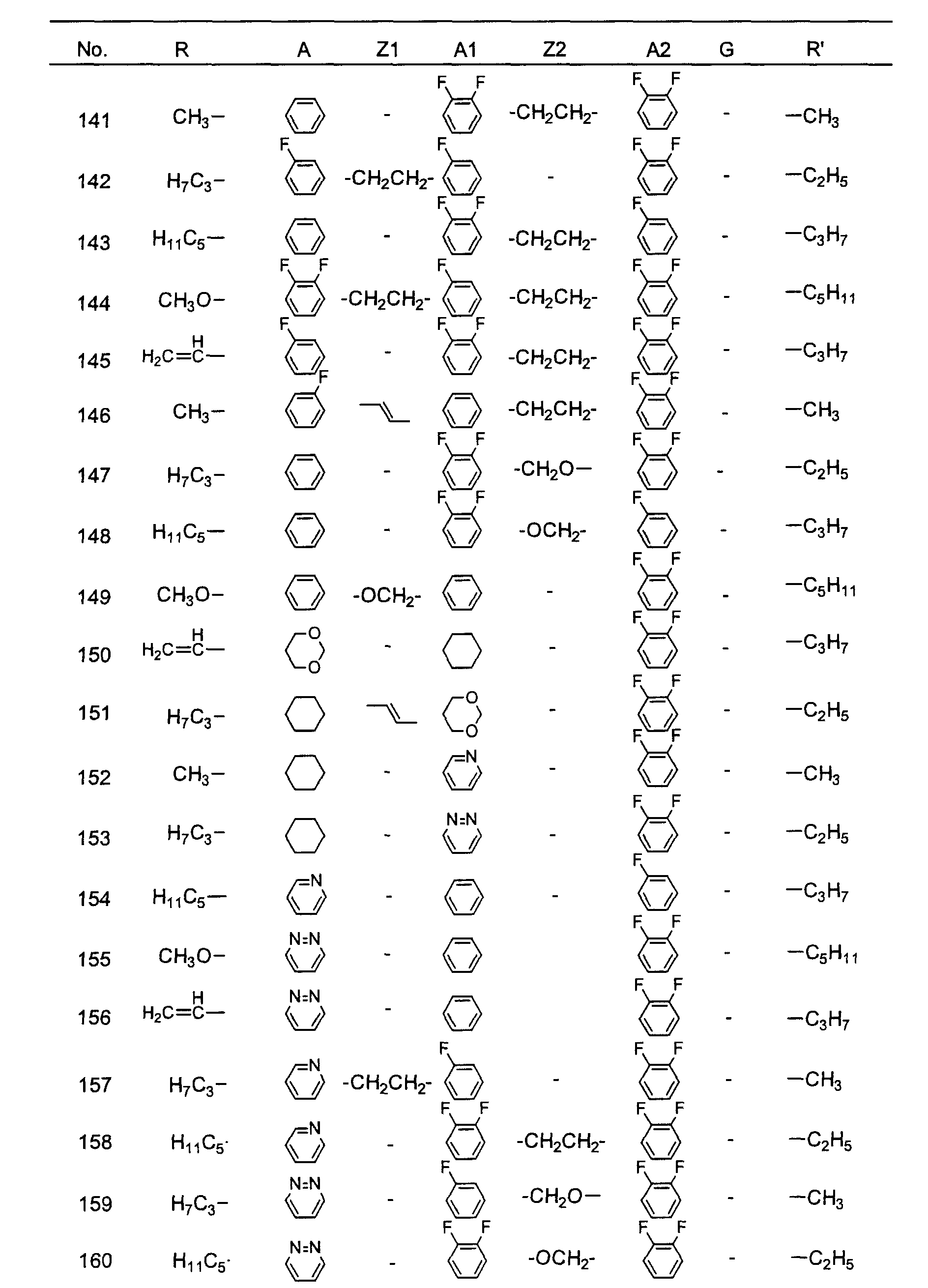

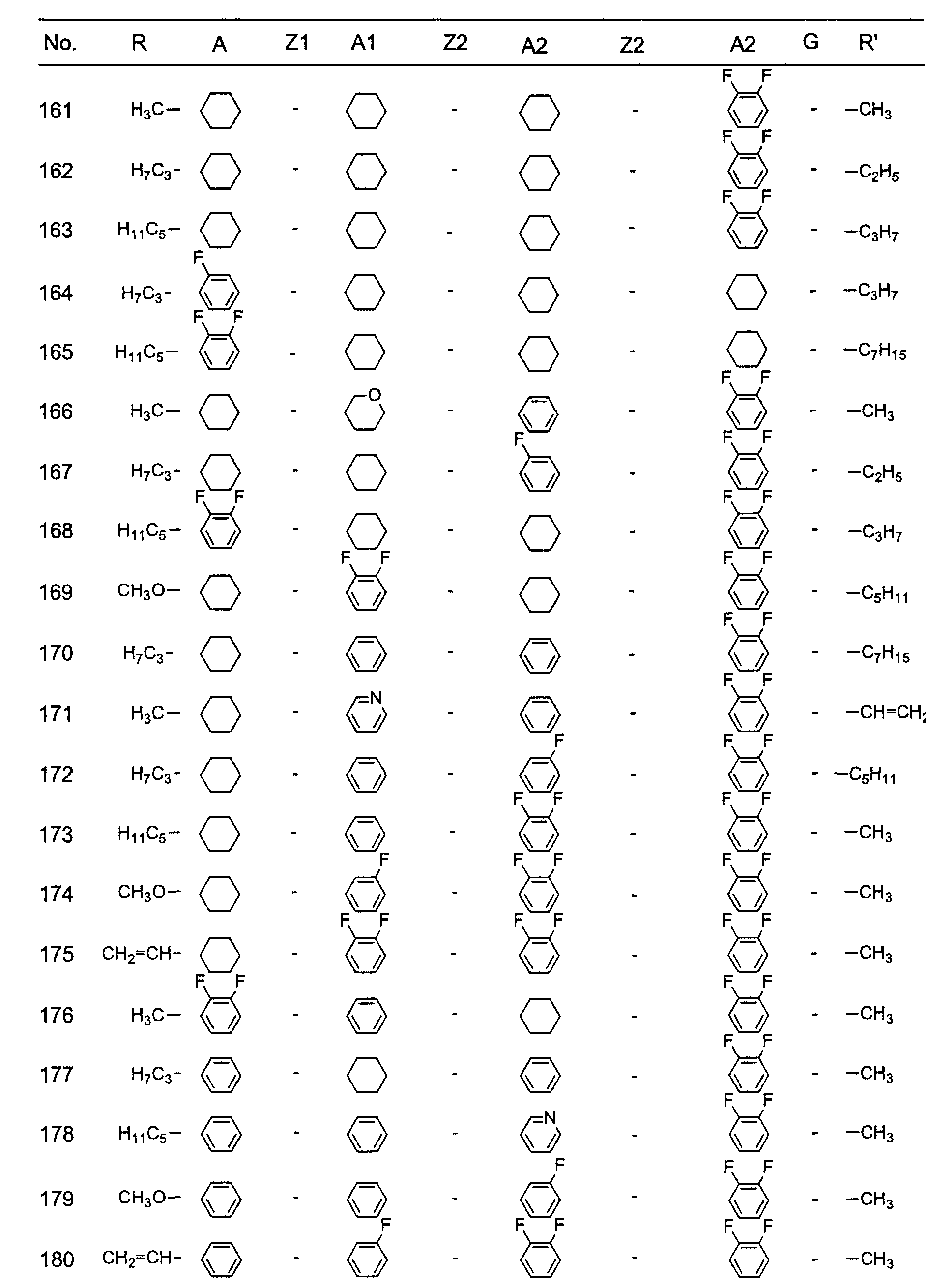

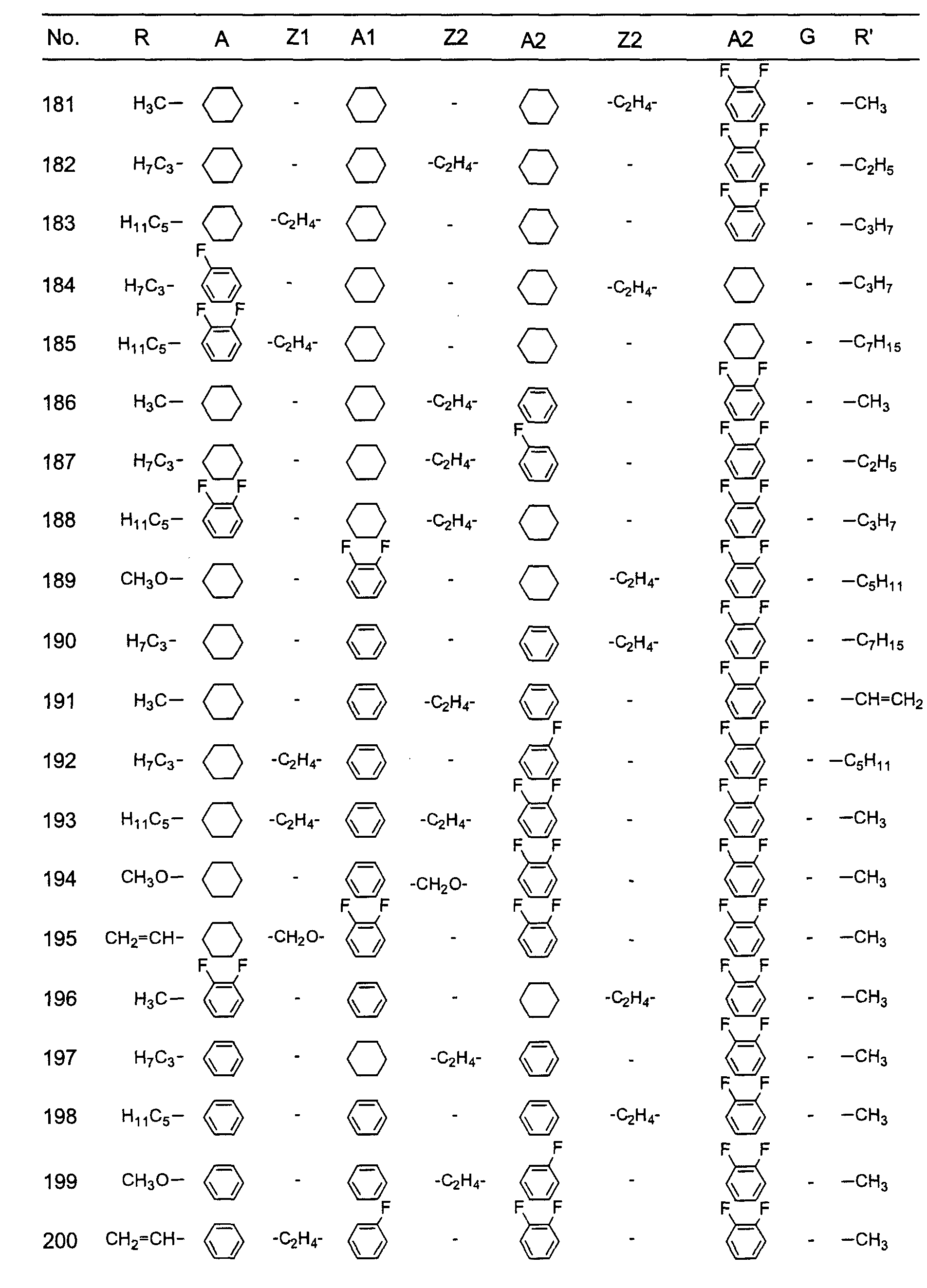

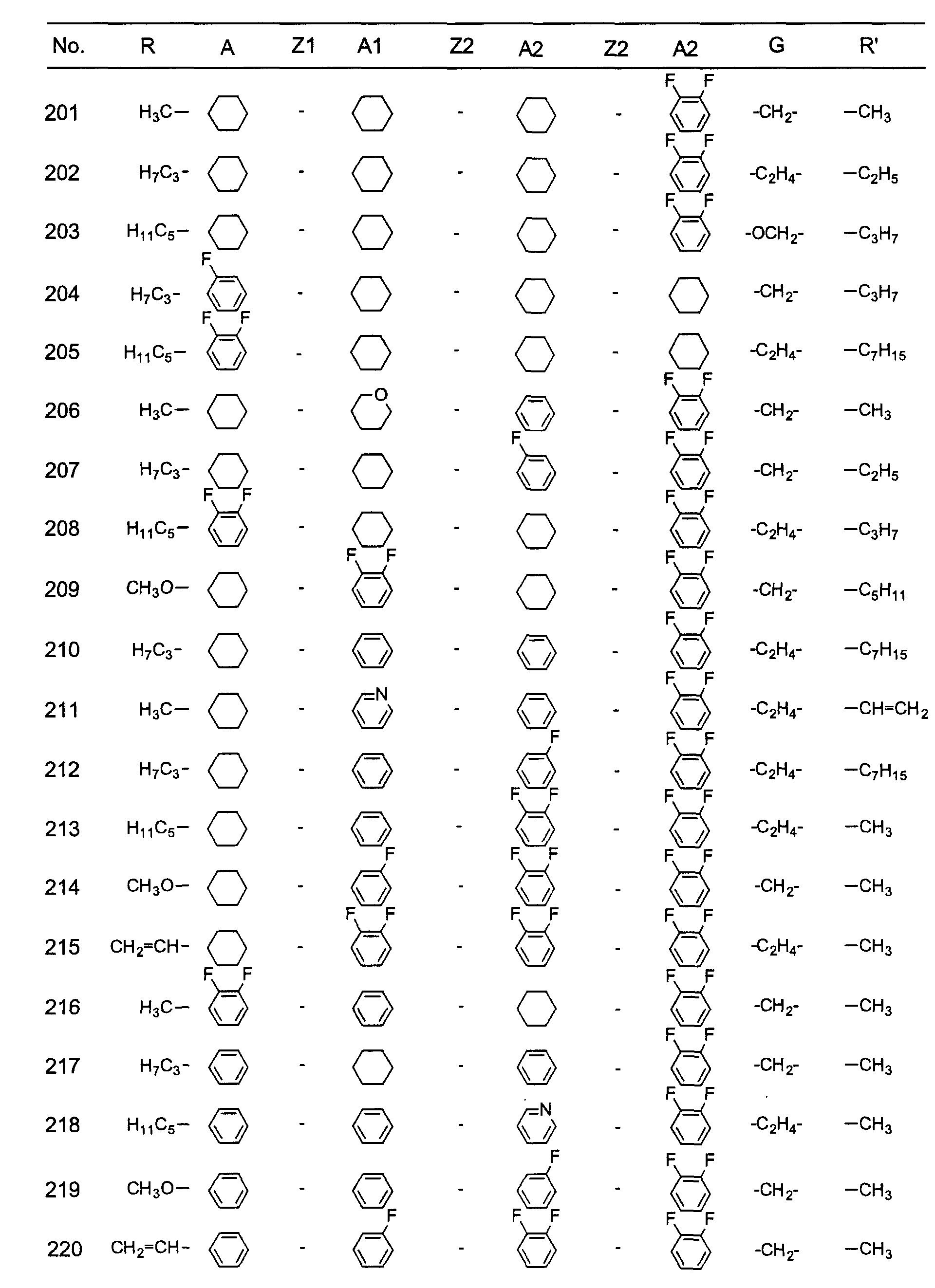

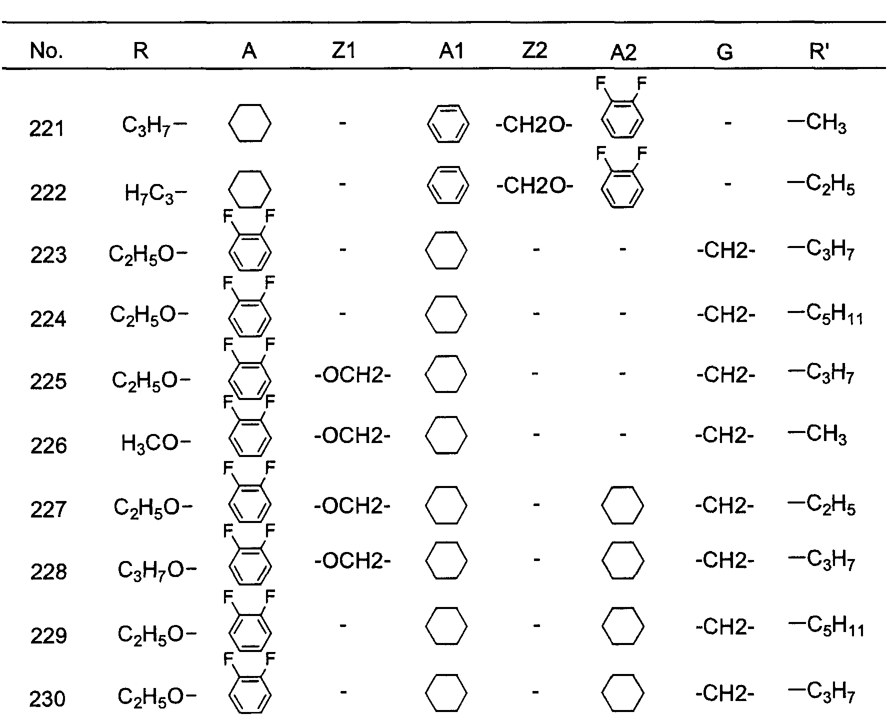

Examples in which the compounds of the present invention are used as components for the liquid crystal compositions shall be shown below. In the respective use examples, NI shows a nematic phase-isotropic phase transition temperature (°C) ; Δε shows dielectric anisotropy; Δn shows birefringence; η shows viscosity (mPa·s) at 20°C; and V10 shows a threshold voltage (V). The compounds used in the respective use examples shall be represented by codes shown in Table 1.

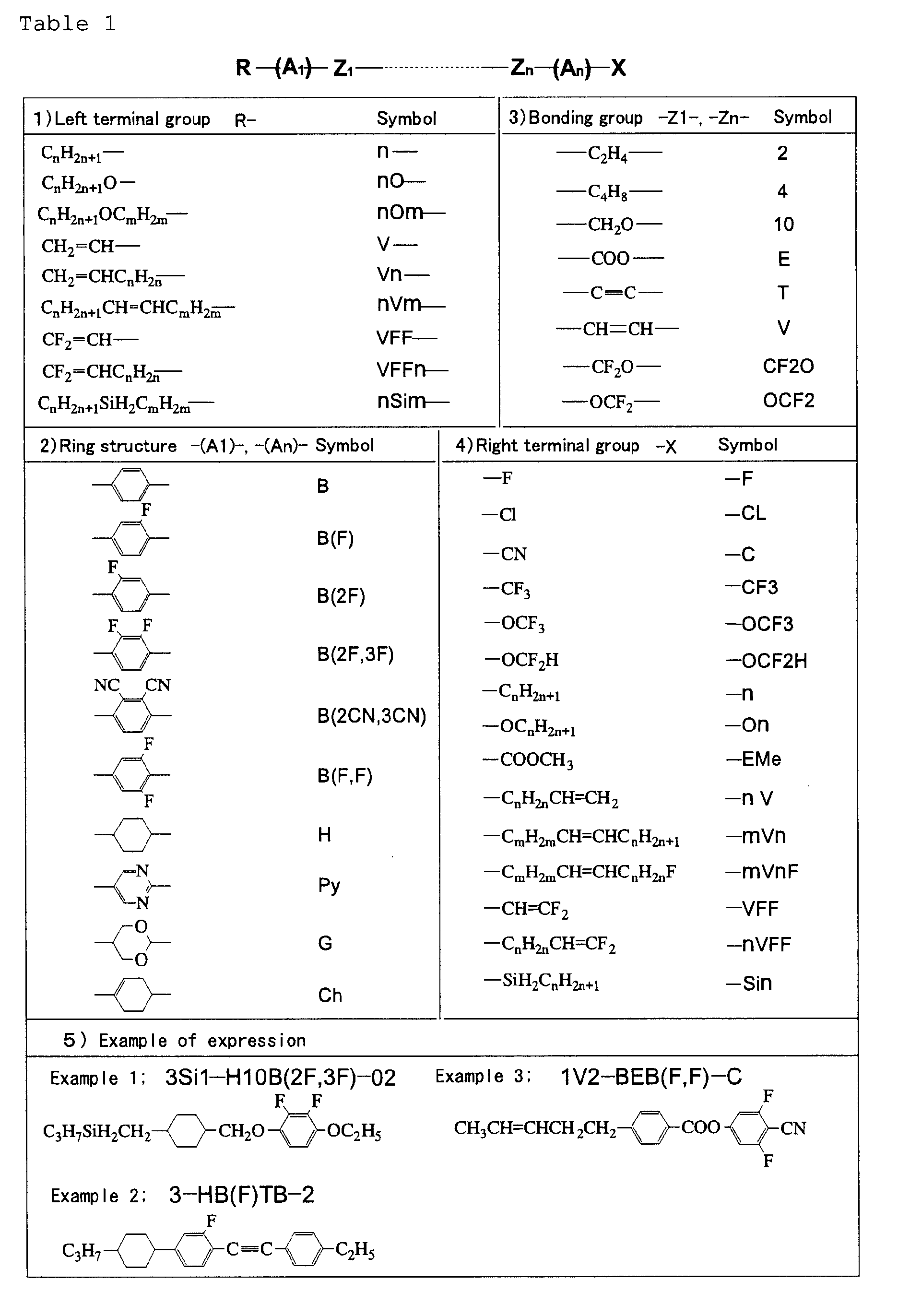

Use Example 1

| | |
|---|---|
| 3-HH1OB (2F, 3F) -Si2 | 14. 0% |
| 3-HEB-O4 | 28. 0% |
| 4-HEB-O2 | 20. 0% |
| 5-HEB-O1 | 20. 0% |
| 3-HEB-O2 | 18. 0% |
| N I = 77. 0 (°C) | |
| η =25. 1 (mPa · s) | |
| Δn =0. 089 | |

Use Example 2

| | |
|---|---|
| 3-HB1OB (2F, 3F) -Si 2 | 6. 0% |
| 3-HH-2 | 5. 0% |
| 3-HH-O1 | 4. 0% |
| 3-HH-O3 | 5. 0% |
| 5-HH-O1 | 4. 0% |
| 3-HB (2F, 3F) -O2 | 12. 0% |
| 5-HB (2F, 3F) -O2 | 11. 0% |
| 3-HHB (2F, 3F) -O2 | 14. 0% |
| 5-HHB (2F, 3F) -O2 | 15. 0% |
| 3-HHB (2F, 3F) -2 | 24. 0% |
| N I =86. 0 (°C) | |
| Δn =0. 087 | |
| Δε =-4. 3 | |

Use Example 3

| | |
|---|---|
| 3-HB (2F, 3F) 10B (2F, 3F) -Si2 | 5. 0% |
| 3-HH-5 | 5. 0% |
| 3-HH-O1 | 6. 0% |
| 3-HH-O3 | 6. 0% |
| 3-HB-O1 | 5. 0% |
| 3-HB-O2 | 5. 0% |
| 3-HB (2F, 3F) -O2 | 10. 0% |
| 5-HB (2F, 3F) -O2 | 10. 0% |
| 3-HHB (2F, 3 F) -O2 | 12. 0% |
| 5-HHB (2F, 3 F) -O2 | 13. 0% |
| 3-HHB (2F, 3 F) -2 | 4. 0% |
| 2-HHB (2F, 3F) -1 | 4. 0% |
| 3-HHEH-3 | 5. 0% |
| 3-HHEH-5 | 5. 0% |
| 4-HHEH-3 | 5. 0% |
| N I = 85. 2 (°C) | |
| Δn =0. 082 | |
| Δε =-3. 6 | |

Use Example 4

| | |
|---|---|
| 1Si1-HB (2F, 3F) -O2 | 10. 0% |
| 3Si 1-HB (2F, 3F) -O2 | 10. 0% |
| 1Si1-H1OB (2F, 3F) -O2 | 8. 0% |
| 3Si1-H1OB (2F, 3F) -O2 | 8. 0% |
| 3-BB (2F, 3F) -O2 | 12. 0% |
| 2-BB (2F, 3F) B-3 | 25. 0% |
| 3-BB (2F, 3F) B-5 | 13. 0% |
| 5-BB (2F, 3F) B-5 | 14. 0% |
| NI = 69. 3 (°C) | |
| △n =0. 158 | |
| Δε =-3. 2 | |

Use Example 5

| | |
|---|---|
| 1Si1-HH1OB (2F, 3F) -O2 | 15. 0% |
| 3Si1-HH10B (2F, 3F) -O2 | 6. 0% |
| 3-HEB (2F, 3F) -O2 | 9. 0% |
| 4-HEB (2F, 3F) -O2 | 9. 0% |
| 5-HEB (2F, 3F) -O2 | 9. 0% |
| 2-BB2B-O2 | 6. 0% |
| 3-BB2B-O2 | 6. 0% |
| 5-BB2B-O1 | 6. 0% |
| 5-BB2B-O2 | 6. 0% |
| 1-B2BB (2F) -5 | 7. 0% |
| 3-B2BB (2F) -5 | 7. 0% |
| 5-B (F) BB-O2 | 7. 0% |
| 3-BB (2F, 3F) B-3 | 7. 0% |
| NI = 68. 7 (°C) | |
| η =33. 1 (mPa · s) | |
| Δn =0. 158 | |

Use Example 6

| | |
|---|---|
| 3-HH10B(2F, 3F)-Si2 | 4. 0% |
| 3-HB10B(2F, 3F)-Si2 | 4. 0% |
| 5-HH-O1 | 4. 0% |
| 3-HH-2 | 5. 0% |
| 3-HB(2F, 3F)-O2 | 16. 0% |
| 5-HB(2F, 3F) -O2 | 21. 0% |
| 2-HHB(2F, 3F) -1 | 5. 0% |
| 3-HHB (2F, 3F) -1 | 7. 0% |
| 3-HHB (2F, 3F) -O2 | 14. 0% |
| 5-HHB (2F, 3F) -O2 | 20. 0% |
| NI = 65. 2 (°C) | |
| η =30. 2 (mPa · s) | |
| Δn =0. 083 | |
| Δε =-4. 5 | |

Use Example 7

| | |
|---|---|
| 3-HB (2F, 3F) 10B (2F, 3F) -Si2 | 6. 0% |
| 3-HB-O1 | 15. 0% |
| 3-HH-4 | 5. 0% |
| 3-HB (2F, 3F) -O2 | 12. 0% |
| 5-HB (2F, 3F) -O2 | 12. 0% |
| 2-HHB (2F, 3F) -1 | 12. 0% |
| 3-HHB (2F, 3F) -1 | 12. 0% |
| 3-HHB (2F, 3F) -O2 | 13. 0% |
| 5-HHB (2F, 3F) -O2 | 13. 0% |
| NI = 79. 9 (°C) | |
| η =38. 7 (mPa · s) | |
| Δn =0. 091 | |
| Δε =-4. 0 | |

Use Example 8

| | |
|---|---|
| 1Si1-HB (2F, 3F) -O2 | 5. 0% |
| 3Si1-HB (2F, 3F) -O2 | 10. 0% |
| 3-HB1OB (2F, 3F) -Si2 | 5. 0% |
| 3-HB (2F, 3F) -O2 | 12. 0% |
| 5-HB (2F, 3F) -O2 | 12. 0% |
| 2-HHB (2F, 3F) -1 | 12. 0% |
| 3-HHB (2F, 3F) -1 | 12. 0% |
| 3-HHB (2F, 3F) -O2 | 13. 0% |
| 5-HHB (2F, 3F) -O2 | 13. 0% |
| 6-HEB (2F, 3F) -O2 | 6.0% |
| NI = 73. 8 (°C) | |
| η =44. 8 (mPa · s) | |
| Δn =0. 083 | |
| Δε =-4. 9 | |

Use Example 9

| | |
|---|---|
| 3-HB (2F, 3F) 10B (2F, 3F) -Si2 | 12. 0% |
| 3-HB-O2 | 20. 0% |
| 101-HH-3 | 6. 0% |
| 101-HH-5 | 5. 0% |
| 4-HEB-O1 | 9. 0% |
| 4-HEB-O2 | 7. 0% |
| 5-HEB-O1 | 8. 0% |
| 3-HHB-1 | 6. 0% |
| 3-HHB-3 | 6. 0% |
| 4-HEB (2CN, 3CN) -O4 | 3. 0% |
| 6-HEB (2CN, 3CN) -O4 | 3. 0% |
| 3-HEB (2CN, 3CN) -O5 | 4. 0% |
| 4-HEB (2CN, 3CN) -O5 | 3. 0% |
| 5-HEB (2CN, 3CN) -O5 | 2. 0% |
| 2-HBEB (2CN, 3CN) -O2 | 2. 0% |
| 4-HBEB (2CN, 3CN) -O4 | 4. 0% |
| NI = 60. 5 (°C) | |
| η =45. 0 (mPa · s) | |
| Δn =0. 076 | |
| Δε =-6. 2 | |
| Vth = 1. 48 (V) | |

Use Example 10

| | |
|---|---|
| 3-HH1OB (2F, 3F) -Si2 | 3. 0% |
| 1Si1-HH1OB (2F, 3F) -O2 | 4. 0% |
| 3Si1-HH1OB (2F, 3F) -O2 | 7. 0% |
| 1V2-BEB (F, F) -C | 5. 0% |
| 3-HB-C | 20. 0% |
| V2-HB-C | 6. 0% |
| 1-BTB-3 | 5. 0% |
| 2-BTB-1 | 10. 0% |
| 3-HHB-1 | 11. 0% |
| 3-HHB-3 | 3. 0% |
| 3-H2BTB-2 | 4. 0% |
| 3-H2BTB-3 | 4. 0% |
| 3-H2BTB-4 | 4. 0% |
| 3-HB (F) TB-2 | 6. 0% |
| 3-HB (F) TB-3 | 5. 0% |
| 3-HHB-C | 3. 0% |
| NI =93. 6 (°C) | |
| η =25. 1 (mPa · s) | |
| Δn =0. 168 | |
| Δε =6. 4 | |
| Vth = 2. 19 (V) | |

When adding 0.8 part of CM33 to 100 parts of the composition described above, the pitch was 11.4 *µ*m.

Use Example 11

| | |
|---|---|
| 3Si1-HH1OB (2F, 3F) -O2 | 5. 0% |
| 3-HB1OB (2F, 3F) -Si2 | 5. 0% |
| 3-HB (2F, 3F) 10B (2F, 3F) -Si2 | 3. 0% |
| 2-BEB (F) -C | 5. 0% |
| 3-BEB (F) -C | 4. 0% |
| 4-BEB (F) -C | 12.0% |
| 1V2-BEB (F, F) -C | 16. 0% |
| 3-HHB-F | 3. 0% |
| 3-HHB-1 | 8. 0% |
| 3-HHB-O1 | 4. 0% |
| 3-HBEB-F | 4. 0% |
| 3-HHEB-F | 7. 0% |
| 5-HHEB-F | 7. 0% |
| 3-H2BTB-2 | 4. 0% |
| 3-H2BTB-3 | 4. 0% |
| 3-H2BTB-4 | 4. 0% |
| 3-HB (F) TB-2 | 5. 0% |
| NI = 94. 2 (°C) | |
| η =50. 0 (mPa · s) | |
| Δn =0. 150 | |
| Δε =27. 4 | |
| Vth=1. 06 (V) | |

Use Example 12

| | |
|---|---|
| 1Si1-HB (2F, 3F) -O2 | 5. 0% |
| 3Si1-HB (2F, 3F) -O2 | 5. 0% |
| 3Si1-H1OB (2F, 3F) -O2 | 5. 0% |
| 2-HB-C | 5. 0% |
| 3-HB-C | 12. 0% |
| 2-BTB-1 | 3. 0% |
| 3-HHB-1 | 8. 0% |
| 3-HHB-F | 4. 0% |
| 3-HHB-O1 | 5. 0% |
| 3-HHB-3 | 14. 0% |
| 3-HHEB-F | 4. 0% |
| 5-HHEB-F | 4. 0% |
| 2-HHB (F) -F | 7. 0% |
| 3-HHB (F) -F | 7. 0% |
| 5-HHB (F) -F | 7. 0% |
| 3-HHB (F, F) -F | 5. 0% |
| NI = 93. 7 (°C) | |
| η =24. 4 (mPa · s) | |
| Δn =0. 098 | |
| Δε =3. 5 | |
| Vth=2. 93 (V) | |

Use Example 13

| | |
|---|---|
| 1Si1-H1OB (2F, 3F) O2 | 8. 0% |
| V2-HB-C | 12. 0% |
| 1V2-HB-C | 12. 0% |
| 3-HB-C | 24. 0% |
| 3-HB (F) -C | 5. 0% |
| 2-BTB-1 | 2. 0% |
| 3-HH-VFF | 6. 0% |
| 2-HHB-C | 3. 0% |
| 3-HHB-C | 6. 0% |
| 3-HB (F) TB-2 | 8. 0% |
| 3-H2BTB-2 | 5. 0% |
| 3-H2BTB-3 | 5. 0% |
| 3-H2BTB-4 | 4. 0% |
| NI =80. 1 (°C) | |
| η = 21. 4 (mPa · s) | |
| Δn =0. 156 | |
| Δε =8. 3 | |
| Vth=2. 05 (V) | |

Use Example 14

| | |
|---|---|
| 3-HH1OB (2F, 3F) -Si 2 | 4. 0% |
| 1V2-BEB (F, F) -C | 6. 0% |
| 3-HB-C | 18. 0% |
| 2-BTB-1 | 10. 0% |
| 5-HH-VFF | 30. 0% |
| 1-BHH-VFF | 8. 0% |
| 1-BHH-2VFF | 11. 0% |
| 3-H2BTB-2 | 5. 0% |
| 3-H2BTB-3 | 4. 0% |
| 3-H2BTB-4 | 4. 0% |
| NI = 78. 3 (°C) | |
| η = 13. 3 (mPa · s) | |
| Δn =0. 128 | |
| Δε =6. 2 | |
| Vth = 2. 12 (V) | |

Use Example 15

| | |
|---|---|
| 3-HB1OB (2F, 3F) -Si2 | 4. 0% |
| 5-HBCF20B (F, F) -C | 3. 0% |
| 3-HB (F, F) CF20B (F, F) -C | 3. 0% |
| 3-HB-C | 18. 0% |
| 2-BTB-1 | 10. 0% |
| 5-HH-VFF | 30. 0% |
| 1-BHH-VFF | 8. 0% |
| 1-BHH-2VFF | 11. 0% |
| 3-H2BTB-2 | 5. 0% |
| 3-H2BTB-3 | 4. 0% |
| 3-H2BTB-4 | 4. 0% |
| NI = 79. 9 (°C) | |
| η =13. 4 (mPa · s) | |
| Δn =0. 129 | |
| Δε =4. 2 | |
| Vth=2. 64 (V) | |

Use Example 16

| | |
|---|---|
| 1Si1-H1OB (2F, 3F) -O2 | 6. 0% |
| 3Si1-H1OB (2F, 3F) -O2 | 6. 0% |
| 5-HB-CL | 16. 0% |
| 3-HH-5 | 4. 0% |
| 3-HHB-F | 4. 0% |
| 3-HHB-CL | 3. 0% |
| 4-HHB-CL | 4. 0% |
| 3-HHB (F) -F | 10. 0% |
| 4-HHB (F) -F | 9. 0% |
| 5-HHB (F) -F | 9. 0% |
| 7-HHB (F) -F | 8. 0% |
| 5-HBB (F) -F | 4. 0% |
| 5-HBBH-101 | 3. 0% |
| 3-HHB (F, F) -F | 2. 0% |
| 4-HHB (F, F) -F | 3. 0% |
| 5-HHB (F, F) -F | 3. 0% |
| 3-HH2BB (F, F) -F | 3. 0% |
| 4-HH2BB (F, F) -F | 3. 0% |
| NI =104. 2 (°C) | |
| η =25. 4 (mPa · s) | |
| Δn =0. 094 | |
| Δε =3. 0 | |
| Vth = 2. 94 (V) | |

Use Example 17

| | |
|---|---|
| 3-HH1OB (2F, 3F) -Si2 | 5. 0% |
| 3-HB1OB (2F, 3F) -Si2 | 5. 0% |
| 5-HB-F | 12. 0% |
| 6-HB-F | 9. 0% |
| 7-HB-F | 7. 0% |
| 2-HHB-OCF3 | 7. 0% |
| 3-HHB-OCF3 | 7. 0% |
| 4-HHB-OCF3 | 7. 0% |
| 5-HHB-OCF3 | 5. 0% |
| 3-HH2B-OCF3 | 4. 0% |
| 5-HH2B-OCF3 | 4. 0% |
| 3-HHB (F, F) -OCF3 | 5. 0% |
| 5-HBB (F) -F | 10. 0% |
| 3-HH2B (F) -F | 3. 0% |
| 3-HB (F) BH-3 | 3. 0% |
| 5-HBBH-3 | 3. 0% |
| 3-HHB (F, F) -OCF2H | 4. 0% |
| NI = 84. 4 (°C) | |
| η =18. 4 (mPa · s) | |
| Δn =0. 089 | |
| Δε =3. 1 | |
| Vth = 2. 96 (V) | |

Use Example 18

| | |
|---|---|
| 3Si1-HH1OB (2F, 3F) -O2 | 5. 0% |
| 3-HB (2F, 3F) 10B (2F, 3F) -Si2 | 5. 0% |
| 7-HB (F) -F | 5. 0% |
| 5-H2B (F) -F | 5. 0% |
| 3-HB-O2 | 10. 0% |
| 3-HH-4 | 5.0% |
| 2-HHB (F) -F | 10. 0% |
| 5-HHB (F) -F | 10. 0% |
| 3-H2HB (F) -F | 5. 0% |
| 2-HBB (F) -F | 3. 0% |
| 3-HBB (F) -F | 3. 0% |
| 5-HBB (F) -F | 6. 0% |
| 2-H2BB (F) -F | 5. 0% |
| 3-H2BB (F) -F | 6. 0% |
| 3-HHB-1 | 8. 0% |
| 3-HHB-O1 | 5. 0% |
| 3-HHB-3 | 4. 0% |
| NI = 84. 7 (°C) | |
| η =22. 6 (mPa · s) | |
| Δn =0. 094 | |
| Δε =1. 9 | |
| Vth=3. 68 (V) | |

When adding 0.3 part of CN to 100 parts of the composition described above, the pitch was 75.7 *µ*m.

Use Example 19

| | |
|---|---|
| 1Si1-HH1OB (2F, 3F) -O2 | 5. 0% |
| 3Si1-HH10B (2F, 3F) -O2 | 5. 0% |
| 7-HB (F, F) -F | 5. 0% |
| 3-H2HB (F, F) -F | 12. 0% |
| 4-H2HB (F, F) -F | 6. 0% |
| 4-HHB (F, F) -F | 5. 0% |
| 3-HBB (F, F) -F | 10. 0% |
| 3-HHEB (F, F) -F | 10. 0% |
| 4-HHEB (F, F) -F | 3. 0% |
| 5-HHEB (F, F) -F | 3. 0% |
| 2-HBEB (F, F) -F | 3. 0% |
| 3-HBEB (F, F) -F | 5. 0% |
| 5-HBEB (F, F) -F | 3. 0% |
| 3-HGB (F, F) -F | 15. 0% |
| 3-HBCF20B-OCF3 | 4. 0% |
| 3-HHBB (F, F) -F | 6. 0% |
| NI =76.5 (°C) | |
| η =37. 1 (mPa · s) | |
| Δn =0. 084 | |
| Δε =11. 4 | |
| Vth=1. 51 (V) | |

When adding 0.25 part of CM43L to 100 parts of the composition described above, the pitch was 62.2 *µ*m.

Use Example 20

| | |
|---|---|
| 1Si1-HB (2F, 3F) -O2 | 11. 0% |
| 3Si1-HB (2F, 3F) -O2 | 12. 0% |
| 7-HB (F) -F | 7. 0% |
| 5-HB-CL | 3. 0% |
| 3-HH-4 | 9. 0% |
| 3-HHEB (F, F) -F | 10. 0% |
| 4-HHEB (F, F) -F | 5. 0% |
| 3-HHEB-F | 8. 0% |
| 5-HHEB-F | 8. 0% |
| 4-HGB (F, F) -F | 5. 0% |
| 5-HGB (F, F) -F | 6. 0% |
| 2-H2GB (F, F) -F | 4. 0% |
| 3-H2GB (F, F) -F | 5. 0% |
| 5-GHB (F, F) -F | 7. 0% |
| N I = 57. 0 (°C) | |
| η = 22. 6 (mPa · s) | |
| Δn =0. 063 | |
| Δε =4. 1 | |
| Vth=2. 52 (V) | |

Use Example 21

| | |
|---|---|
| 1Si1-H1OB (2F, 3F) -O2 | 5. 0% |
| 3-HB (F, F) CF20B (F, F) -F | 15. 0% |
| 3-BB (F, F) CF20B (F, F) -F | 15. 0% |
| 3-HBB (F, F) -F | 15. 0% |
| 5-HBB (F, F) -F | 12. 0% |
| 3-HHB (F, F) -F | 8. 0% |
| 3-HHB-1 | 8. 0% |
| 3-HHB-3 | 11. 0% |
| 2-HHBB (F, F) -F | 3. 0% |
| 3-HHBB (F, F) -F | 5. 0% |
| 5-HHBB (F, F) -F | 3. 0% |
| NI = 77. 8 (°C) | |
| η = 28. 7 (mPa · s) | |
| Δn =0. 108 | |
| Δε =9. 2 | |
| Vth=1. 51 (V) | |

Use Example 22

| | |
|---|---|
| 1Si1-HB (2F, 3F) -O2 | 6. 0% |
| 3Si1-HB (2F, 3F) -O2 | 6. 0% |
| 1Si1-HHB (2F, 3F) -O2 | 6. 0% |
| 3Si1-HHB (2F, 3F) -O2 | 7. 0% |
| 3-HB-O1 | 15. 0% |
| 3-HH-4 | 5. 0% |
| 3-HB (2F, 3F) -O2 | 12. 0% |
| 2-HHB (2F, 3F) -1 | 12. 0% |
| 3-HHB (2F, 3F) -1 | 12. 0% |
| 3-HHB (2F, 3F) -O2 | 13. 0% |
| 3-HHB-1 | 6. 0% |
| NI = 69. 6 (°C) | |
| η =36. 5 (mPa · s) | |
| Δn =0. 089 | |
| Δε =-3. 4 | |

Use Example 23

| | |
|---|---|
| 1Si1-HHB (2F, 3F) -O2 | 6. 0% |
| 3Si1-HHB (2F, 3F) -O2 | 6. 0% |
| 1Si1-HH1OB (2F, 3F) -O2 | 6. 0% |
| 3Si1-HH1OB (2F, 3F) -O2 | 7. 0% |
| 3-HB-O1 | 15. 0% |
| 3-HH-4 | 5. 0% |
| 3-HB (2F, 3F) -O2 | 12. 0% |
| 5-HB (2F, 3F) -O2 | 12. 0% |
| 3-HHB (2F, 3F) -1 | 12. 0% |
| 3-HHB (2F, 3F) -O2 | 13. 0% |
| 6-HEB (2F, 3F) -O2 | 6. 0% |
| NI =65. 1 (°C) | |
| η =39. 1 (mPa · s) | |
| Δn =0. 085 | |
| Δε =-4. 0 | |

### INDUSTRIAL APPLICABILITY

As explained above, a novel liquid crystal composition having desired physical properties can be provided by suitably selecting a ring, a substituent and a bonding group which are structural elements of the compound of the present invention. It can be found that all of the compositions given in the use examples have a low threshold voltage and are excellent in compatibility and that they are improved in viscosity to a large extent as compared with compounds which have so far been known. Accordingly, when using the compound of the present invention for a component of a liquid crystal composition, a liquid crystal composition which has the characteristics described above and is suited to practical use can be obtained. Further, to be characteristic, a liquid crystal composition which is suited to an IPS mode and a VA mode and which has negative dielectric anisotropy can be obtained.

## Claims

1. A silicon derivative represented by Formula (1): 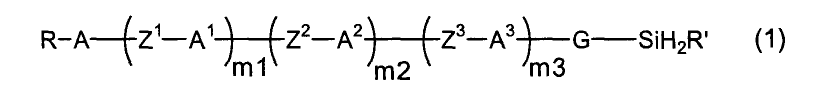 wherein A, A¹, A² and A³ each independently represent trans-1,4-cyclohexylene, 1,4-cyclohexenylene or 1,4-phenylene, in which one or more non-adjacent -CH₂- in these rings may be replaced by -O- and one or more -CH= may be replaced by -N= and in which one or more H in the respective rings may be substituted with halogen; Z¹, Z² and Z³ each independently represent a single bond, -(CH₂)₂-, -CH₂O-, -OCH₂-, -CH₂S-, - SCH₂- or -(CH₂)₄-; m1, m2 and m3 each independently represent 0 or 1; R represents H or an alkyl group having 1 to 10 carbon atoms, and one or more -CH2- in the above alkyl group may be replaced by -SiH₂-, -O-, -S-, -CH=CH- or -C≡C-, but - O- is not adjacent each other; R' represents an alkyl group having 1 to 10 carbon atoms, and one or more -CH2- in the above alkyl group may be replaced by -O-, -S- or -CH=CH-, but -O- is not adjacent each other; G represents a single bond or an alkylene group having 1 to 10 carbon atoms in which one or more -CH₂- may be replaced by -O-, -S- or -CH=CH-, but -O- is not adjacent each other; and either one of A, A¹, A² and A³ is 2-fluoro-1,4-phenylene or 2,3-difluoro-1,4-phenylene.

2. A silicon derivative as described in claim 1, wherein m1 is 1, and both of m2 and m3 are 0.

3. A silicon derivative as described in claim 1, wherein both of m1 and m2 are 1, and m3 is 0.

4. A silicon derivative as described in claim 1, wherein all of m1, m2 and m3 are 1.

5. A silicon derivative as described in claim 1, wherein R and R' each independently represent an alkyl group, an alkoxy group, an alkoxyalkyl group or an alkylthio group having 1 to 10 carbon atoms.

6. A silicon derivative as described in claim 1, wherein R and R' each independently represent an alkyl group, an alkoxy group or an alkylthio group having 1 to 10 carbon atoms; m1 is 1 and both of m2 and m3 are 0.

7. A silicon derivative as described in claim 1, wherein R and R' each represent independently an alkyl group having 1 to 10 carbon atoms, an alkoxy group or an alkylthio group; both of m1 and m2 are 1, and m3 is 0.

8. A silicon derivative as described in claim 1, wherein R and R' each independently represent an alkyl group, an alkoxy group or an alkylthio group having 1 to 10 carbon atoms; all of m1, m2 and m3 are 1.

9. A liquid crystal composition comprising at least one silicon derivative as described in any of claims 1 to 8.

10. A liquid crystal composition comprising at least one silicon derivative as described in any of claims 1 to 8 as a first component and at least one compound selected from the group of compounds represented by Formulas (2), (3) and (4) as a second component: 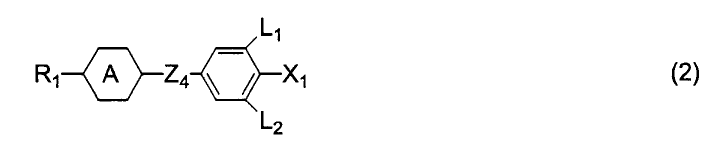 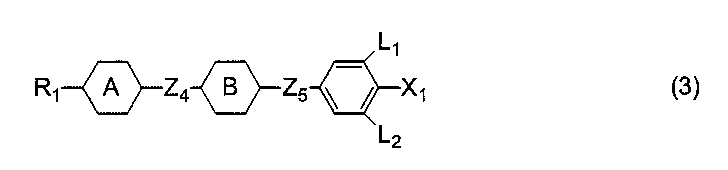 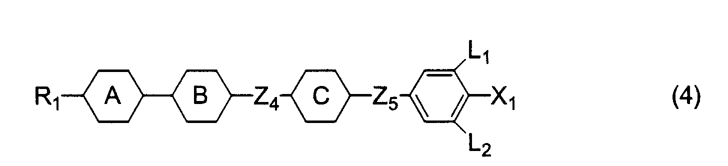 wherein R₁ represents an alkyl group having 1 to 10 carbon atoms, in which one or more -CH₂- in this group may be replaced by -O- or -CH=CH-, but -O- is not adjacent each other and in which one or more H in this group may be substituted with F; X₁ represents F, Cl, -OCF₃, -OCF₂H, -CF₃, -CF₂H, -CFH₂, -OCF₂CF₂H or -OCF₂CFHCF₃; L₁ and L₂ each independently represent H or F; Z₄ and Z₅ each independently represent -(CH₂)₂-, -(CH₂)₄-, -COO-, -CF₂O-, -OCF₂-, -CH=CH- or a single bond; a ring A and a ring B each independently represent trans-1,4-cyclohexylene, 1,3-dioxane-2,5-diyl or 1,4-phenylene in which one or more H may be substituted with F; and a ring C represents 1,4-cyclohexylene or 1,4-phenylene in which one or more H may be substituted with F.

11. A liquid crystal composition comprising one or more compound as described in any of claims 1 to 8 as the first component and at least one compound selected from the group of compounds represented by Formulas (5) and (6) as a second component: 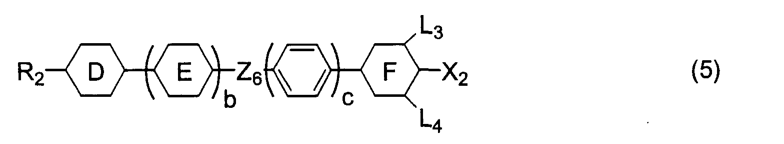 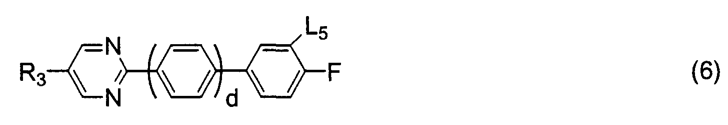 wherein R₂ and R₃ each represent independently an alkyl group having 1 to 10 carbon atoms, in which one or more -CH₂- in this group may be replaced by -O- or -CH=CH-, but -O- is not adjacent each other and in which one or more H in this group may be substituted with F; X₂ represents -CN or -C≡C-CN; a ring D represents trans-1,4-cyclohexylene, 1,4-phenylene, 1,3-dioxane-2,5-diyl or pyrimidine-2,5-diyl; a ring E represents trans-1,4-cyclohexylene, 1,4-phenylene in which one or more H may be substituted with F or pyrimidine-2,5-diyl; a ring F represents trans-1,4-cyclohexylene or 1,4-phenylene; Z₆ represents -(CH₂)₂-, -COO-, -CF₂O-, -OCF₂- or a single bond; L₃, L₄ and L₅ each independently represent H or F; and b, c and d each represent independently 0 or 1.

12. A liquid crystal composition comprising at least one compound as described in any of claims 1 to 8 as the first component and at least one compound selected from the group of compounds represented by Formulas (7), (8) and (9) as a second component: 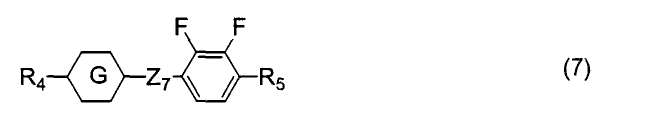 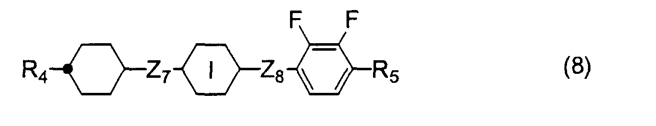 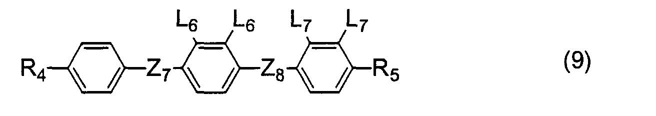 wherein R₄ and R₅ each independently represent an alkyl group having 1 to 10 carbon atoms, in which one or more -CH₂- in this group may be replaced by -O- or -CH=CH-, but -O- is not adjacent each other and in which one or more H in this group may be substituted with F; a ring G and a ring I each independently represent trans-1,4-cyclohexylene or 1,4-phenylene; L₆ and L₇ each independently represent H or F, but L₆ and L₇ are not H at the same time; and Z₇ and Z₈ each represent independently -(CH₂)₂-, -COO- or a single bond.

13. A liquid crystal composition comprising at least one compound as described in any of claims 1 to 8 as the first component, at least one compound selected from the group of the compounds represented by Formulas (2), (3) and (4) as the second component and at least one compound selected from the group of compounds represented by Formulas (10), (11) and (12) as a third component: 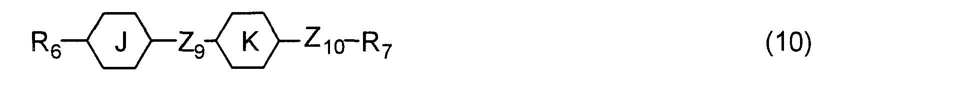 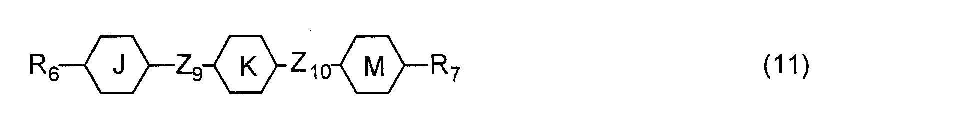 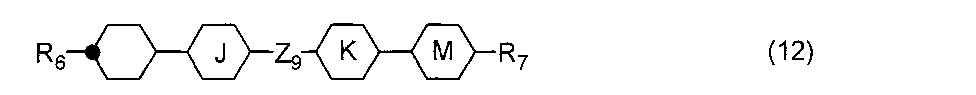 wherein R₆ and R₇ each independently represent an alkyl group having 1 to 10 carbon atoms, in which one or more -CH₂- in this group may be replaced by -O- or -CH=CH-, but -O- is not adjacent each other and in which one or more H in this group may be substituted with F; a ring J, a ring K and a ring M each independently represent trans-1,4-cyclohexylene, pyrimidine-2,5-diyl or 1,4-phenylene in which one or more H may be substituted with F; and Z₉ and Z₁₀ each independently represent -C≡C-, -COO-, -(CH₂)₂-, -CH=CH- or a single bond.

14. A liquid crystal composition comprising at least one compound as described in any of claims 1 to 8 as the first component, at least one compound selected from the group of the compounds represented by Formulas (5) and (6) as the second component and at least one compound selected from the group of the compounds represented by Formulas (10), (11) and (12) as the third component.

15. A liquid crystal composition comprising at least one compound as described in any of claims 1 to 8 as the first component, at least one compound selected from the group of the compounds represented by Formulas (7), (8) and (9) as the second component and at least one compound selected from the group of the compounds represented by Formulas (10), (11) and (12) as the third component.

16. A liquid crystal composition comprising at least one compound as described in any of claims 1 to 8 as the first component, at least one compound selected from the group of the compounds represented by Formulas (2), (3) and (4) as the second component, at least one compound selected from the group of the compounds represented by Formulas (5) and (6) as the third component and at least one compound selected from the group of the compounds represented by Formulas (10), (11) and (12) as a fourth component.

17. A liquid crystal composition comprising at least one liquid crystal composition as described in any of claims 9 to 16 and at least one optically active compound.

18. A liquid crystal display comprising the liquid crystal composition as described in any of claims 9 to 17.
